# EUROPÄISCHE PATENTSCHRIFT

(11) **EP 0 783 028 B1**
(45) Veröffentlichungstag und Bekanntmachung des Hinweises auf die Patenterteilung: **14.11.2001**
(21) Anmeldenummer: 96120059.9
(22) Anmeldetag: 13.12.1996
(51) Int. Cl.: C09B 62/09, C09B 62/513

(54) **Wasserlösliche Azofarbstoffe, Verfahren zu ihrer Herstellung und ihre Verwendung**
Water-soluble azo dyes, process for their preparation and the use thereof
Colorants azoiques solubles dans l'eau, procédé pour leur préparation et leur utilisation

(30) Priorität: 22.12.1995 DE 19548429
(43) Veröffentlichungstag der Anmeldung: 09.07.1997
(73) Patentinhaber: DyStar Textilfarben GmbH & Co. Deutschland KG, 60318 Frankfurt am Main (DE)
(72) Erfinder: Dannheim, Jörg, Dr., 60489 Frankfurt (DE)

(56) Entgegenhaltungen:
- EP-A- 0 235 521
- EP-A- 0 265 828
- EP-A- 0 387 579
- EP-A- 0 458 743
- EP-A- 0 625 549
- GB-A- 2 008 144

## Beschreibung

Die Erfindung liegt auf dem technischen Gebiet der faserreaktiven Azofarbstoffe.

Dis- und Tetrakis-Azofarbstoffe, die aus zwei Azochromophoren bestehen, die mittels zweier durch ein Brückenglied verbundener Triazinylamino-Reste verknüpft sind, sind bereits aus der U.S.-Patentschrift 4 323 497 bekannt. Farbstoffe dieses Typs, bei denen das die Triazinylamino-Reste verbindende Brückenglied aromatischer Strukur ist, sind außerdem in der der EP-A 387579 beschrieben.

Mit der vorliegenden Erfindung wurden nun Azofarbstoffe ähnlicher Struktur gefunden, bei denen der Triazinrest ein Fluortriazinrest ist. Diese erfindungsgemäßen Dis- und Tetrakis-Azofarbstoffe entsprechen der allgemeinen Formel (1) 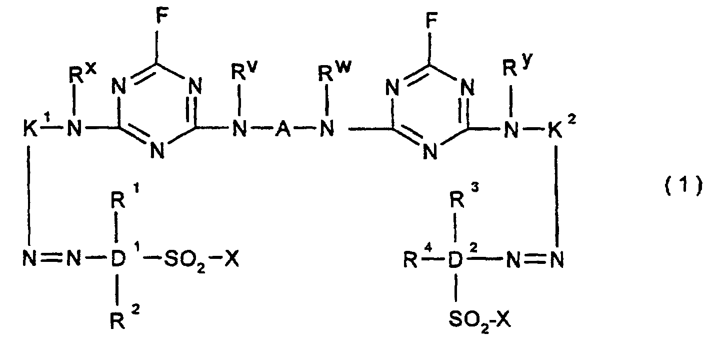 in welcher bedeuten:
- D¹: ist ein Benzol- oder ein Naphthalinrest;
- D²: ist ein Benzol- oder ein Naphthalinrest;
- R¹: ist Wasserstoff, Halogen, wie Chlor oder Brom, Alkyl von 1 bis 4 C-Atomen, wie Ethyl und insbesondere Methyl, Alkoxy von 1 bis 4 C-Atomen, wie Ethoxy und insbesondere Methoxy, Hydroxy, Carboxy oder Sulfo, bevorzugt Wasserstoff, Methyl, Methoxy, Ethoxy oder Sulfo, falls D¹ einen Benzolrest bedeutet, oder ist Wasserstoff oder Sulfo, falls D¹ einen Naphthalinrest bedeutet;
- R²: ist Wasserstoff, Halogen, wie Chlor oder Brom, Alkyl von1 bis 4 C-Atomen, wie Ethyl und insbesondere Methyl, Alkoxy von 1 bis 4 C-Atomen, wie Ethoxy und insbesondere Methoxy, Nitro oder Sulfo, bevorzugt Wasserstoff, Methyl, Methoxy oder Ethoxy, falls D¹ einen Benzolrest bedeutet, oder ist Wasserstoff oder Sulfo, bevorzugt Wasserstoff, falls D¹ einen Naphthalinrest bedeutet;
- R³: ist Wasserstoff, Halogen, wie Chlor oder Brom, Alkyl von 1 bis 4 C-Atomen, wie Ethyl und insbesondere Methyl, Alkoxy von 1 bis 4 C-Atomen, wie Ethoxy und insbesondere Methoxy, Hydroxy, Carboxy oder Sulfo, bevorzugt Wasserstoff, Methyl, Methoxy, Ethoxy oder Sulfo, falls D² einen Benzolrest bedeutet, oder ist Wasserstoff oder Sulfo, falls D² einen Naphthalinrest bedeutet;
- R⁴: ist Wasserstoff, Halogen, wie Chlor oder Brom, Alkyl von1 bis 4 C-Atomen, wie Ethyt und insbesondere Methyl, Alkoxy von 1 bis 4 C-Atomen, wie Ethoxy und insbesondere Methoxy, Nitro oder Sulfo, bevorzugt Wasserstoff, Methyl, Methoxy oder Ethoxy, falls D² einen Benzolrest bedeutet, oder ist Wasserstoff oder Sulfo, bevorzugt Wasserstoff, falls D² einen Naphthalinrest bedeutet;
- X: ist Vinyl, β-Sulfatoethyl, β-Thiosulfatoethyl oder β-Chlorethyl, bevorzugt Vinyl oder β-Sulfatoethyl;
- R^{x}: ist Wasserstoff oderAlkyl von1 bis 4 C-Atomen, bevorzugt Wasserstoff;
- R^{y}: ' ist Wasserstoff oderAlkyl von1 bis 4 C-Atomen, bevorzugt Wasserstoff;
- R^{v}: ist Wasserstoff oderAlkyl von1 bis 4 C-Atomen, bevorzugt Wasserstoff;
- R^{w}: ist Wasserstoff oderAlkyl von bis 4 C-Atomen, bevorzugt Wasserstoff;
- K¹: ist ein Rest der allgemeinen Formel (2a), (2b) oder (2c) 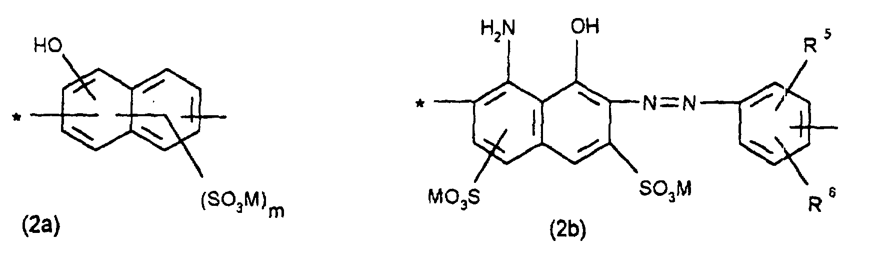 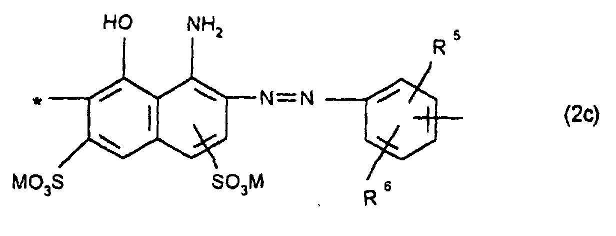 in welchen
M Wasserstoff oder ein Alkalimetall, wie Lithium, Natrium oder Kalium, ist,
m für die Zahl Null, 1 oder 2 steht (wobei im Falle von m gleich Null diese Gruppe Wasserstoff bedeutet), bevorzugt 1 oder 2 ist,
die mit * markierte Bindung an die Azogruppe gebunden ist,
R⁵ Wasserstoff oder Sulfo ist und
R⁶ Wasserstoff, Sulfo, Carboxy, Alkyl von 1 bis 4 C-Atomen, wie Ethyl und insbesondere Methyl, Alkoxy von 1 bis 4 C-Atomen, wie Ethoxy und insbesondere Methoxy, Chlor oder Brom ist, bevorzugt Methyl, Sulfo oder Wasserstoff und insbesondere bevorzugt Wasserstoff ist;
- K²: ist ein Rest der allgemeinen Formel (3a), (3b) oder (3c) 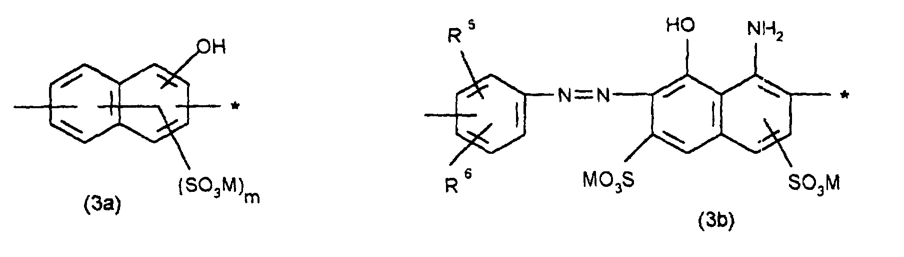 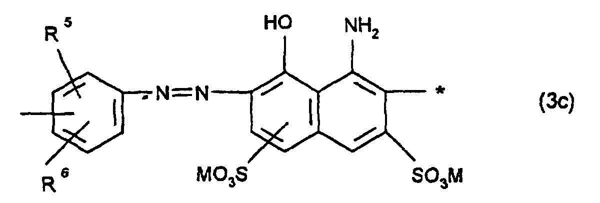 in welchen M, m, R⁵ und R⁶ die obengenannten Bedeutungen haben und die mit * markierte Bindung mit der Azogruppe verbunden ist, wobei die Hydroxygruppe und die mit * markierte Bindung zueinander in ortho-Stellung gebunden stehen und die Hydroxygruppe bevorzugt in -Stellung des Naphthalinrestes gebunden ist;
- A: ist geradkettiges oder verzweigtes Alkylen von 2 bis 10 C-Atomen, bevorzugt von 2 bis 4 C-Atomen, wie insbesondere 1,2-Ethylen und 1,3-Propylen, oder ist Alkylen von 4 bis 10 C-Atomen, das durch 1 oder 2 Heterogruppen unterbrochen ist, wie beispielsweise durch Heterogruppen aus der Gruppe -O-, -NH- -N(R°)- mit R° gleich Wasserstoff, Methyl oder Ethyl, -CO-, -CO-NH- und -NH-CO-, oder ist Cycloalkylen mit 5 bis 8 C-Atomen, wie Cyclohexylen, oder ist eine Gruppe der allgemeinen Formel alk-B, B-alk, alk-B-alk, in welchen alk Alkylen von 2 bis 4 C-Atomen bedeutet, wie 1,2-Ethylen, 1,3-Propylen und 1,4-Butylen, oder Alkylen von 2 bis 10 C-Atomen ist, bevorzugt von 4 bis 6 C-Atomen, das durch 1 oder 2, bevorzugt eine, Heterogruppen aus der Gruppe -O- und -NH- unterbrochen ist, B Phenylen ist, das durch 1 oder 2 Substituenten aus der Gruppe Sulfo, Carboxy, Methyl, Ethyl, Methoxy, Ethoxy, Chlor und Brom substituiert sein kann, oder Cycloalkylen mit 5 bis 8 C-Atomen, wie Cyclohexylen, ist oder der bivalente Rest eines gesättigten, zwei N-Atome enthaltenden 5- bis 8-gliedrigen Heterocyclus ist, wie beispielsweise der 1,4-Piperazinylen-Rest, dessen eines bzw. beide N-Atome mit den Resten alk bzw. mit alk und einem C-Atom des Triazinrestes verbunden sind, wobei im Falle von A gleich Alkylen von 2 bis 10 C-Atomen die Reste -N(R^{x})-K¹-N=N-D¹(R¹,R²)-SO₂-X und -N(R^{y})-K²-N = N-D²(R³,R⁴)-SO₂-X die gleiche Bedeutung haben, oder die Gruppe -N(R^{v})-A-N(R^{w})- stellt den bivalenten Rest eines die beiden N-Atome enthaltenden gesättigten 5- bis 8-gliedrigen Heterocyclus dar, dessen N-Atome mit einem C-Atom des Triazinrestes verbunden sind.

Reste K¹ und K² sind beispielsweise Reste der allgemeinen Formeln (4a), (4b), (4c), (4d), (4e), (4f), (4g), (4h) und (4j), bevorzugt (4a), (4b), (4c) und (4d), 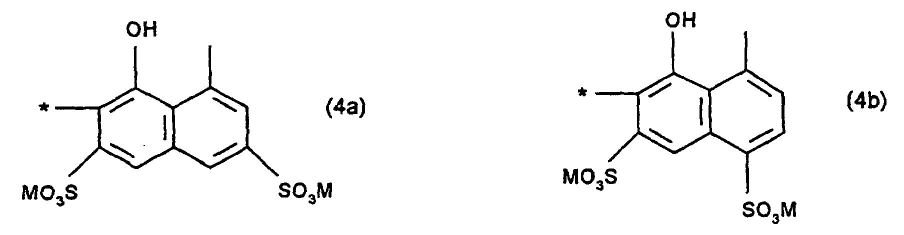 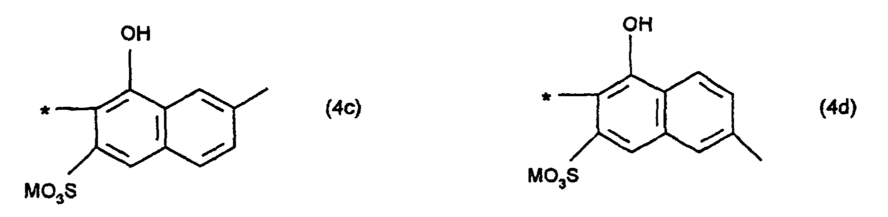 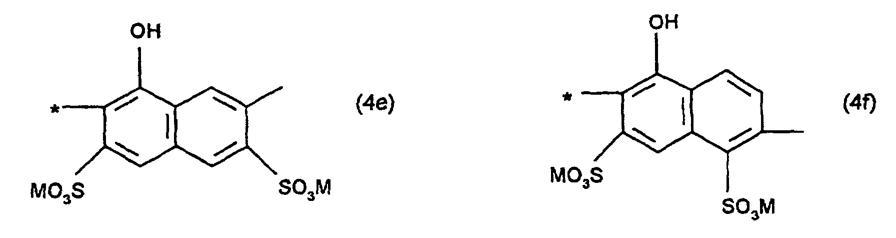 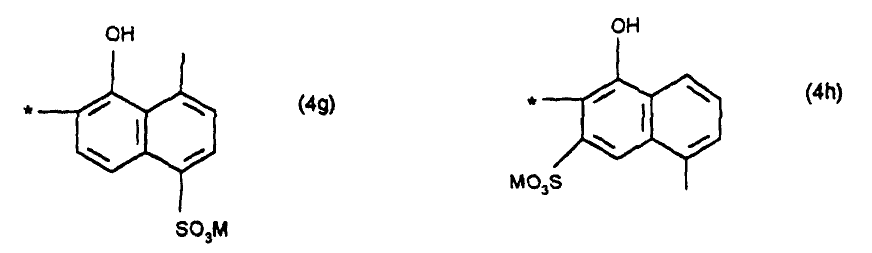 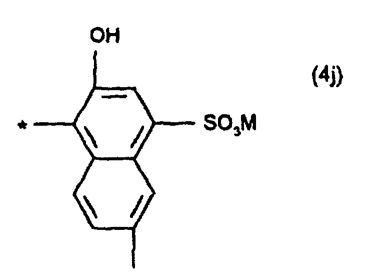 in welchen M die obengenannte Bedeutung hat und die mit * markierte Bindung mit der Azogruppe verbunden ist.

Falls D¹ und D² einen Naphthalinrest bedeuten, steht die Azogruppe an diesen Naphthalinrest bevorzugt in β-Stellung.

In den oben angegebenen allgemeinen Formeln sowie in den nachfolgenden allgemeinen Formeln können die einzelnen Formelglieder bei sowohl verschiedener als auch gleicher Bezeichnung innerhalb einer allgemeinen Formel im Rahmen ihrer Bedeutung zueinander gleiche oder voneinander verschiedene Bedeutungen haben.

Die Gruppen "Sulfo", "Carboxy", "Phosphato", "Thiosulfato" und "Sulfato" schließen sowohl deren Säureform als auch deren Salzform ein. Demgemäß bedeuten Sulfogruppen Gruppen entsprechend der allgemeinen Formel -SO₃M, Carboxygruppen Gruppen entsprechend der allgemeinen Formel -COOM, Phosphatogruppen Gruppen entsprechend der allgemeinen Formel -OPO₃M₂, Thiosulfatogruppen Gruppen entsprechend der allgemeinen Formel -S-SO₃M und Sulfatogruppen Gruppen entsprechend der allgemeinen Formel -OSO₃M, in welchen M die obengenannte Bedeutung hat.

Reste X-SO₂-D¹(R¹R²)- und X-SO₂-D²(R³,R⁴)- sind beispielsweise 3-(β-Sulfatoethylsulfonyl)-phenyl, 4-(β-Sulfatoethylsulfonyl)-phenyl, 2-Methyl-5-(β-sulfatoethylsulfonyl)-phenyl, 2-Methoxy-5-(β-sulfatoethylsulfonyl)-phenyl, 2-Methoxy-4-(β-sulfatoethylsulfonyl)-phenyl, 2-Carboxy-5-(β-sulfatoethylsulfonyl)-phenyl, 2-Methoxy-5-methyl-4-(β-sulfatoethylsulfonyl)-phenyl, 2,5-Dimethoxy-4-(β-sulfatoethylsulfonyl)-phenyl, 2,4-Dimethoxy-5-(β-sulfatoethylsulfonyl)-phenyl, 4-Methoxy-3-(β-sulfatoethylsulfonyl)-phenyl, 4-Methyl-3-(β-sulfatoethylsulfonyl)-phenyl, 2-Sulfo-4-(β-sulfatoethylsulfonyl)-phenyl, 2-Sulfo-5-(β-sulfatoethylsulfonyl)-phenyl, 2-Chlor-4-(β-sulfatoethylsulfonyl)-phenyl), 2-Chlor-5-(β-sulfatoethylsulfonyl)-phenyl), 2-Brom-4-(β-sulfatoethylsulfonyl)-phenyl), 2,6-Dichlor-4-(β-sulfatoethylsulfonyl)-phenyl, 2,6-Dimethyl-4-(β-sulfatoethylsulfonyl)-phenyl, 2,6-Dimethyl-3-(β-sulfatoethylsulfonyl)-phenyl, 2-Hydroxy-4-β-(sulfatoethylsulfonyl)-phenyl, 2-Hydroxy-5-β-(sulfatoethylsulfonyl)-phenyl, 3-Brom-5-(β-sulfatoethylsulfonyl)-phenyl, 3-Chlor-2-hydroxy-5-(β-sulfatoethylsulfonyl)-phenyl, 3-Nitro-2-hydroxy-5-(β-sulfatoethylsulfonyl)-phenyl, 2-Hydroxy-5-methyl-4-(β-sulfatoethylsulfonyl)-phenyl, 5-(β-Sulfatoethylsulfonyl)-naphth-2-yl, 8-(β-Sulfatoethylsulfonyl)-naphth-2-yl, 6-Sulfo-8-(β-sulfatoethylsulfonyl)-naphth-2-yl, 1-Sulfo-6-(β-sulfatoethylsulfonyl)-naphth-2-yl und 6-(β-Sulfatoethylsulfonyl)-naphth-2-yl sowie deren Vinylsulfonyl-, β-Thiosulfatoethylsulfonyl- und β-Chlorethylsulfonyl-Derivate, hiervon bevorzugt 3-(β-Sulfatoethylsulfonyl)-phenyl, 4-(β-Sulfatoethylsulfonyl)-phenyl, 2-Methoxy-5-(β-sulfatoethylsulfonyl)-phenyl, 2-Methoxy-4-(β-sulfatoethylsulfonyl)-phenyl, 2,5-Dimethoxy-4-(β-sulfatoethyl-sulfonyl)-phenyl, 2,4-Dimethoxy-5-(β-sulfatoethylsulfonyl)-phenyl, 2-Methoxy-5-methyl-4-(β-sulfatoethylsulfonyl)-phenyl und 1-Sulfo-6-(β-sulfatoethylsulfonyl)-naphth-2-yl.

Die vorliegende Erfindung betrifft weiterhin Verfahren zur Herstellung der erfindungsgemäßen Azofarbstoffe der allgemeinen Formel (1), die dadurch gekennzeichnet sind, daß man in äquivalenter Menge die Diazoniumverbindungen der Amine der allgemeinen Formeln (5a) und (5b) 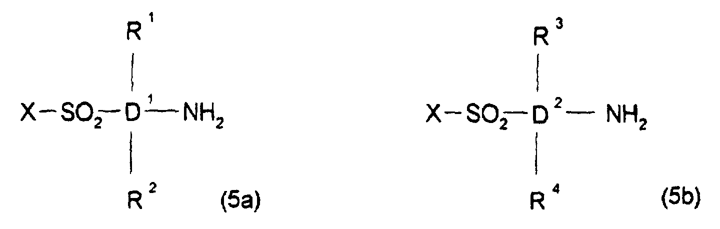 in welchen D¹, D², R¹, R², R³, R⁴ und X die obengenannten Bedeutungen haben, mit einer Verbindung der allgemeinen Formel (6) 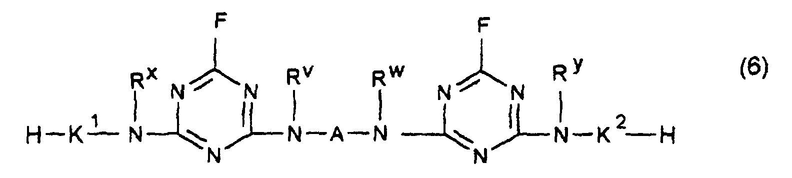 in welcher R^{x}, R^{v}, R^{w}, R^{y} und A die obengenannten Bedeutungen haben, K¹ einen Rest der Formel (2a) oder (2b) bedeutet und K² einen Rest der allgemeinen Formel (3a) oder (3b) darstellt, miteinander umsetzt, oder daß man in äquivalenter Menge die Azoverbindungen der allgemeinen Formeln (7a) und (7b) 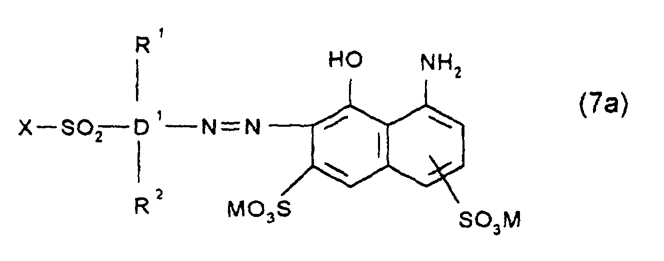 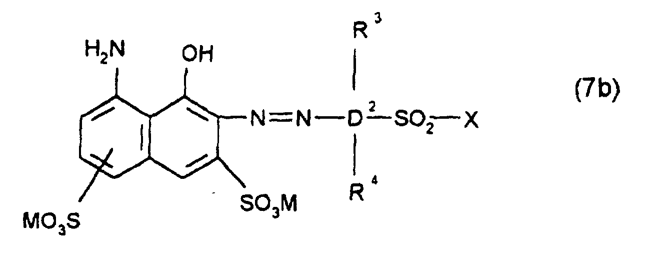 in welchen D¹, D², R¹, R², R³, R⁴, X und M die obengenannten Bedeutungen haben, mit einem tetrazotiertem Diamin der allgemeinen Formel (8) 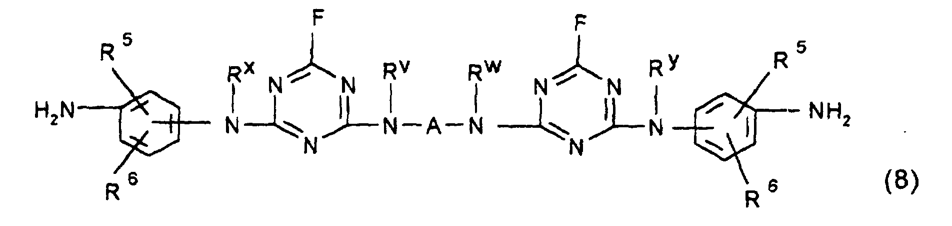 in welchen R⁵, R⁶, R^{x}, R^{y}, R^{v}, R^{w} und A die obengenannten Bedeutungen haben, kuppelt,
oder daß man in äquivalenter Menge Azoverbindungen der allgemeinen Formeln (9a) und (9b) 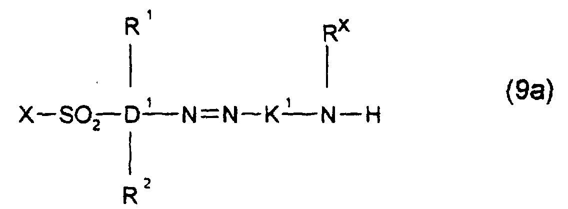 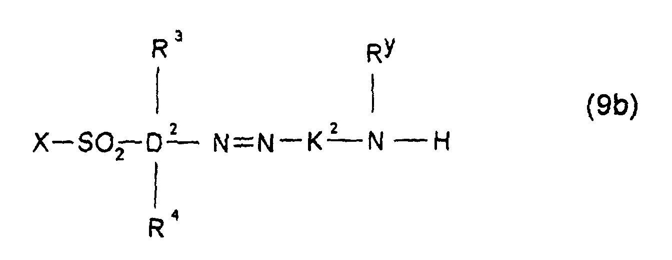 in welchen D¹, D², R¹, R², R³, R⁴, X, K¹, K², R^{x} und R^{y} die obengenannten Bedeutungen haben, mit einer Verbindung der allgemeinen Formel (10) 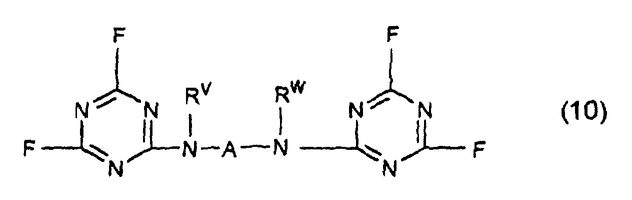 in welcher R^{v}, R^{w} und A die obengenannten Bedeutungen haben, miteinander umsetzt,
oder daß man in äquivalenter Menge Azoverbindungen der allgemeinen Formeln (11a) und (11b) 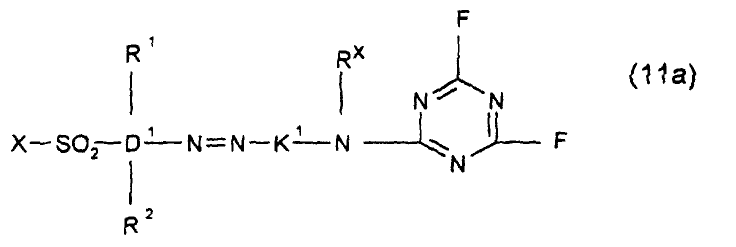 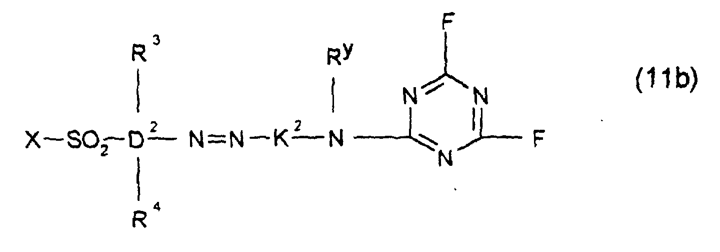 in welchen D¹, D², R¹, R², R³, R⁴, X, K¹, K², R^{x} und R^{y} die obengenannten Bedeutungen haben, mit einer Diaminoverbindung der allgemeinen Formel (12) 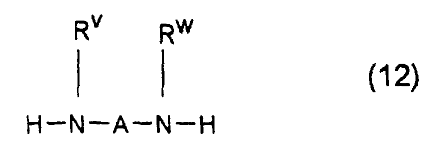 in welcher R^{v}, R^{w} und A die obengenannten Bedeutungen haben, umsetzt.

Die Kupplungsreaktionen erfolgen analog bekannten Verfahrensweisen in vorzugsweise wäßriger Lösung bei einem pH-Wert zwischen 4 und 6, falls die Kupplung in ortho-Stellung zur Hydroxygruppe der kupplungsfähigen Verbindung erfolgt, oder bei einem pH-Wert zwischen 0,5 und 2, falls die Kupplung in ortho-Stellung zur Aminogruppe der kupplungsfähigen Verbindung erfolgt, jeweils bei einer Temperatur zwischen 10 und 25°C.

Die erfindungsgemäßen Umsetzungen zwischen den oben erwähnten Difluor-s-triazinylamino-Verbindungen und den entsprechenden Diaminoverbindungen erfolgen vorzugsweise in wäßriger Lösung, gegebenenfalls in Anwesenheit von organischen Lösungsmitteln, die gegenüber dem Cyanurfluorid inert sind, bei einer Temperatur zwischen 0 und 30°C, bevorzugt zwischen 5 und 20°C, und bei einem pH-Wert zwischen 3 und 10, bevorzugt zwischen 5 und 9, analog bekannten und dem Fachmann geläufigen Verfahrensweisen der Umsetzung von Difluor-s-triazinylamino-Verbindungen mit Aminoverbindungen. Zur Einhaltung des pH-Wertes bei diesen Umsetzungen verwendet man als säurebindende Mittel bevorzugt die Alkalimetallsalze schwacher anorganischer oder organischer Säuren, wie bevorzugt Natriumcarbonat, Natriumbicarbonat und Natriumacetat, gegebenenfalls mit Vorteil auch Lithiumcarbonat und Lithiumhydroxid.

Die in die erfindungsgemäßen Verfahrensweisen einsetzbaren Ausgangsverbindungen der allgemeinen Formeln (6), (7a), (7b), (8), (9a), (9b), (10), (11a) und (11b) lassen sich analog bekannten Verfahrensweisen der Diazotierung und Kupplung entsprechender Amine und Kupplungskomponenten, die aus diesen Ausgangsverbindungen ersichtlich sind, bzw. durch Umsetzung von Cyanurfluorid mit den entsprechenden Aminoverbindungen, die aus den Formeln der Ausgangsverbindungen ersichtlich sind, herstellen. Solche Verfahrensweisen sind allseits bekannt und zahlreich in der Literatur beschrieben, wie beispielsweise in der obengenannten U.S.-Patentschrift Nr. 4 323 497. Die grundlegenden Ausgangsverbindungen, wie beispielsweise die Diazokomponenten der allgemeinen Formeln (5a) und (5b), die Kupplungskomponenten der allgemeinen Formeln H-K¹-N(R^{x})-H und H-K²-N(R^{y})-H, Cyanurfluorid und die Diaminoverbindungen der allgemeinen Formel H-N(R^{v})-A-N(R^{w})-H sind allseits in der Literatur beschrieben.

Aromatische Amine der allgemeinen Formeln (5a) und (5b) sind beispielsweise aus den deutschen Patentschriften Nrs. 1 278 041, 1 276 842, 1 150 163, 1 126 542 und 1 153 029, aus der deutschen Offenlegungsschriften Nrs. 2 154 943, 2 100 080, 2 049 664, 2 142 728, 2 034 591 und 1 943 904 und aus der deutschen Auslegeschrift 1 204 666 bekannt. Solche aromatischen Amine sind beispielsweise Anilin-3-β-sulfatoethylsulfon, Anilin-4-β-sulfatoethylsulfon, 2-Amino-toluol-4-β-sulfatoethylsulfon, 2-Amino-anisol-4-β-sulfatoethylsulfon, 2-Amino-anisol-5-β-sulfatoethylsulfon, 2-Amino-4-β-sulfatoethylsulfonyl-benzoesäure, 2-Methoxy-5-methyl-anilin-4-β-sulfatoethylsulfon, 2,5-Dimethoxy-anilin-4-β-sulfatoethylsulfon, 2,4-Dimethoxy-anilin-5-β-sulfatoethylsulfon, 4-Amino-anisol-2-β-sulfatoethylsulfon, 4-Amino-toluol-2-β-sulfatoethylsulfon, 4-β-Sulfatoethylsulfonyl-anilin-2-sulfonsäure, 5-β-Sulfatoethylsulfonyl-anilin-2-sulfonsäure, 2-Chloranilin-4-β-sulfatoethylsulfon, 2-Chloranilin-5-β-sulfatoethylsulfon, 2-Bromanilin-4-β-sulfatoethylsulfon, 2,6-Dichloranilin-4-β-sulfatoethylsulfon, 2,6-Dimethyl-anilin-4-β-sulfatoethylsulfon, 2,6-Dimethyl-anilin-3-β-sulfatoethylsulfon, 2-Amino-phenol-4-β-sulfatoethylsulfon, 2-Amino-phenol-5-β-sulfatoethylsulfon, 6-Brom-2-amino-phenol-4-β-sulfatoethylsulfon, 6-Chlor-2-amino-phenol-4-β-sulfatoethylsulfon, 6-Nitro-2-amino-phenol-4-β-sulfatoethylsulfon, 4-Methyl-2-amino-phenol-5-β-sulfatoethylsulfon, 2-Naphthylamin-5-β-sulfatoethylsulfon, 2-Naphthylamin-8-β-sulfatoethylsulfon, 8-β-Sulfatoethylsulfonyl-2-amino-naphthalin-6-sulfonsäure, 6-β-Sulfatoethylsulfonyl-2-amino-naphthalin-1-sulfonsäure und 2-Naphthylamin-6-β-sulfatoethylsulfon sowie die entsprechenden Vinylsulfonyl-, β-Thiosulfatoethylsulfonyl- und β-Chlorethylsulfonyl-Verbindungen, hiervon bevorzugt Anilin-3-β-sulfatoethylsulfon, Anilin-4-β-sulfatoethylsulfon, 2-Amino-anisol-4-β-sulfatoethylsulfon, 2-Amino-anisol-5-β-sulfatoethylsulfon, 2,5-Dimethoxy-anilin-4-β-sulfatoethylsulfon, 2,4-Dimethoxy-anilin-5-β-sulfatoethylsulfon, 2-Methoxy-5-methyl-anilin-4-β-sulfatoethylsulfon und 6-β-Sulfatoethylsulfonyl-2-amino-naphthalin-1-sulfonsäure.

Diamino-Ausgangsverbindungen der allgemeinen Formel (12) sind beispielsweise 1,2-Diaminoethan, 1,3-Diaminopropan, 1,4-Diaminobutan, 1,6-Diaminohexan, 1,4-Diaminocyclohexan, 1,3-Diaminocyclohexan, 1,2-Diaminopropan, 1,3-Bis-aminomethylcyclohexan, p-Aminobenzylmethylamin, Piperazin, 1,5-Diaminopentan, N-(2-Aminoethyl)-piperazin und Bis-(2-aminoethyl)ether, hiervon insbesondere bevorzugt 1,2-Diaminoethan, 1,3-Diaminopropan, 1,6-Diaminohexan und Piperazin.

Die Abscheidung der erhaltenen Farbstoffe der Formel (1) aus dem Syntheseansatz erfolgt nach allgemein bekannten Methoden entweder durch Ausfällen aus dem Reaktionsmedium mittels Elektrolyten, wie beispielsweise Natriumchlorid oder Kaliumchlorid, oder aber durch Eindampfen der Reaktionslösung, beispielsweise durch Sprühtrocknung. Falls die letztgenannte Art der Farbstoffisolierung gewählt wird, empfiehlt es sich vielfach, vor dem Eindampfen eventuell in den Lösungen vorhandene Sulfatmengen durch Fällung als Gips und Abtrennung durch Filtration zu entfernen. In manchen Fällen kann es auch wünschenswert sein, die Farbstofflösung, gegebenenfalls nach Zusatz von Puffersubstanzen, direkt als Flüssigpräparation der färberischen Verwendung zuzuführen.

Ebenfalls Gegenstand der vorliegenden Erfindung ist das Färben (einschließlich Bedrucken) von hydroxy- und/oder carbonamidgruppenhaltigem Fasermaterial, wie Cellulose- und Polyamidfasermaterialien, mit den erfindungsgemäßen Farbstoffen.

Unter Cellulosefasermaterialien werden vorzugsweise Baumwolle und regenerierte Cellulose, aber auch andere Pflanzenfasern, wie Leinen, Hanf und Jute, verstanden. Unter Polyamidfasern sind sowohl solche nativen als auch solche synthetischen Ursprungs zu verstehen, wie beispielsweise Wolle und andere Tierhaare sowie Seide und Fasern aus synthetischem Polyamid-6,6, Polyamid-6, Polyamid-11 oder Polyamid-4.

Die erfindungsgemäßen Farbstoffe lassen sich auf den genannten Substraten nach den für Reaktivfarbstoffe bekannten Anwendungstechniken applizieren. So erhält man mit ihnen auf Cellulosefasern nach dem Ausziehverfahren aus langer Flotte unter Verwendung der verschiedensten Alkalizusätze sehr gute Farbausbeuten. Hierbei ist bemerkenswert, daß hohe Fixierausbeuten selbst bei niedrigem Elektrolytgehalt (bis zu 20 g/l) der Färbeflotte erhalten werden; des weiteren kann die gute Auswaschbarkeit nicht fixierter Farbstoffanteile hervorgehoben werden.

Nach den Klotzverfahren werden auf Cellulosefasern ebenfalls ausgezeichnete Farbausbeuten erhalten, wobei durch Verweilen bei Raumtemperatur, durch Dämpfen oder mit Trockenhitze fixiert werden kann.

Die Echtheiten der auf Cellulosefasern mit Hilfe der erfindungsgemäßen Farbstoffe erhaltenen Färbungen und Drucke sind beachtlich. Dies gilt sowohl für die wichtigsten Fabrikations- als auch für die wichtigsten Gebrauchsechtheiten. Besonders zu erwähnen sind die Lichtechtheit und Naßechtheiten, wie Waschechtheit, Walkechtheiten, Wasserechtheit, Seewasserechtheit, Überfärbeechtheit und Schweißechtheit sowie Plissierechtheit, Bügelechtheit und Reibechtheit.

Die Färbungen auf Polyamidfasern werden üblicherweise aus saurem Milieu ausgeführt. So kann man beispielsweise dem Färbebad Essigsäure oder Essigsäure und Ammoniumacetat zufügen, um den gewünschten pH-Wert zu erhalten. Zwecks Erreichung einer brauchbaren Egalität der Färbungen empfiehlt sich ein Zusatz an üblchen Egalisiermitteln, beispielsweise auf Basis eines Umsetzungsproduktes von Cyanurchlorid mit der dreifach molaren Menge einer Aminobenzolsulfonsäure und/oder einer Aminonaphthalinsulfonsäure oder auf Basis eines Umsetzungsproduktes von beispielsweise Stearylamin mit Ethylenoxid. Die Färbungen können sowohl bei Siedetemperatur als auch bei 110 bis 120°C ausgeführt werden.

Die nachfolgenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmäßig beschriebenen Verbindungen sind in Form der freien Säure angegeben; im allgemeinen werden sie in Form ihrer Alkalimetallsalze, wie Lithium-, Natrium- oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Farbstoffe angegebenen Absorptionsmaxima (λₘₐₓ) im sichtbaren Bereich wurden anhand ihrer Alkalimetallsalze in wäßriger Lösung ermittelt. In den Tabellenbeispielen sind die λₘₐₓ-Werte bei der Farbtonangabe in Klammern gesetzt; die Wellenlängenangabe bezieht sich auf nm.

### Beispiel 1

31,9 Teile 1-Amino-8-naphthol-3,6-disulfonsäure, 4,2 Teile Natriumfluorid und 14,2 Teile Trifluor-s-triazin (Cyanurfluorid) werden gemäß den Angaben der europäischen Patentanmeldungs-Veröffentlichung Nr. 0 172 790 miteinander umgesetzt. In einem getrennten Ansatz werden 28 Teile 4-(β-Sulfatoethylsulfonyl)-anilin in üblicher Weise diazotiert und zu der Lösung dieses Umsetzungsproduktes gegeben. Die Kupplungsreaktion erfolgt bei einem pH-Wert zwischen 4 und 6 und einer Temperatur von etwa 15°C. Zu diesem Ansatz werden anschließend 7,3 Teile 1,3-Diamino-propan-dihydrochlorid hinzugegeben, der Ansatz auf 10°C erwärmt und während der Umsetzung ein pH-Wert zwischen 7 und 8 durch Zugabe einer wäßrigen Natriumcarbonatlösung gehalten. Nach einer Reaktionszeit von etwa zwei Stunden wird der pH auf einen Wert von 7 gestellt und der erfindungsgemäße Disazofarbstoff in üblicher Weise isoliert, wie beispielsweise durch Aussalzen mit Natriumchlorid oder durch Sprühtrocknung.

Er besitzt, in Form der freien Säure geschrieben, die Formel 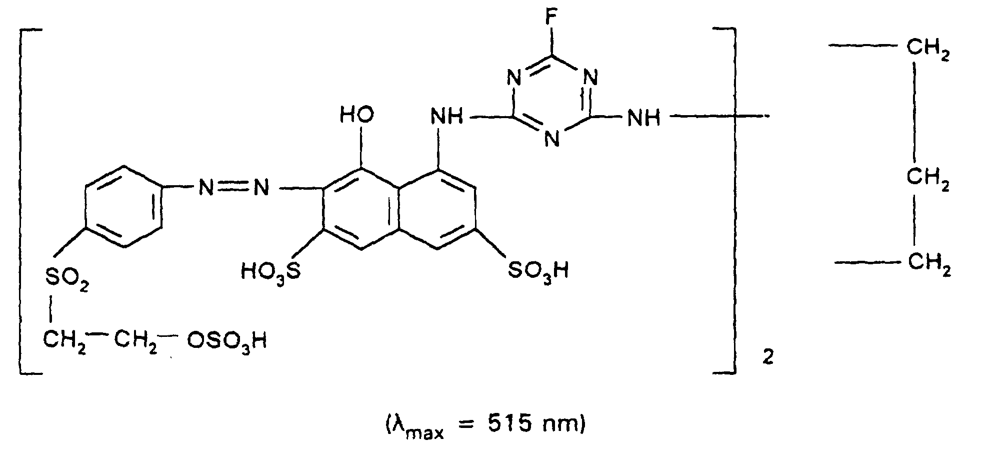 und färbt die in der Beschreibung genannten Materialien, wie insbesondere Cellulosefasermaterialien, wie Baumwolle, nach den in der Technik für faserreaktive Farbstoffe üblichen Färbe- und Druckverfahren in kräftigen roten Tönen mit guten Allgemeinechtheiten, von denen insbesondere die Waschechtheiten hervorgehoben werden können.

### Beispiel 2

Es wird eine neutrale Lösung von 31,9 Teilen 1-Amino-8-naphthol-3,6-disulfonsäure, 4,2 Teilen Natriumfluorid und 4,3 Teilen Piperazin in 100 Teilen Eiswasser hergestellt und gemäß den Angaben der deutschen Offenlegungsschrift Nr. 3 917 046 mit 14,2 Teilen Cyanurfluorid umgesetzt. Anschließend wird der Ansatz auf einen pH-Wert von 6 gestellt und auf eine Temperatur von 5 bis 10°C abgekühlt. Zu der so erhaltenen Lösung wird die auf üblichem Wege hergestellte salzsaure Suspension des Diazoniumsalzes von 28 Teilen diazotiertem 4-(β-Sulfatoethylsulfonyl)-anilin gegeben, ein pH-Wert von 5 bis 6 eingestellt und während der Kupplungszeit von etwa 30 Minuten bei 15 bis 20°C gehalten.

Danach wird der Ansatz auf einen pH-Wert zwischen 6,5 und 7 eingestellt und der synthetisierte erfindungsgemäße Disazofarbstoff, der, in Form der freien Säure geschrieben, die Formel 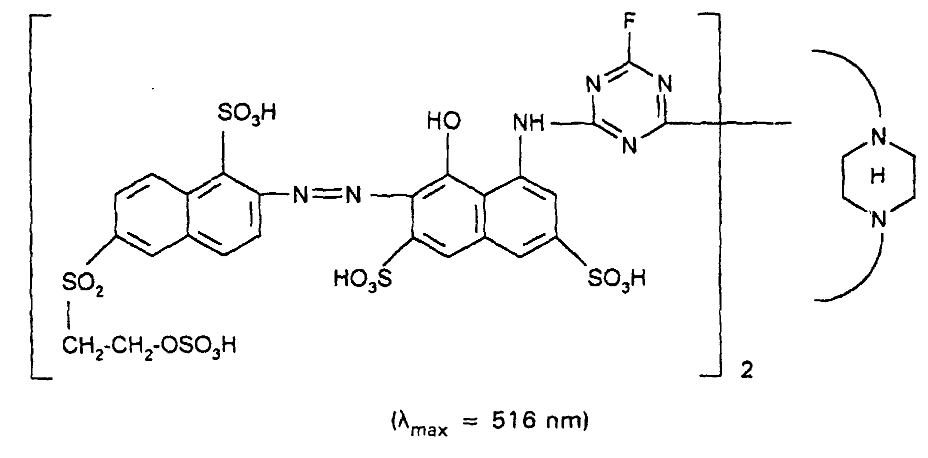 besitzt, in üblicher Weise durch Aussalzen mittels Natriumchlorid oder Sprühtrocknung isoliert.

Er liefert auf den in der Beschreibung genannten Fasermaterialien, wie insbesondere Baumwolle, nach den üblichen Anwendungsverfahren farbstarke rote Färbungen mit guten Echtheitseigenschaften.

### Beispiel 3

31,9 Teile 1-Amino-8-naphthol-3,6-disulfonsäure, 4,2 Teile Natriumfluorid und 14,2 Teile Cyanurfluorid werden gemäß den Angaben der europäischen Patentanmeldungs-Veröffentlichung Nr. 0 172 790 miteinander umgesetzt. Zu der so erhaltenen Lösung der Difluortriazin-Verbindung wird eine Lösung von 6,6 Teilen 1,2-Diaminoethan-dihydrochlorid in 100 Teilen Wasser gegeben. Es wird ein pH-Wert von 8 bis 9 eingestellt und die Umsetzung unter Einhaltung dieses pH-Wertes während etwa einer Stunde bei einer Temperatur zwischen 5 und 10°C durchgeführt.
Zu der so erhaltenen Lösung der Kupplungskomponente gibt man eine auf üblichem Wege hergestellte salzsaure Suspension des Diazoniumsalzes aus 28 Teilen diazotiertem 4-(β-Sulfatoethylsulfonyl)-anilin, führt die Kupplungsreaktion während etwa 30 Minuten bei einem pH-Wert von 6,5 und einer Temperatur von etwa 15°C durch und isoliert sodann den erhaltenen erfindungsgemäßen Disazofarbstoff in üblicher Weise durch Aussalzen oder Sprühtrocknung.

Er besitzt, in Form der freien Säure geschrieben, die Formel 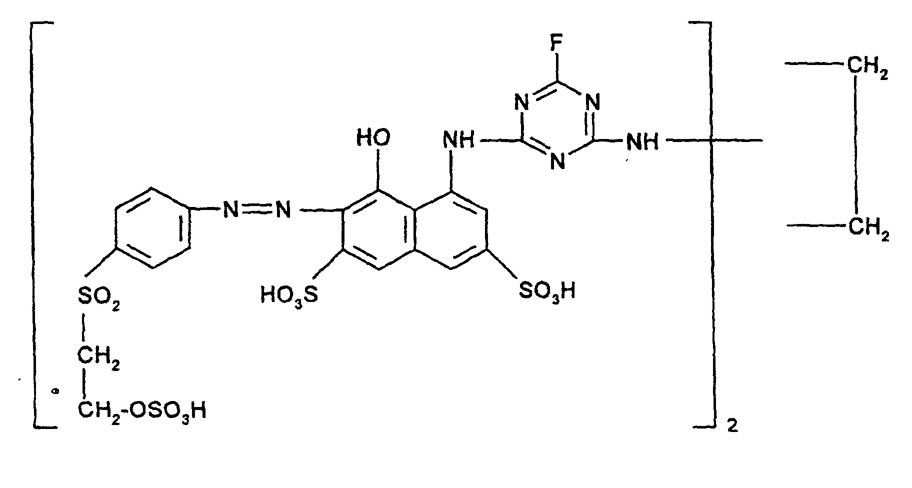 Er besitzt die gleichen guten Eigenschaften wie der nach Beispiel 1 hergestellte Disazofarbstoff.

### Beispiel 4

23,9 Teile 3-Amino-6-sulfo-8-naphthol und 14,2 Teile Cyanurfluorid werden gemäß den Angaben der europäischen Patentanmeldungs-Veröffentlichung Nr. 0 172 790 miteinander umgesetzt. Nach erfolgter Umsetzung wird zu dem Ansatz eine in üblicher Weise hergestellte salzsaure Diazoniumsalzsuspension aus 28 Teilen diazotiertem 4-(β-Sulfatoethylsulfonyl)-anilin gegeben und die Kupplungsreaktion bei einem pH-Wert zwischen 4 und 5 und einer Temperatur zwischen 15 und 20°C durchgeführt. Danach werden 7,3 Teile 1,3-Diaminopropan-dihydrochlorid zugegeben, und die Umsetzung wird bei einer Temperatur von etwa 10°C und einem pH-Wert zwischen 7 und 8 während etwa zwei Stunden durchgeführt. Danach wird der pH auf einen Wert von 7 eingestellt und der erfindungsgemäße Disazofarbstoff der Formel (in Form der freien Säure geschrieben) 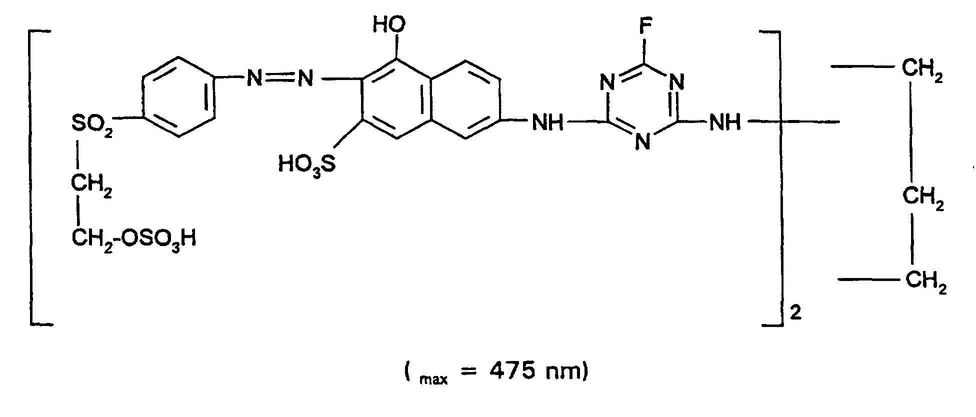 in üblicher Weise isoliert. Er färbt beispielsweise Baumwolle in farbstarken orangegelben Tönen mit guten Allgemeinechtheiten, von denen insbesondere die Licht- und Naßlichtechtheiten hervorgehoben werden können.

### Beispiel 5

23,9 Teile 3-Amino-6-sulfo-8-naphthol und 14,2 Teile Cyanurfluorid werden gemäß den Angaben der EP-A-0 172 790 miteinander umgesetzt. Anschließend gibt man zu dem Ansatz 7,9 Teile Piperazin-dihydrochlorid und führt die zweite Kondensationsreaktion bei einem pH-Wert zwischen 7 und 8 und einer Temperatur von 0 bis 10°C durch.
Zu der so erhaltenen wäßrigen Lösung einer Kupplungskomponente gibt man die in üblicher Weise erhaltene wäßrige salzsaure Diazoniumsalzsuspension aus 41 Teilen diazotiertem 1-Sulfo-6-(β-sulfatoethylsulfonyl)-2-amino-naphthalin und führt die Kupplungsreaktion bei einem pH-Wert zwischen 6 und 6,5 und bei etwa 15°C durch. Nach Beendigung der Kupplungsreaktion setzt man 10 Teile Tetranatrium-diphosphat hinzu und isoliert den erfindungsgemäßen Disazofarbstoff in üblicher Weise durch Aussalzen oder Sprühtrocknung.

Er besitzt, in Form der freien Säure geschrieben, die Formel 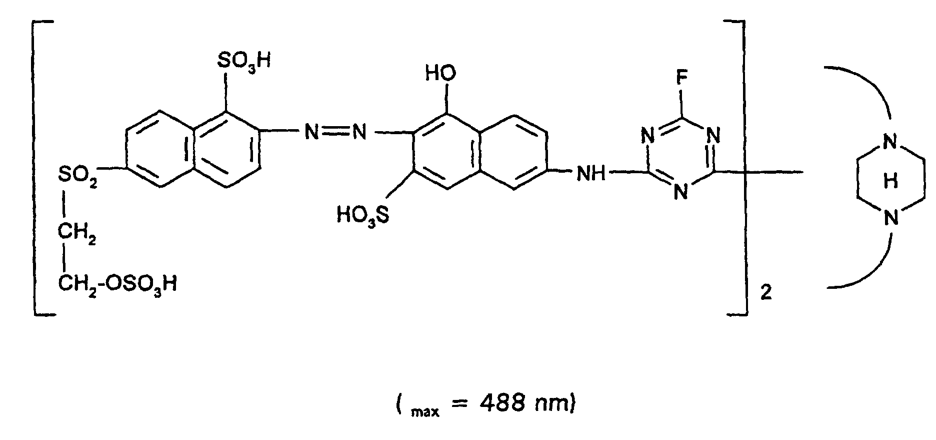 zeigt sehr gute faserreaktive Eigenschaften und färbt die in der Beschreibung genannten Fasermaterialien, wie beispielsweise Baumwolle, nach den in der Technik für faserreaktive Farbstoffe üblichen Färbe- und Druckverfahren in farbstarken orangen Tönen und mit guten Echtheitseigenschaften.

### Beispiel 6

Zu einer neutralen wäßrigen Lösung von 135 Teilen der Disazoverbindung 2-[4'-(β-Sulfatoethylsulfonyl-phenyl)]-azo-7-(2"-sulfo-5"-amino-phenyl)-azo-3,6-disulfo-1-amino-8-hydroxy-naphthalin in 1500 Teilen eines Gemisches aus Wasser und Eis werden innerhalb von ungefähr fünf Minuten unter kräftigem Rühren und unter Einhaltung eines pH-Wertes zwischen 5 und 6 mittels wäßriger Natronlauge stetig 30 Teile Cyanurfluorid gegeben. Man rührt den Ansatz noch 30 Minuten nach und gibt sodann 14,7 Teile 1,3-Diaminopropan-dihydrochlorid hinzu, rührt weitere vier Stunden bei 0 bis 5°C und einem pH-Wert zwischen 8 und 9 weiter, stellt sodann den Ansatz mittels wäßriger Salzsäure auf einen pH-Wert von 6,5 und isoliert die erhaltene erfindungsgemäße Disazoverbindung der Formel (in Form der freien Säure geschrieben) 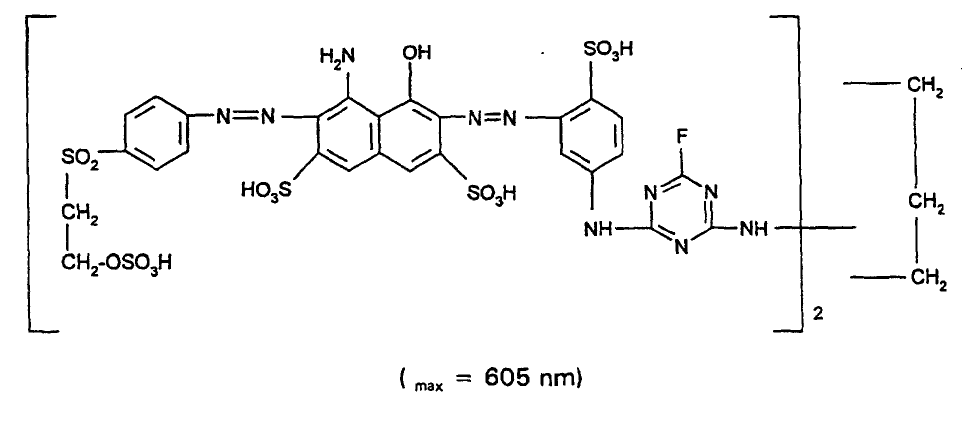 in üblicher Weise, beispielsweise durch Sprühtrocknung oder durch Aussalzen mit Natriumchloid, als Alkalimetallsalz (Natriumsalz).

Die erfindungsgemäße Tetrakisazoverbindung besitzt sehr gute faserreaktive Farbstoffeigenschaften und liefert nach den in der Technik für faserreaktive Farbstoffe üblichen Anwendungsverfahren auf den in der Beschreibung genannten Materialien, insbesondere auf cellulosefaserhaltigen Materialien, Färbungen und Drucke in tiefen marinenblauen Tönen mit guten Echtheitseigenschaften.

### Beispiele 7 bis 379

In den nachfolgenden Tabellenbeispielen werden weitere erfindungsgemäße Azofarbstoffe entsprechend der allgemeinen Formel (A) 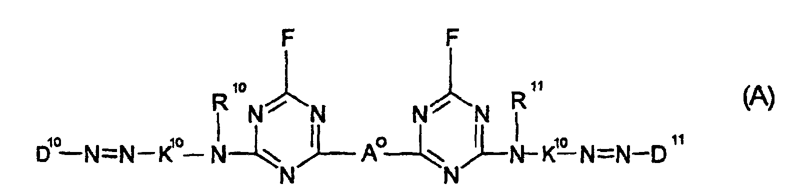 mit Hilfe der in dem jeweiligen Tabellenbeispiel angegebenen Komponenten beschrieben. Sie lassen sich in erfindungsgemäßer Weise, beispielsweise analog einem der obigen Ausführungsbeispiele, mittels der Ausgangsverbindungen, die aus den Komponenten des jeweiligen Tabellenbeispieles in Verbindung mit der allgemeinen Formel (A) ersichtlich sind (Cyanurfluorid, den Diazokomponenten D¹⁰-NH₂ und D¹¹-NH₂, den Kupplungskomponenten H-K¹⁰-N(R¹⁰)H und H-K¹¹-N(R¹¹)H sowie einer Diaminoverbindung H-A^{o}-H), herstellen. Diese erfindungsgemäßen Azofarbstoffe zeigen sehr gute faserreaktive Farbstoffeigenschaften und liefern auf den in der Beschreibung genannten Materialien, wie beispielsweise Wolle und insbesondere Cellulosefasermaterialien, farbstarke Färbungen und Drucke mit guten Echtheitseigenschaften in dem für den Farbstoff des jeweiligen Tabellenbeispiels angegebenen Farbton (hier auf Baumwolle).

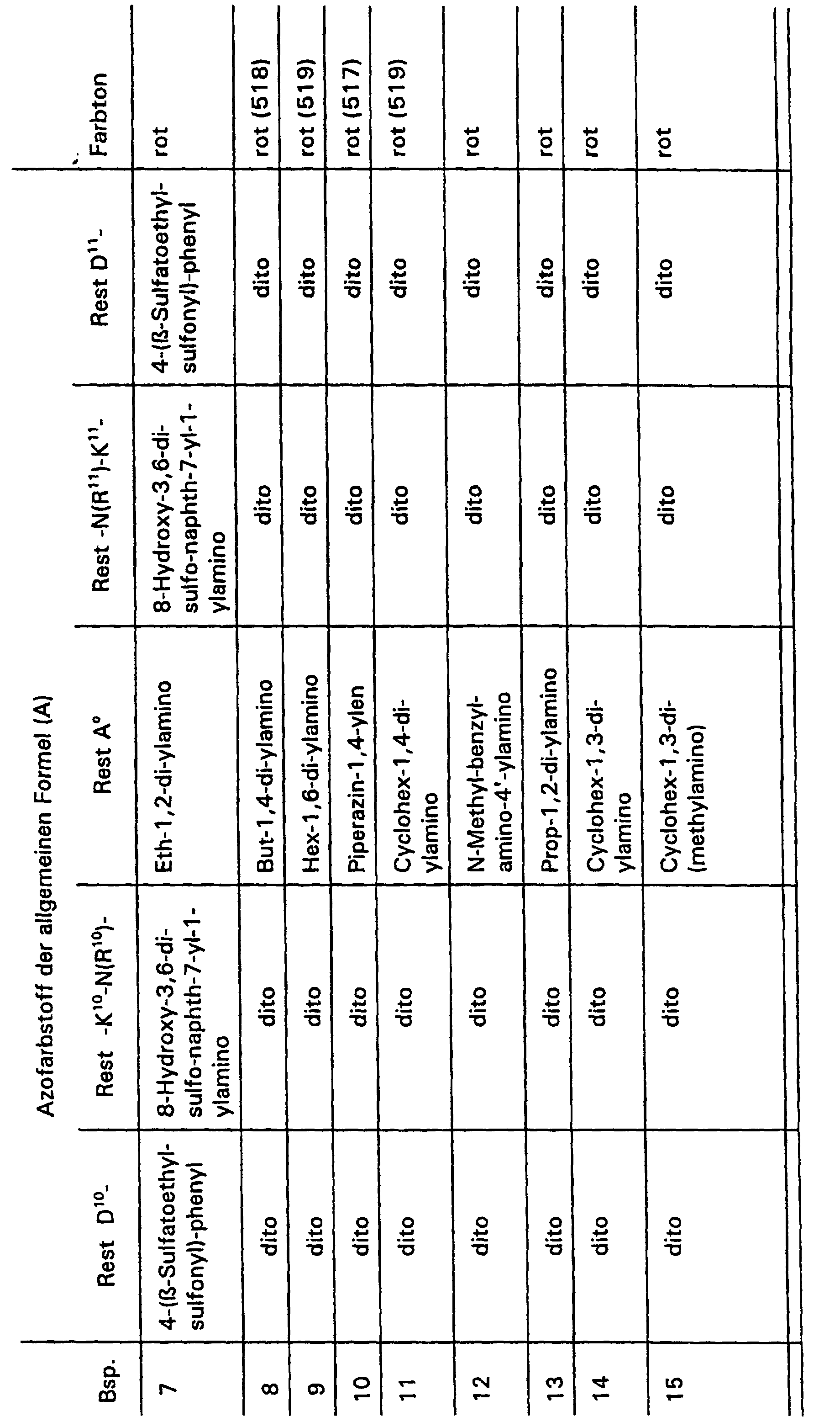

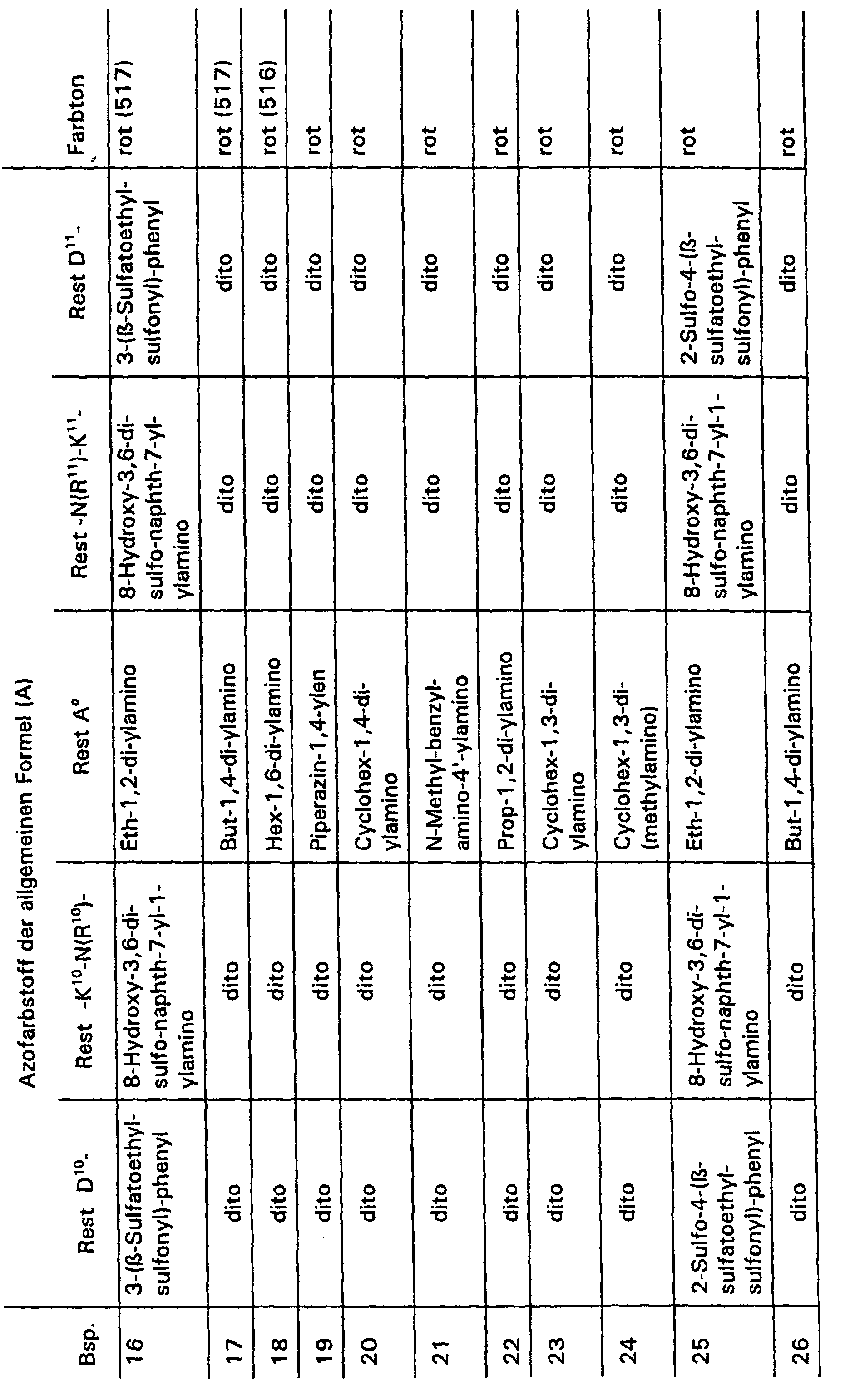

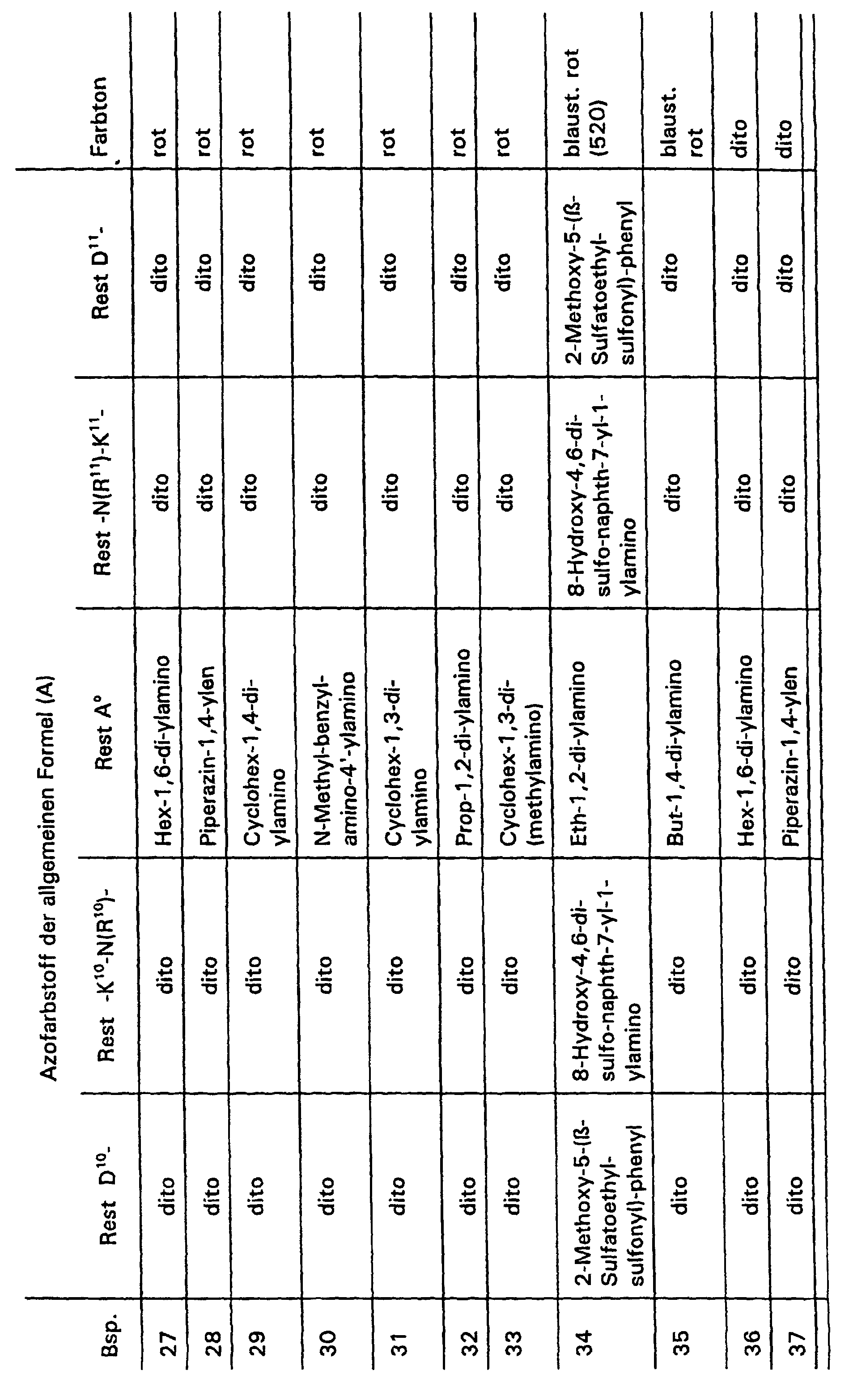

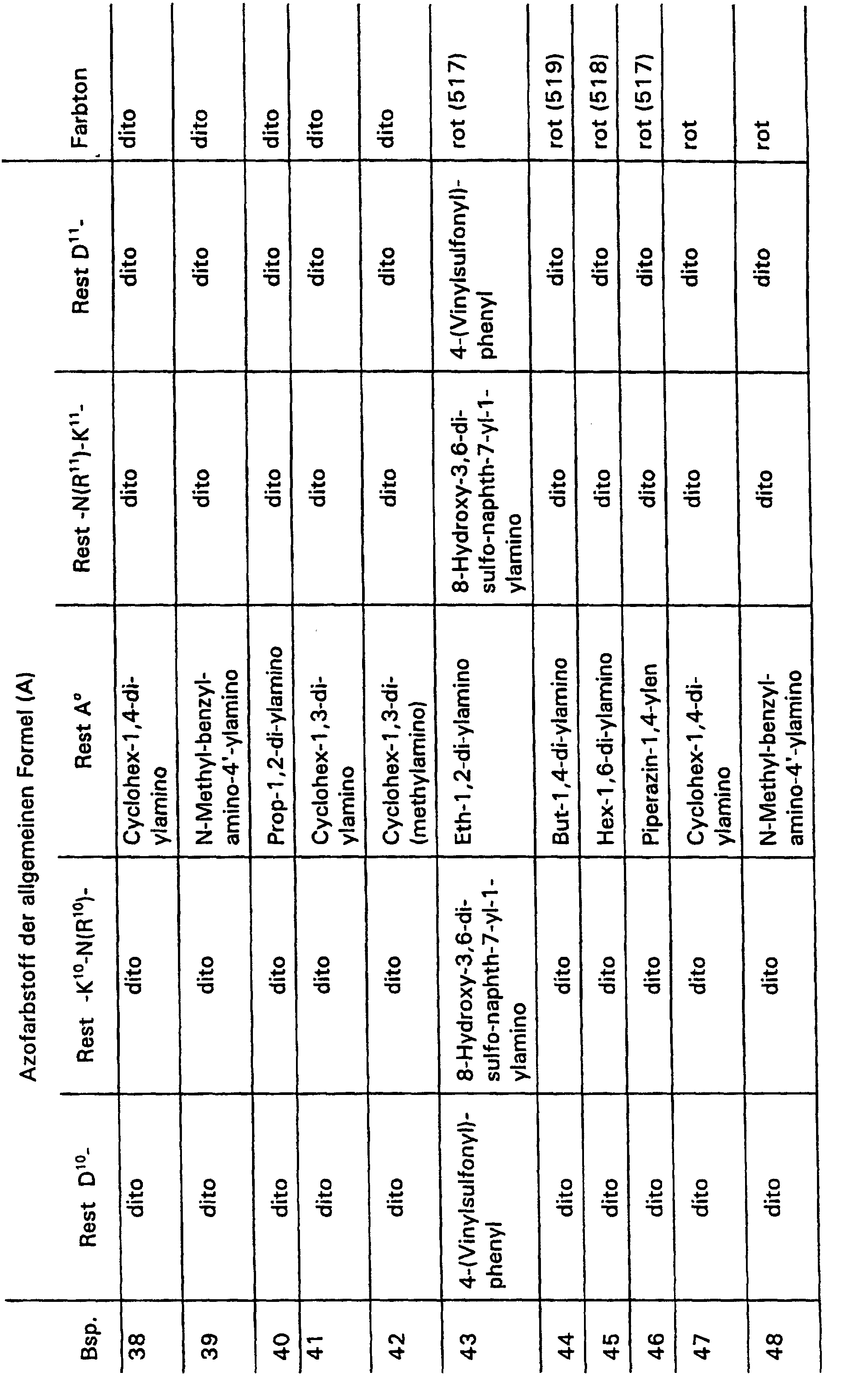

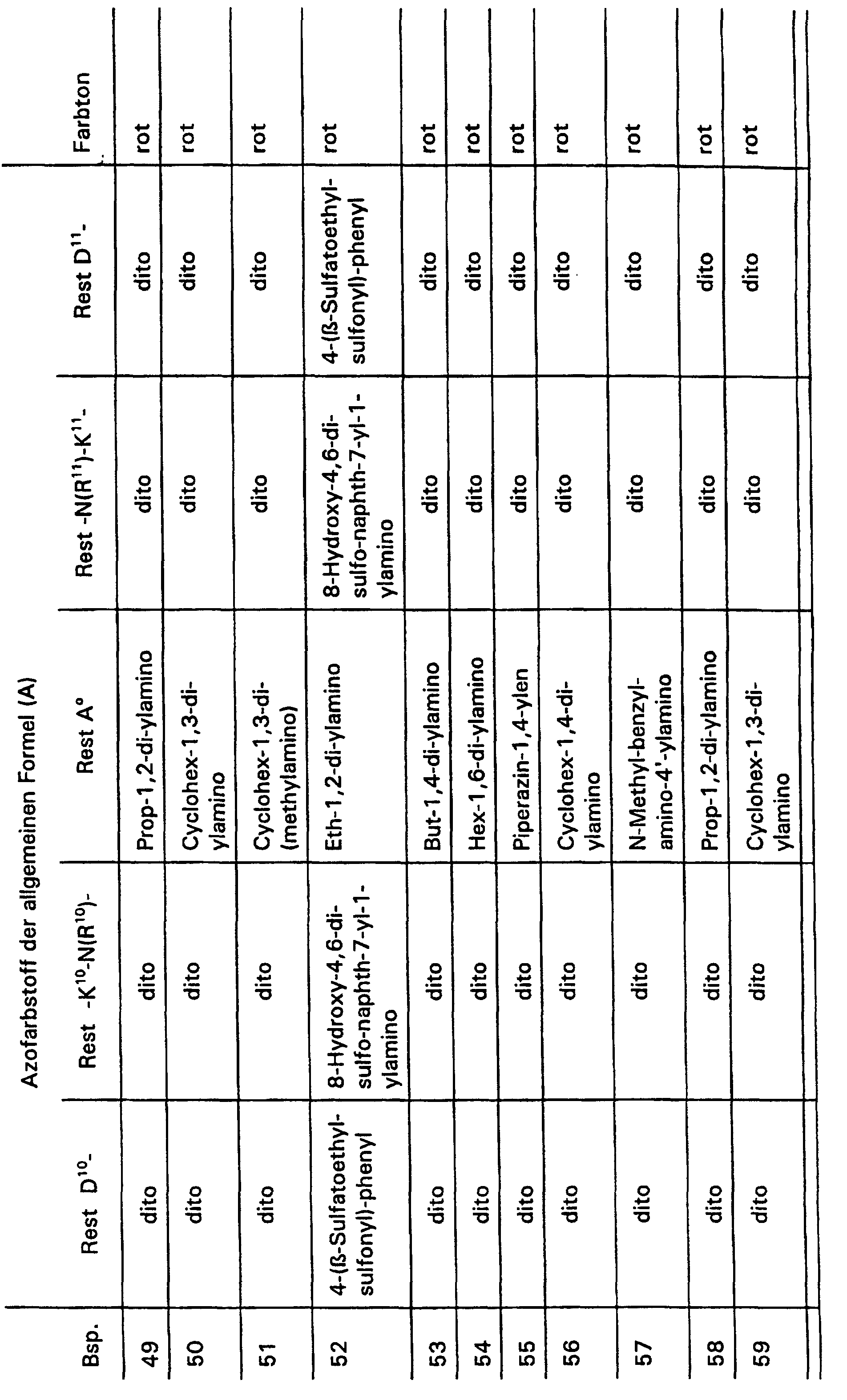

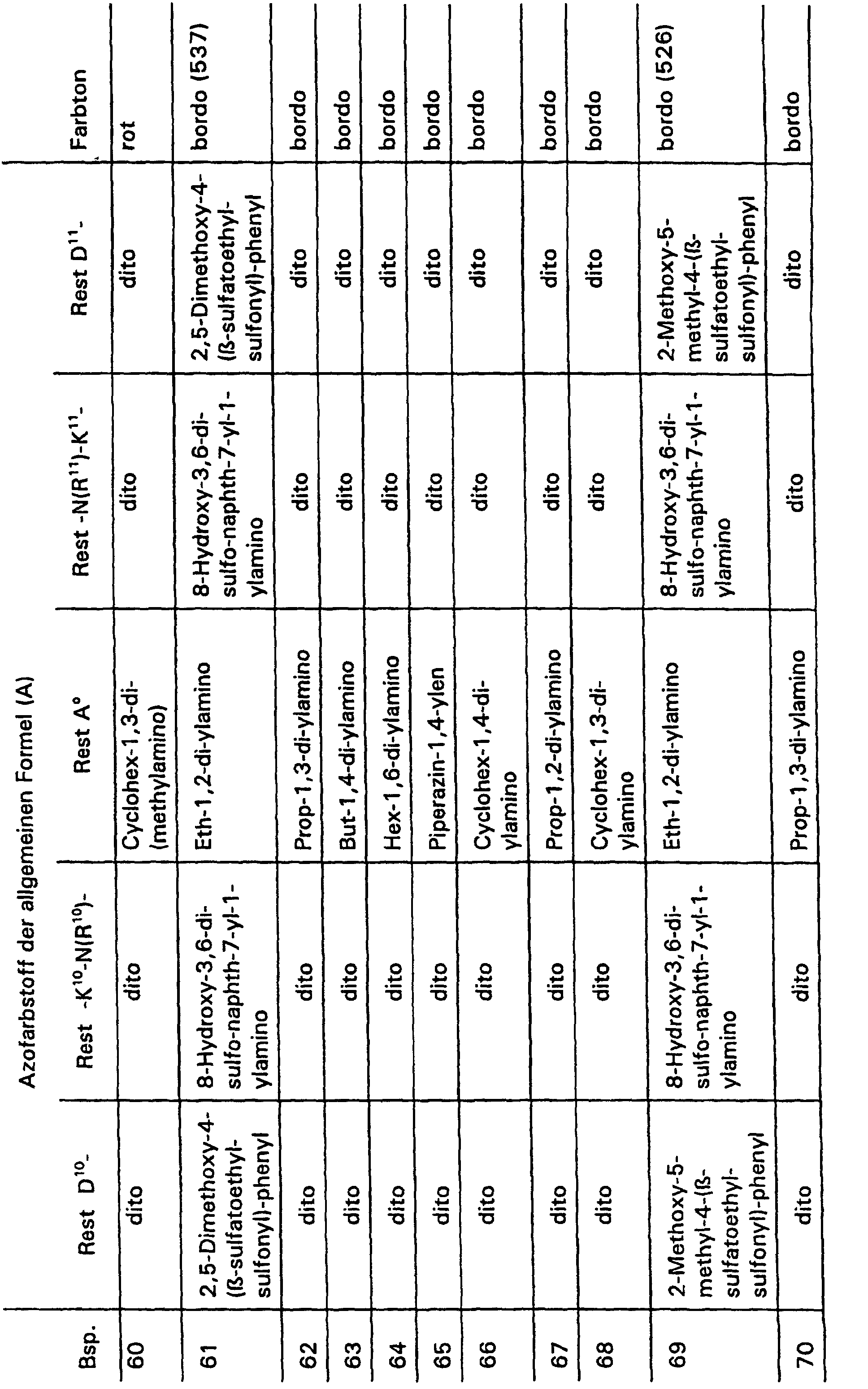

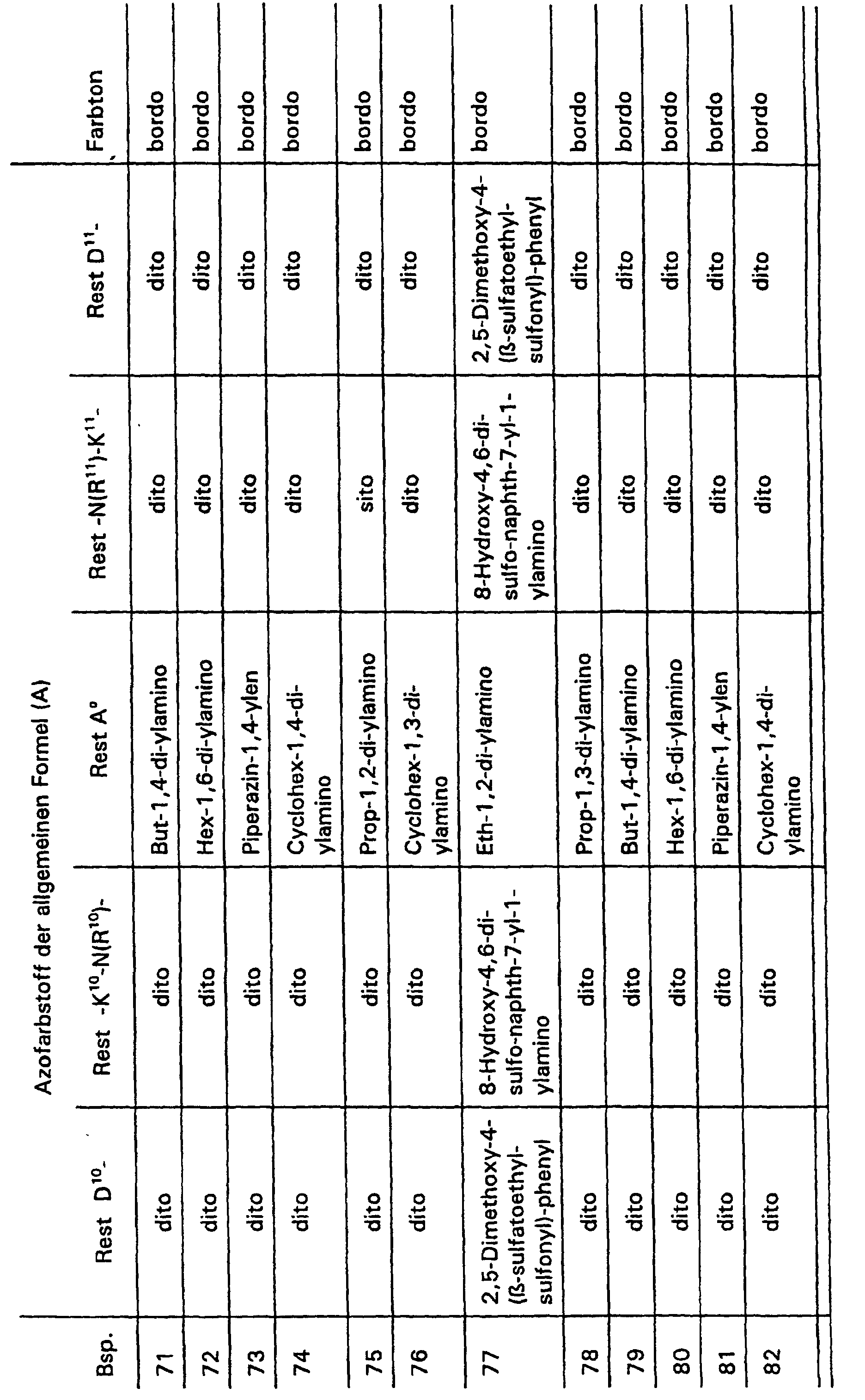

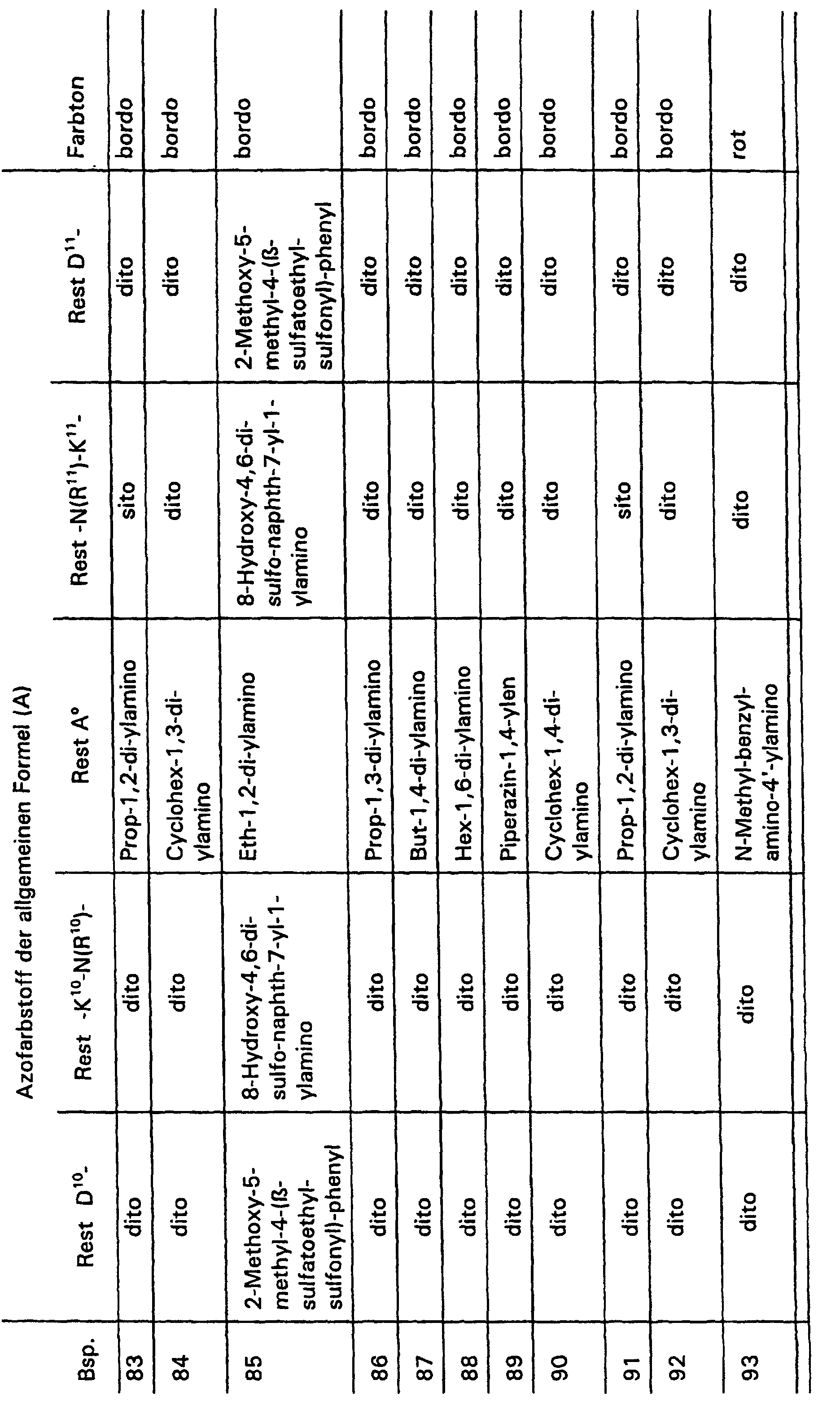

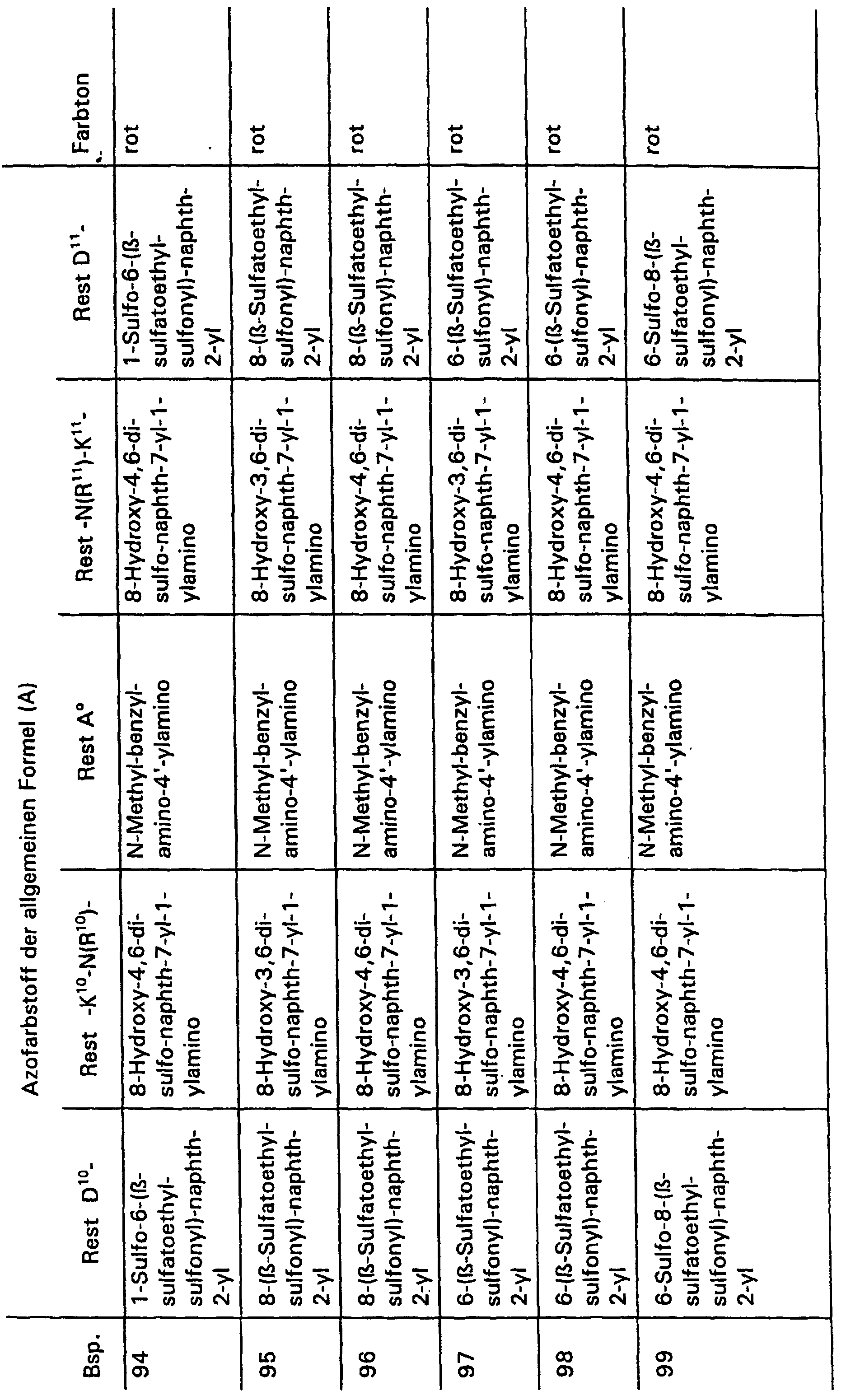

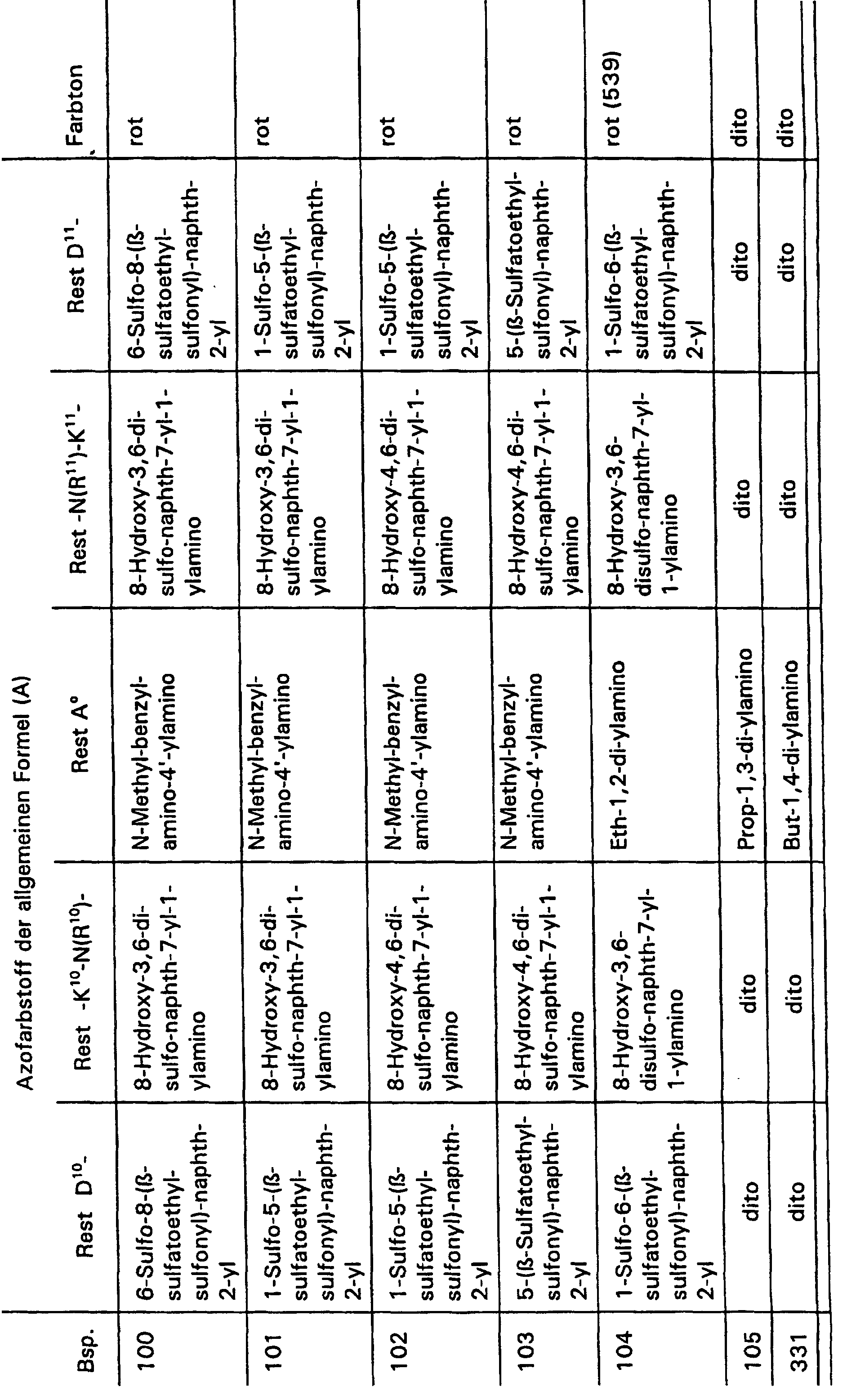

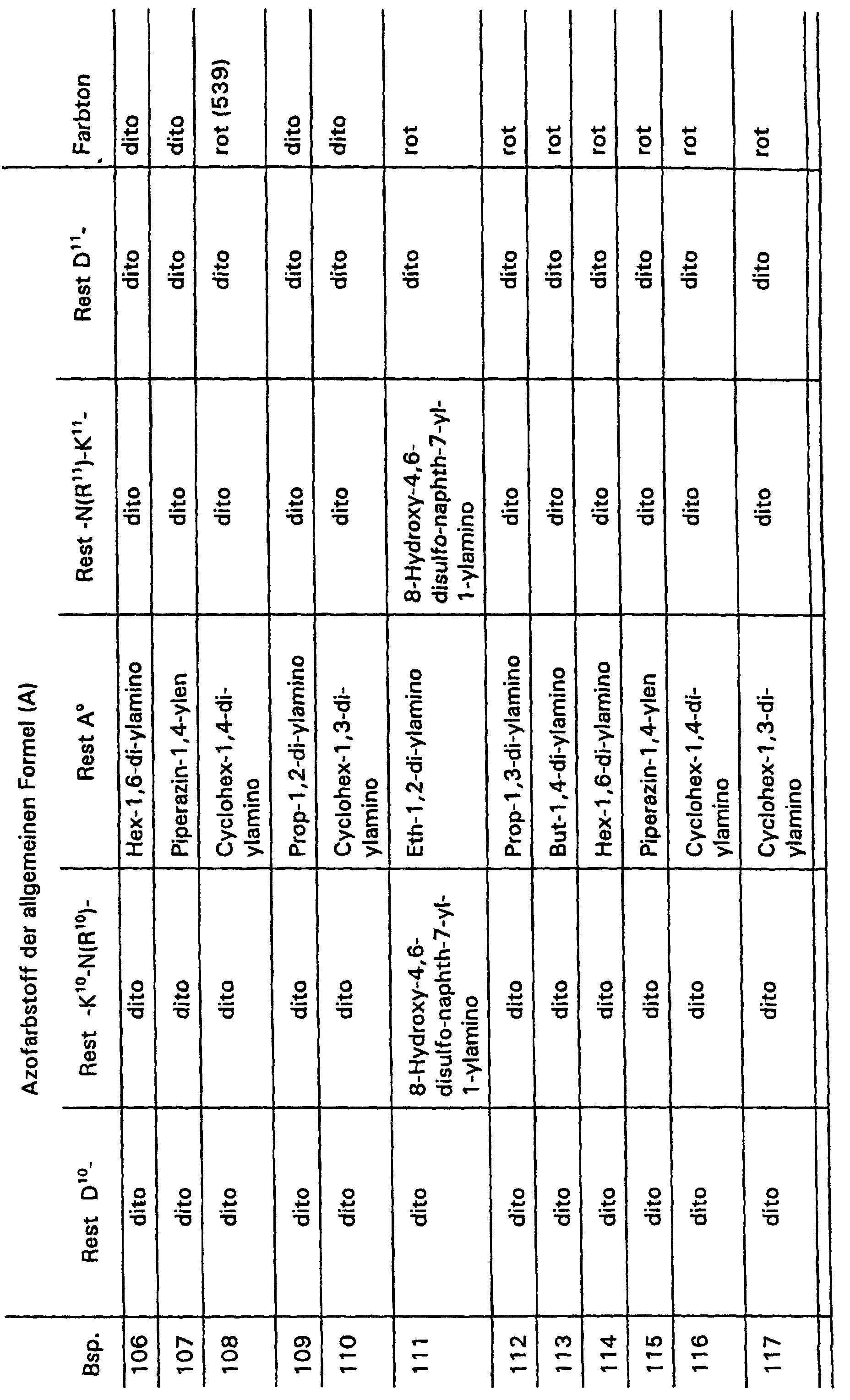

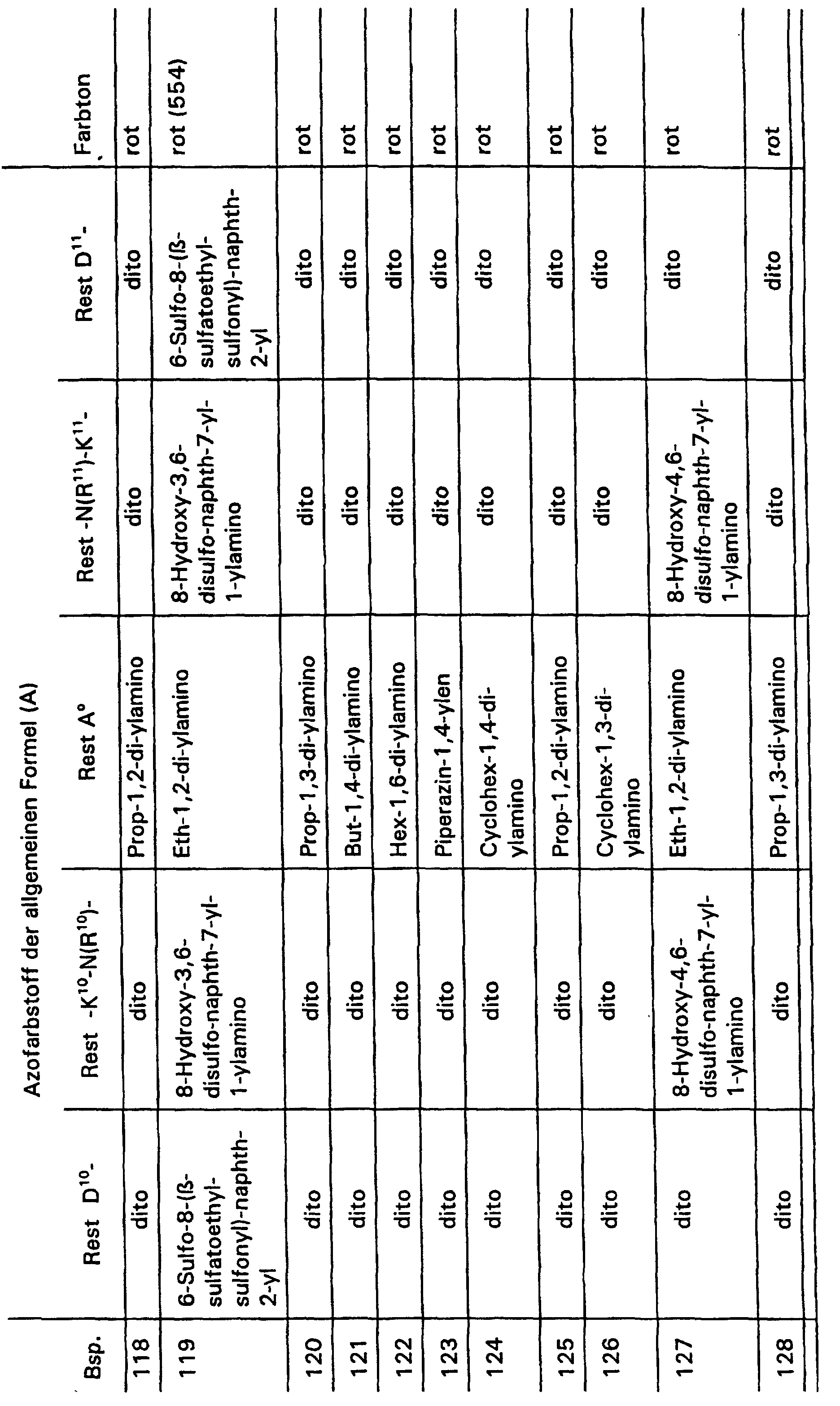

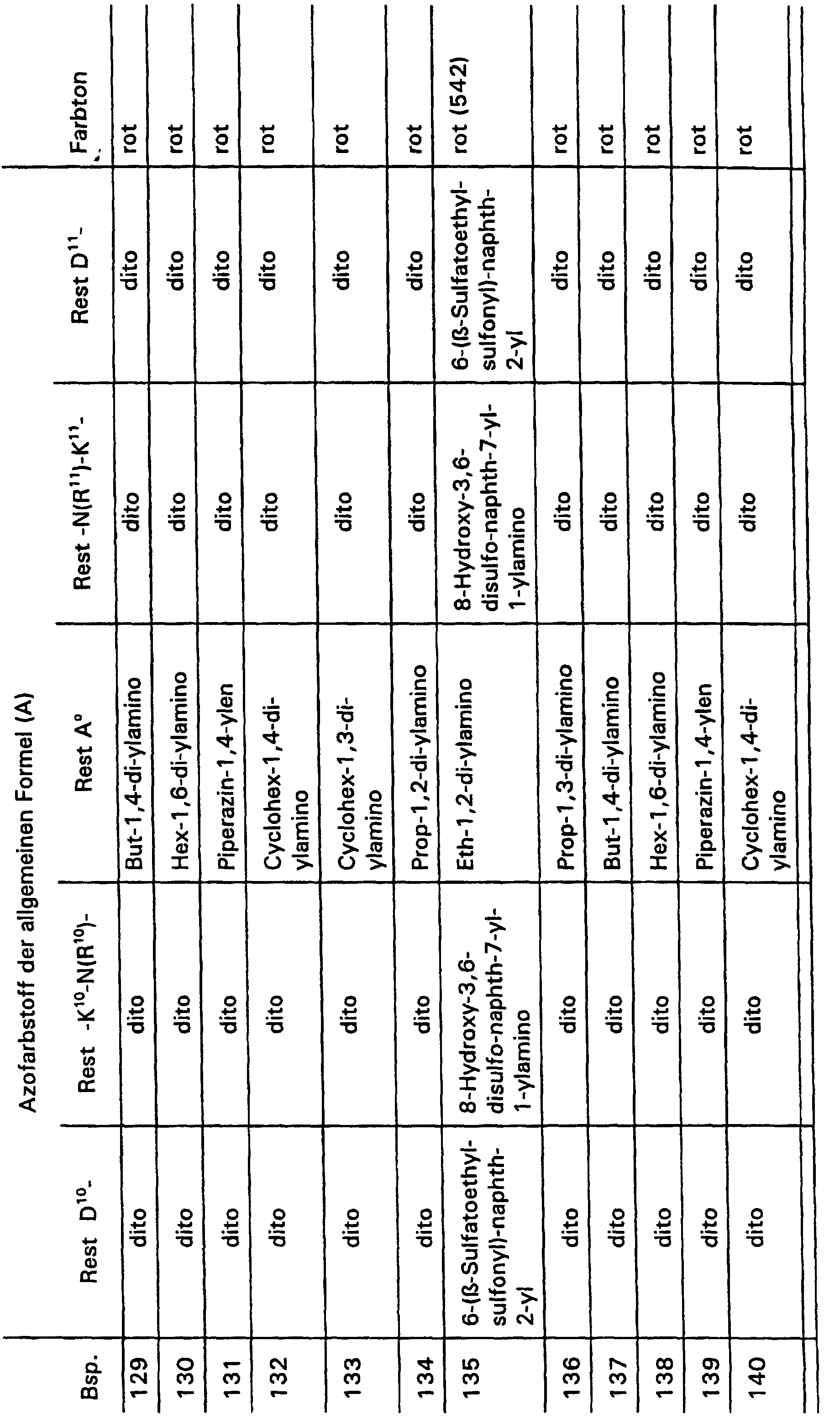

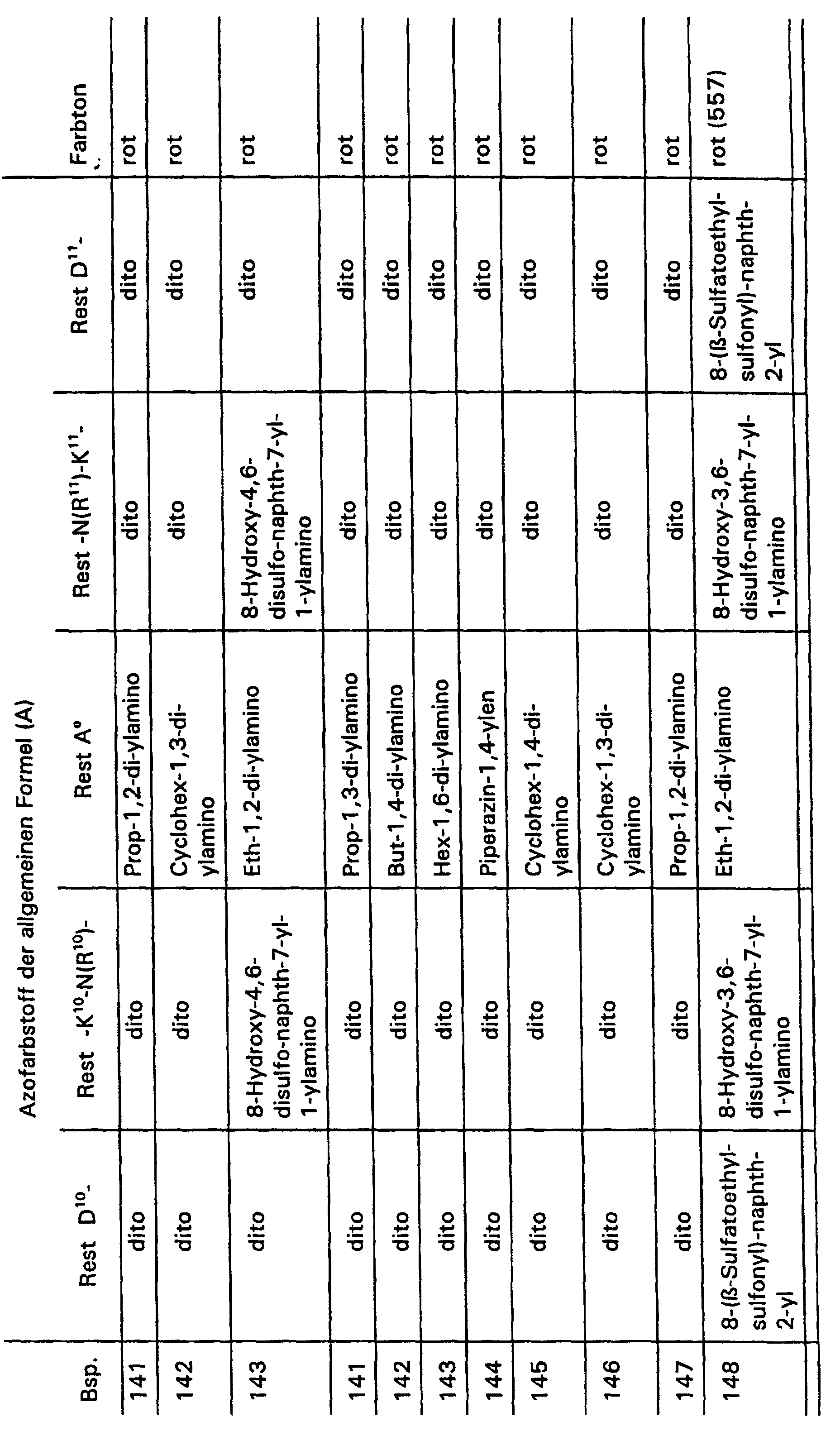

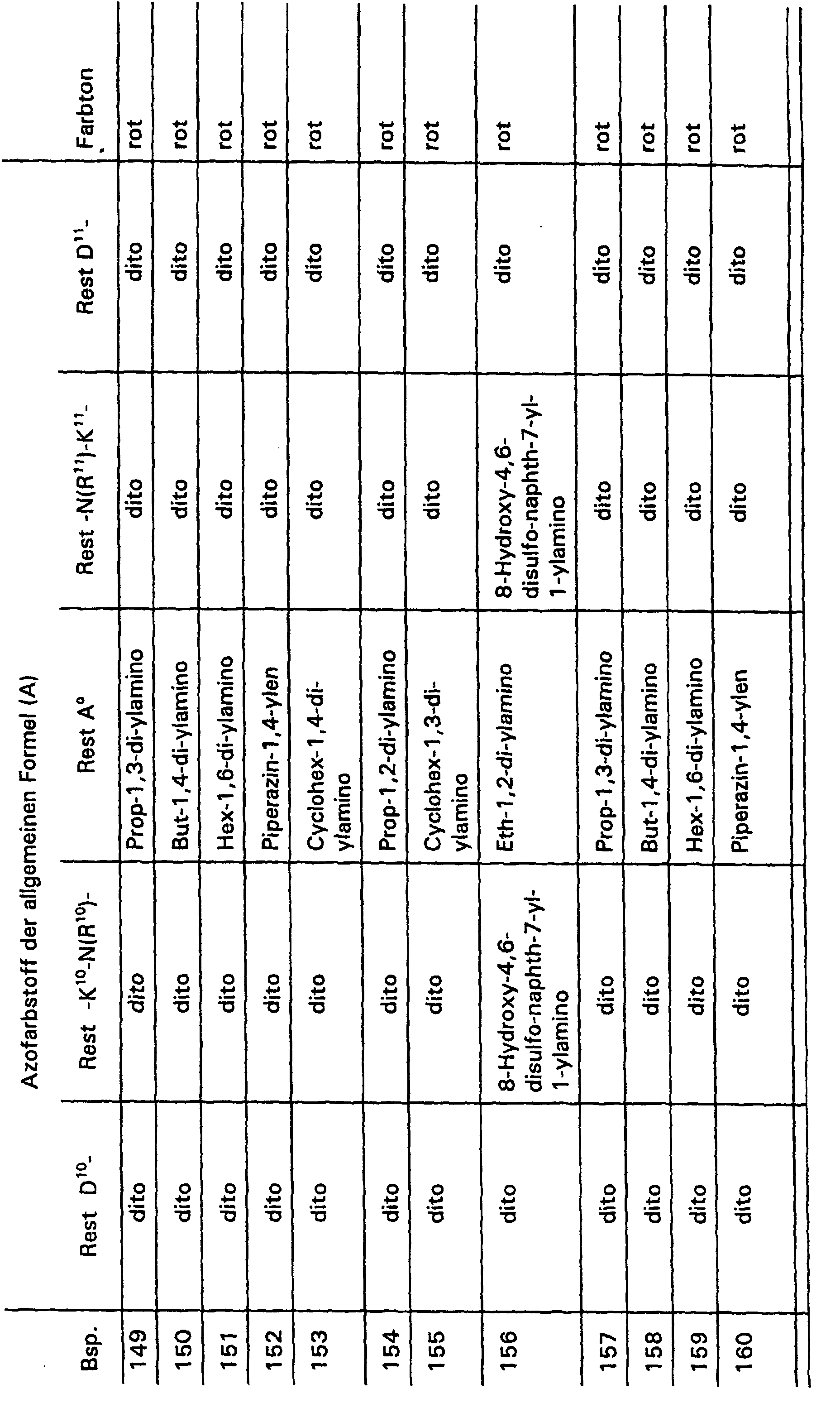

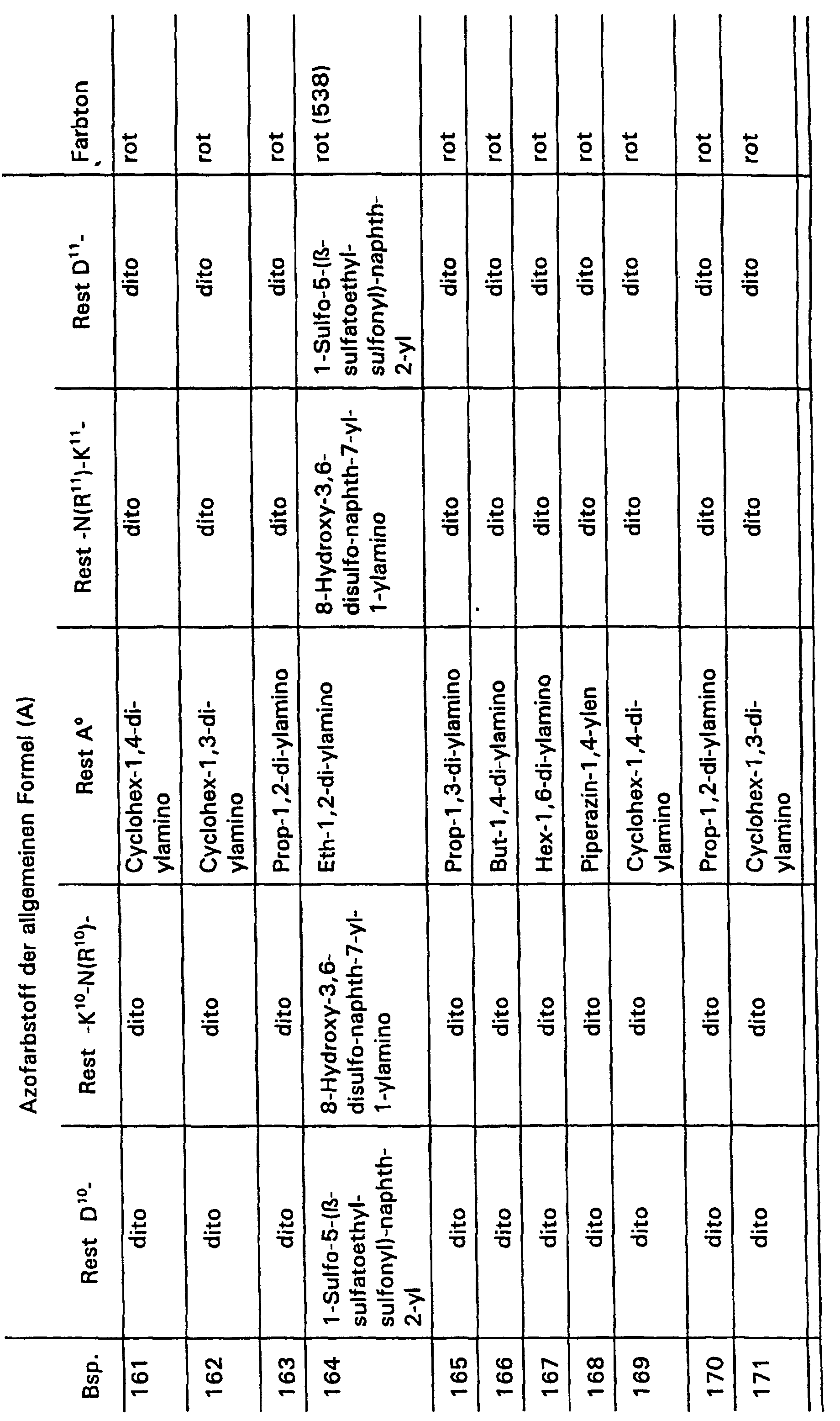

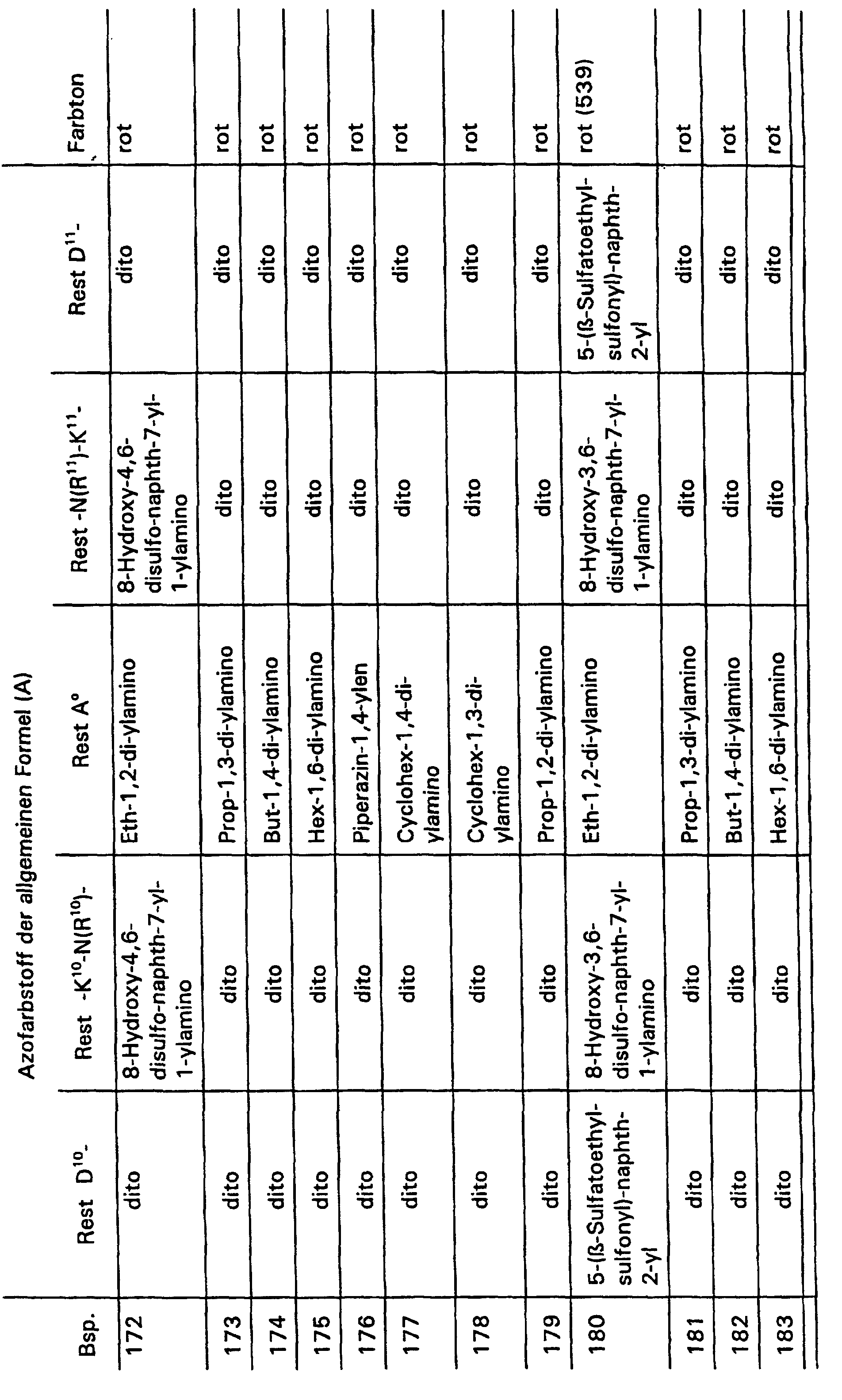

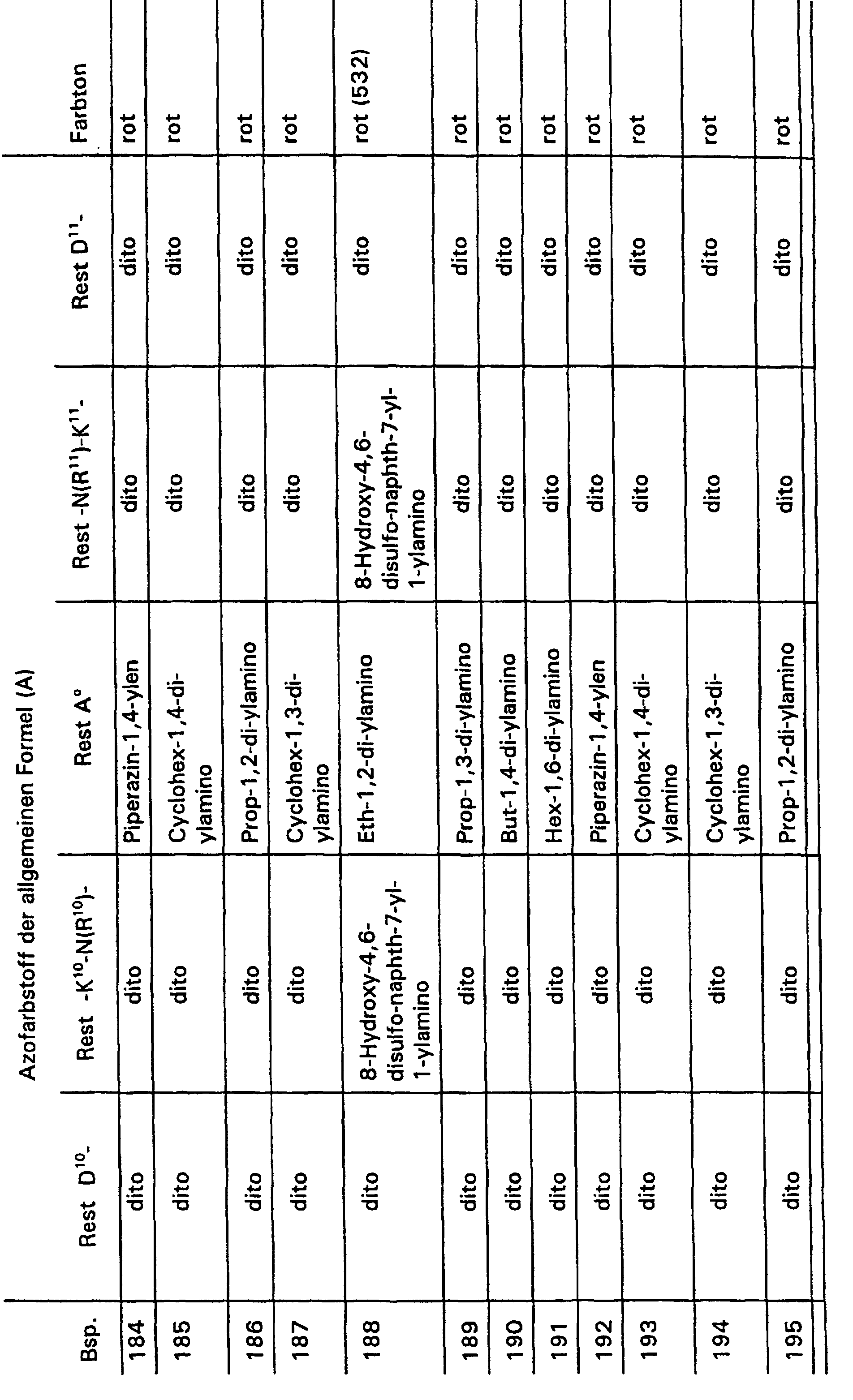

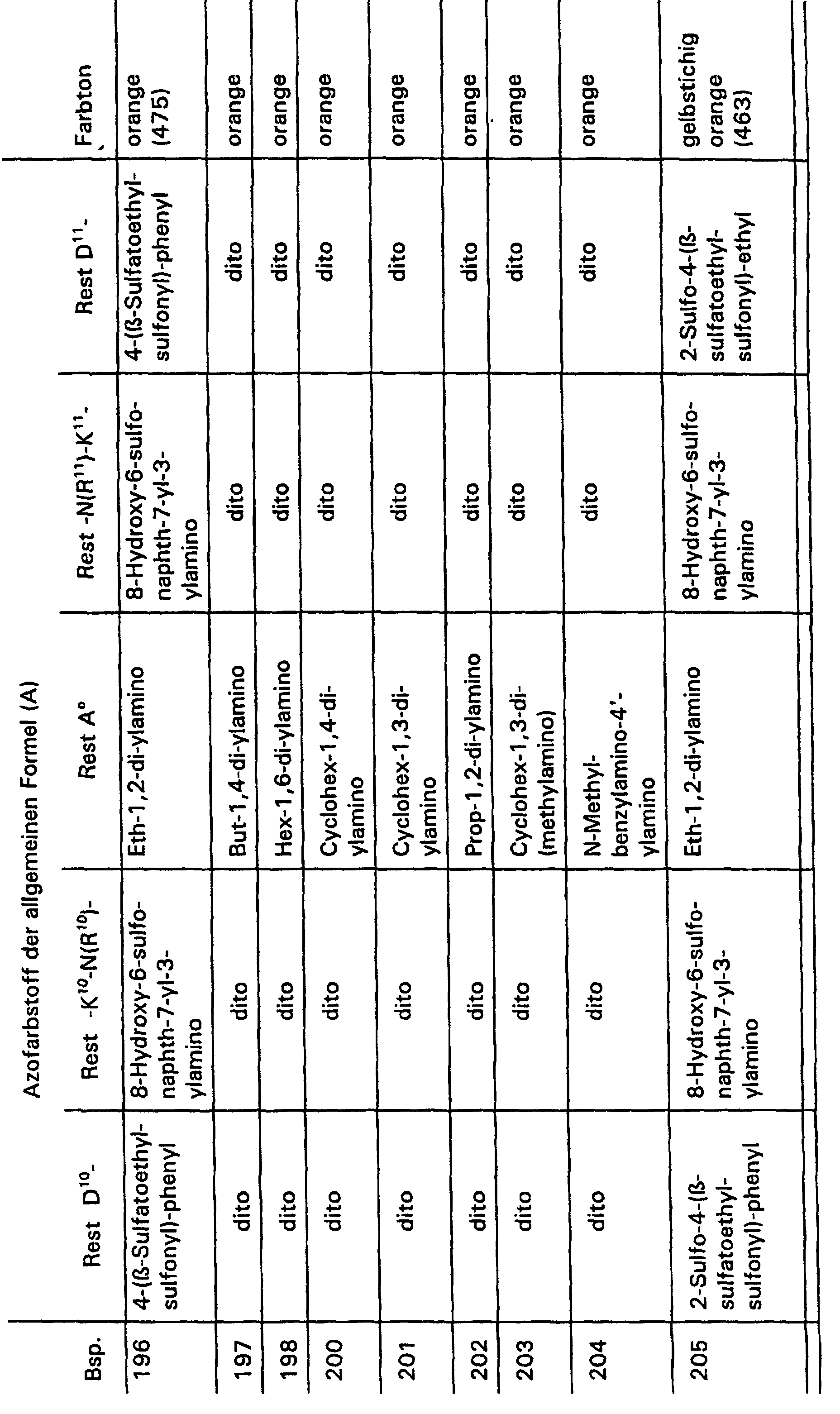

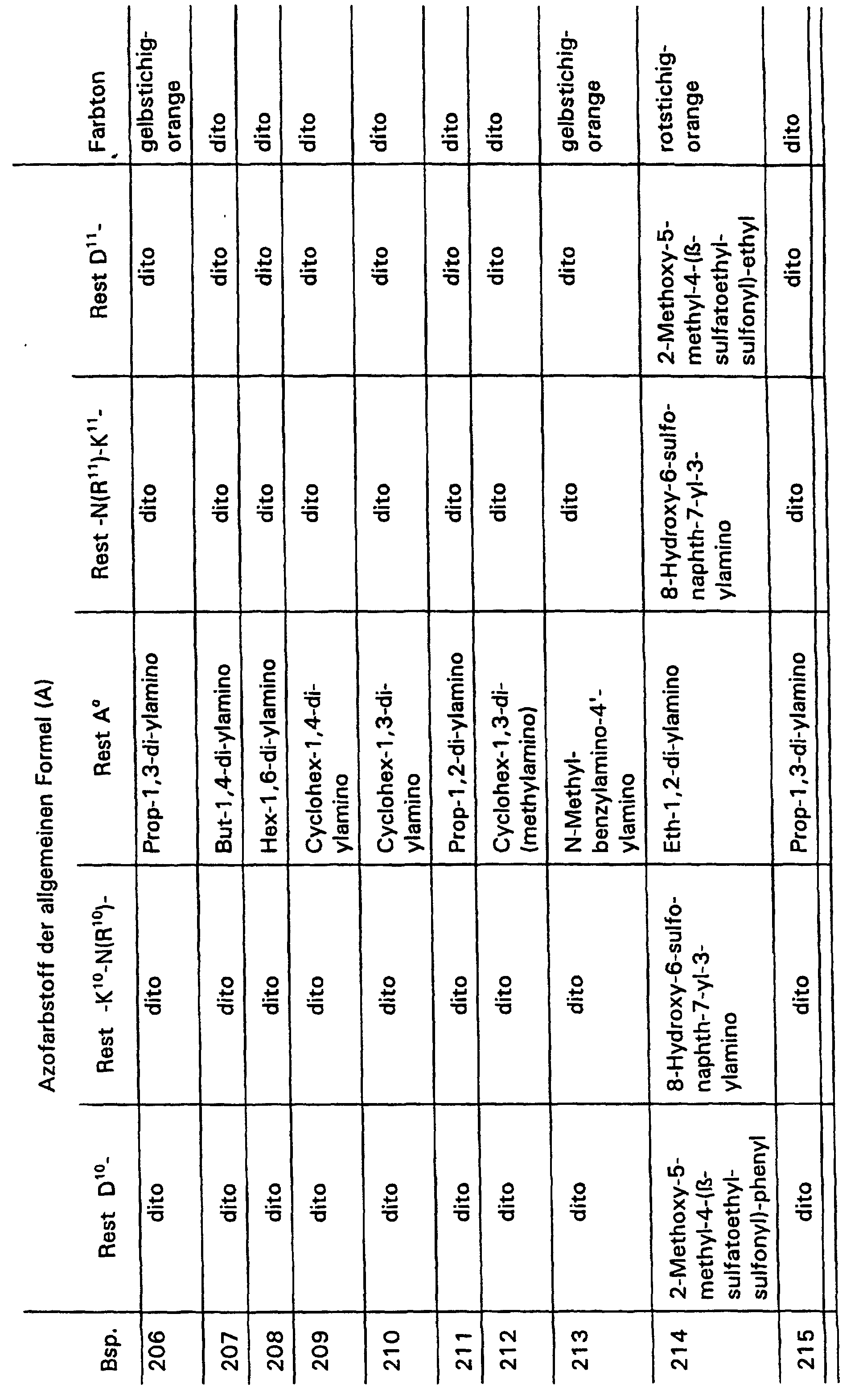

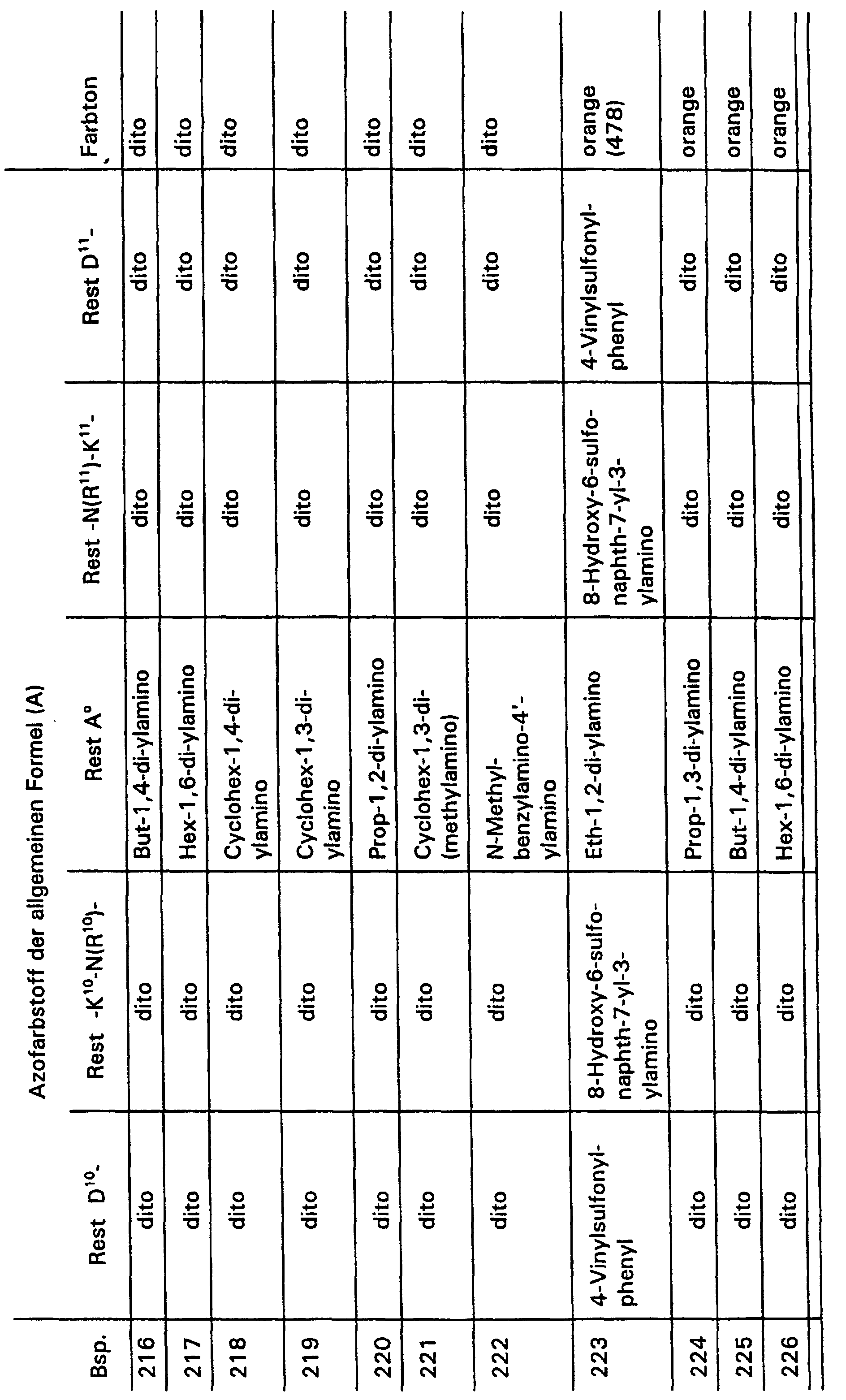

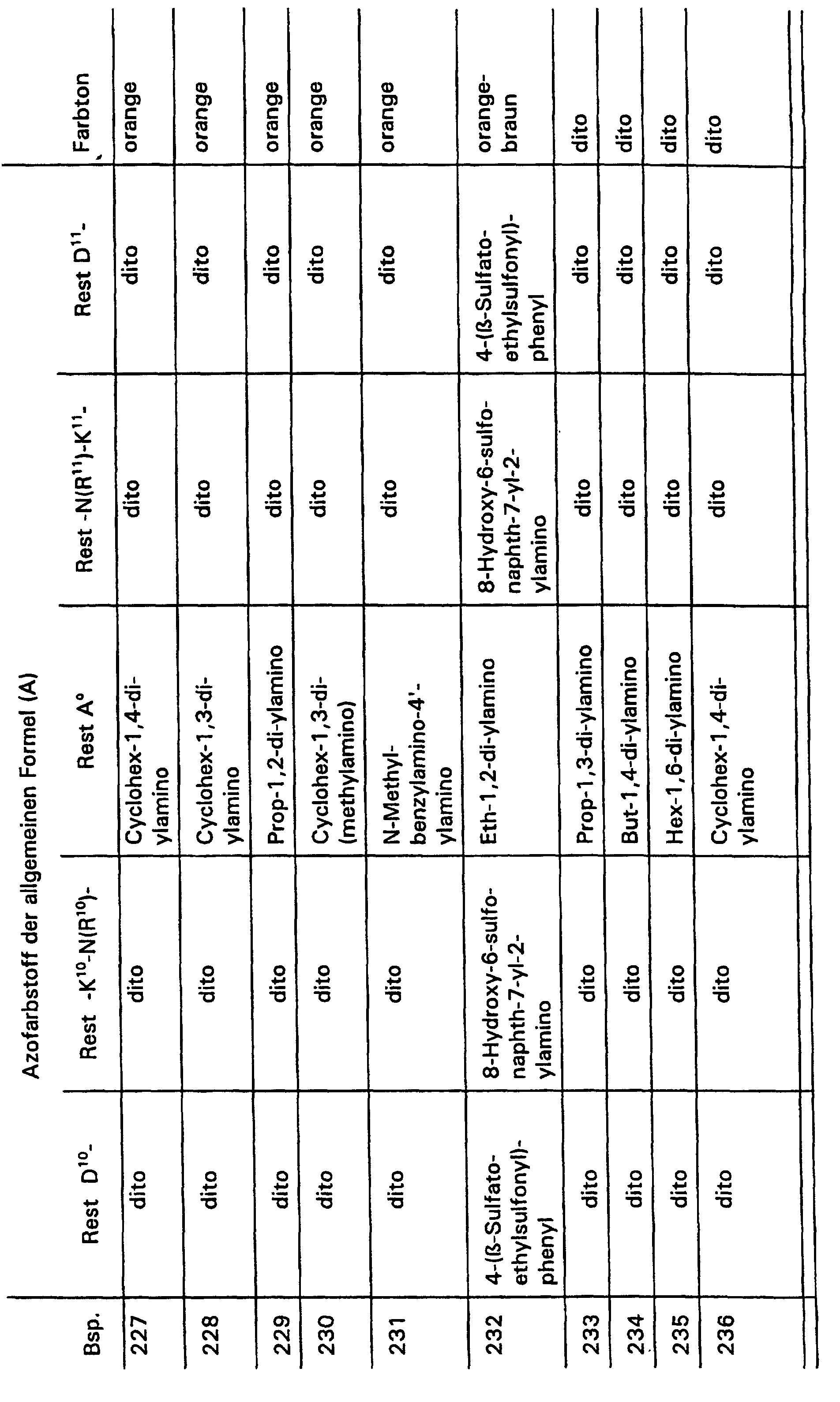

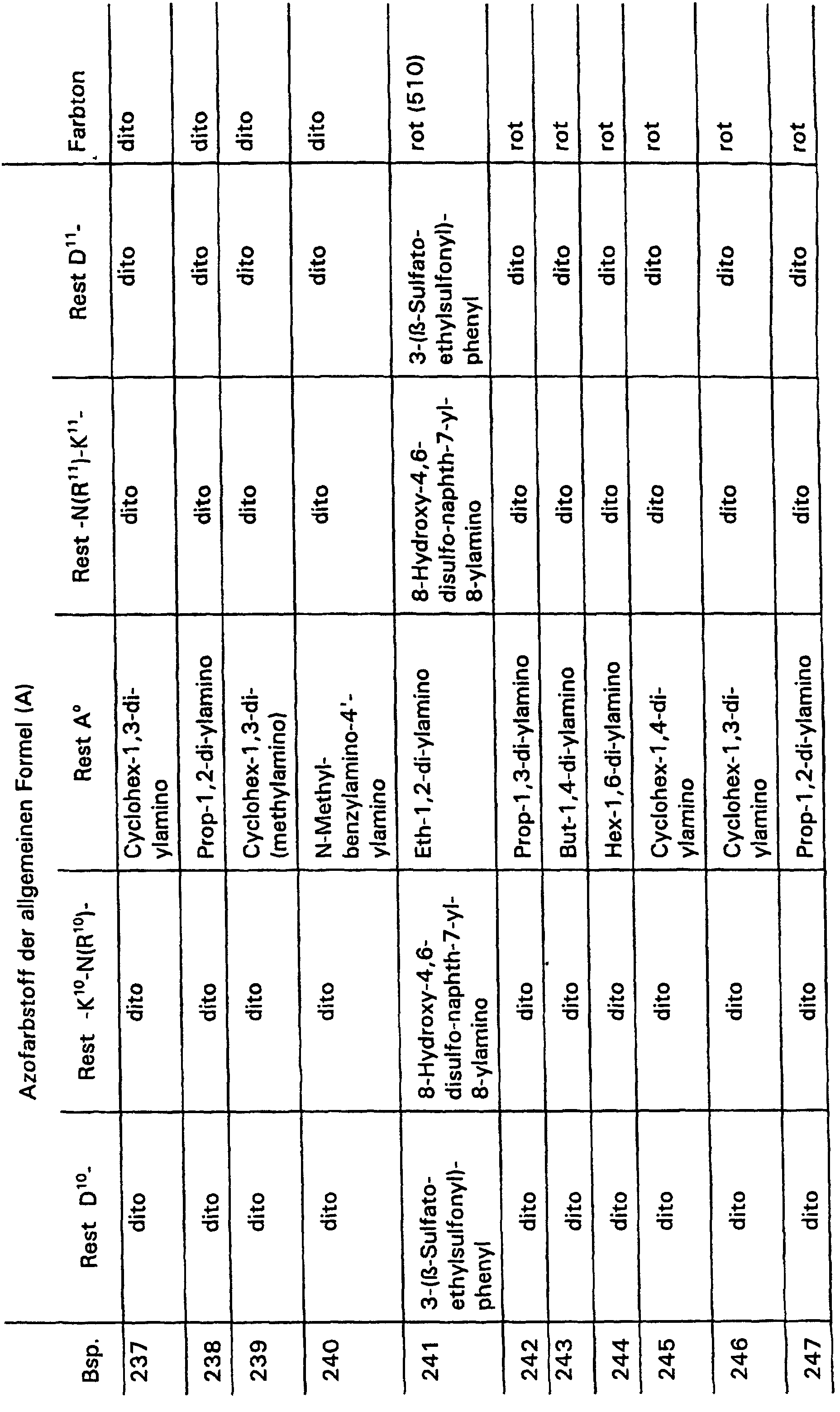

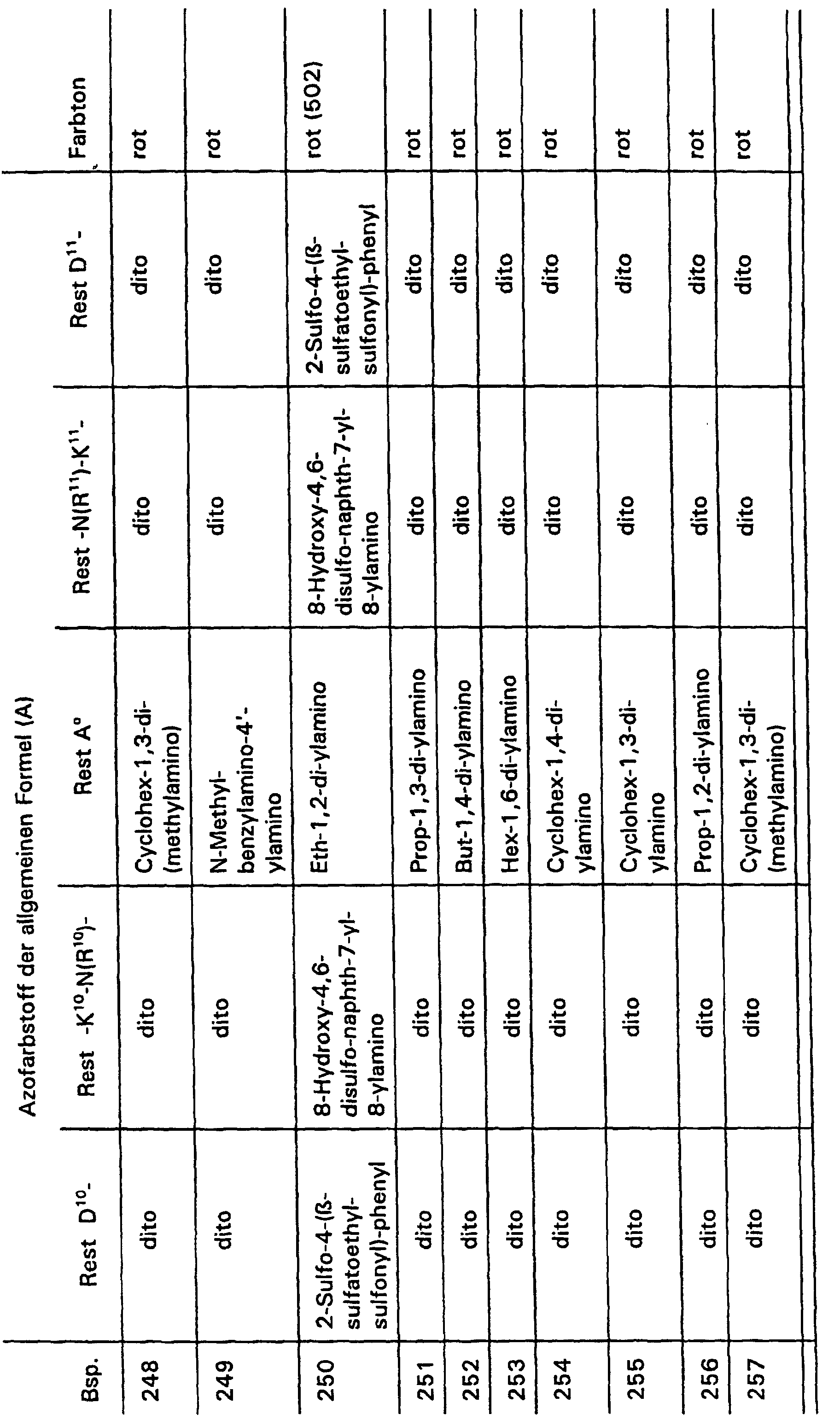

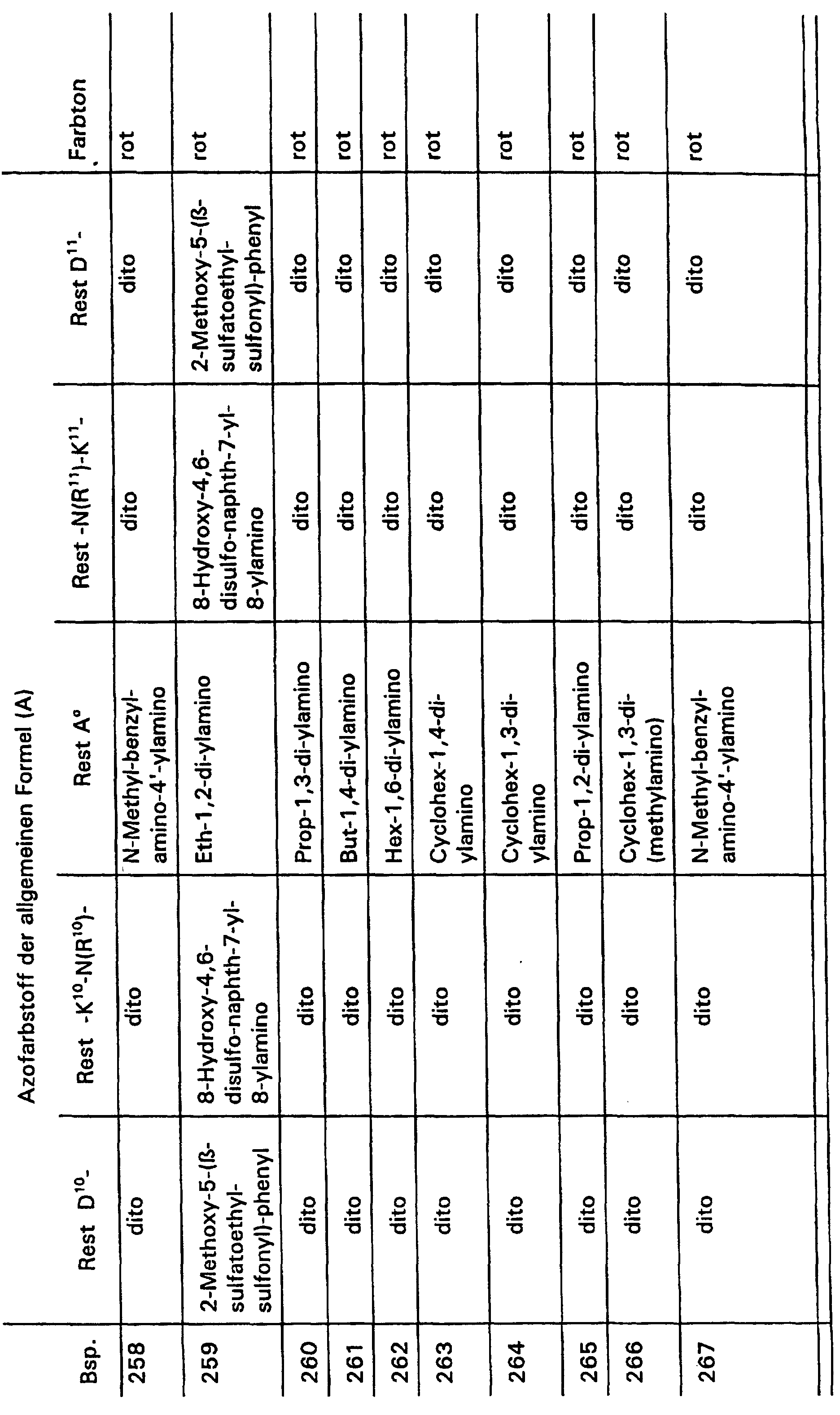

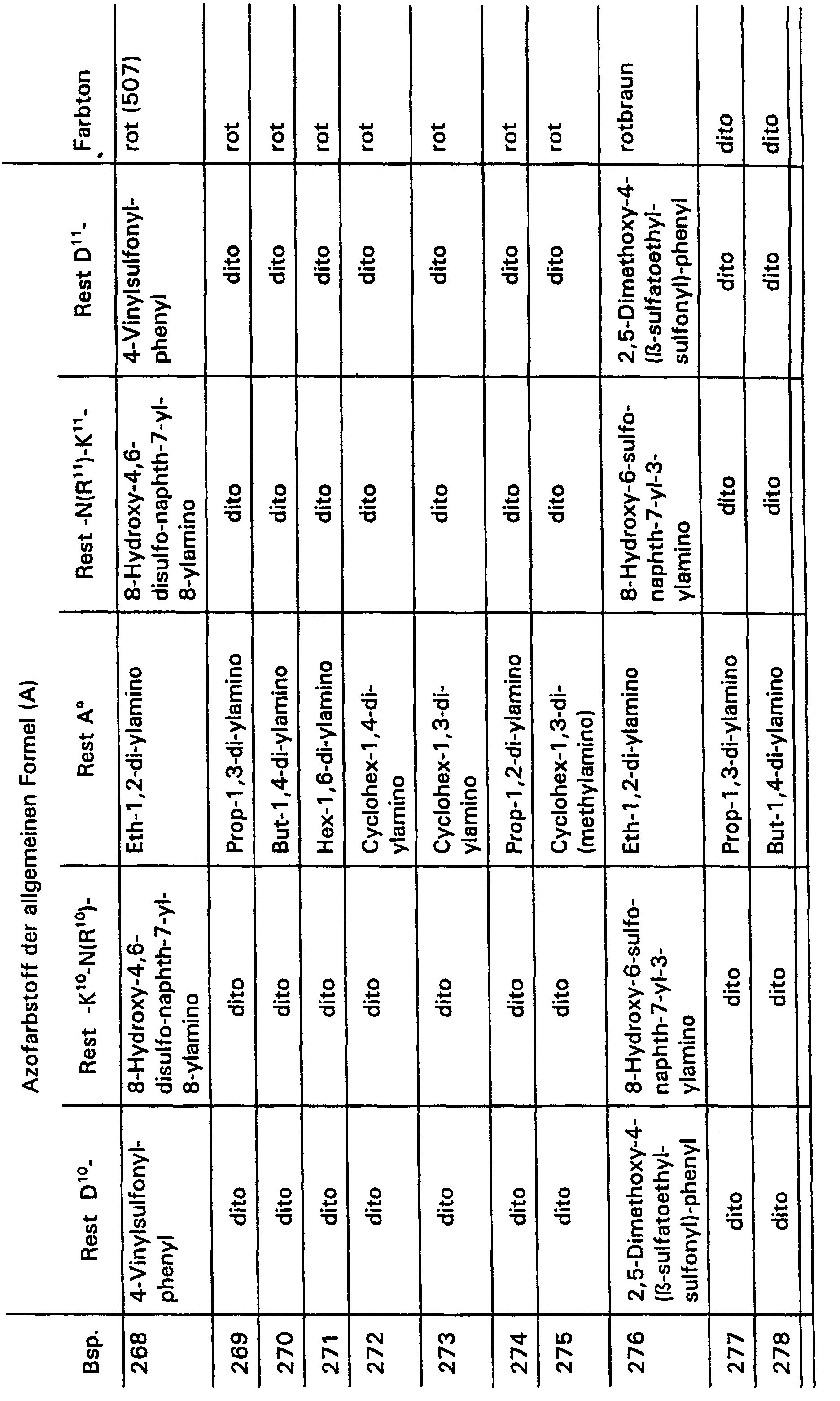

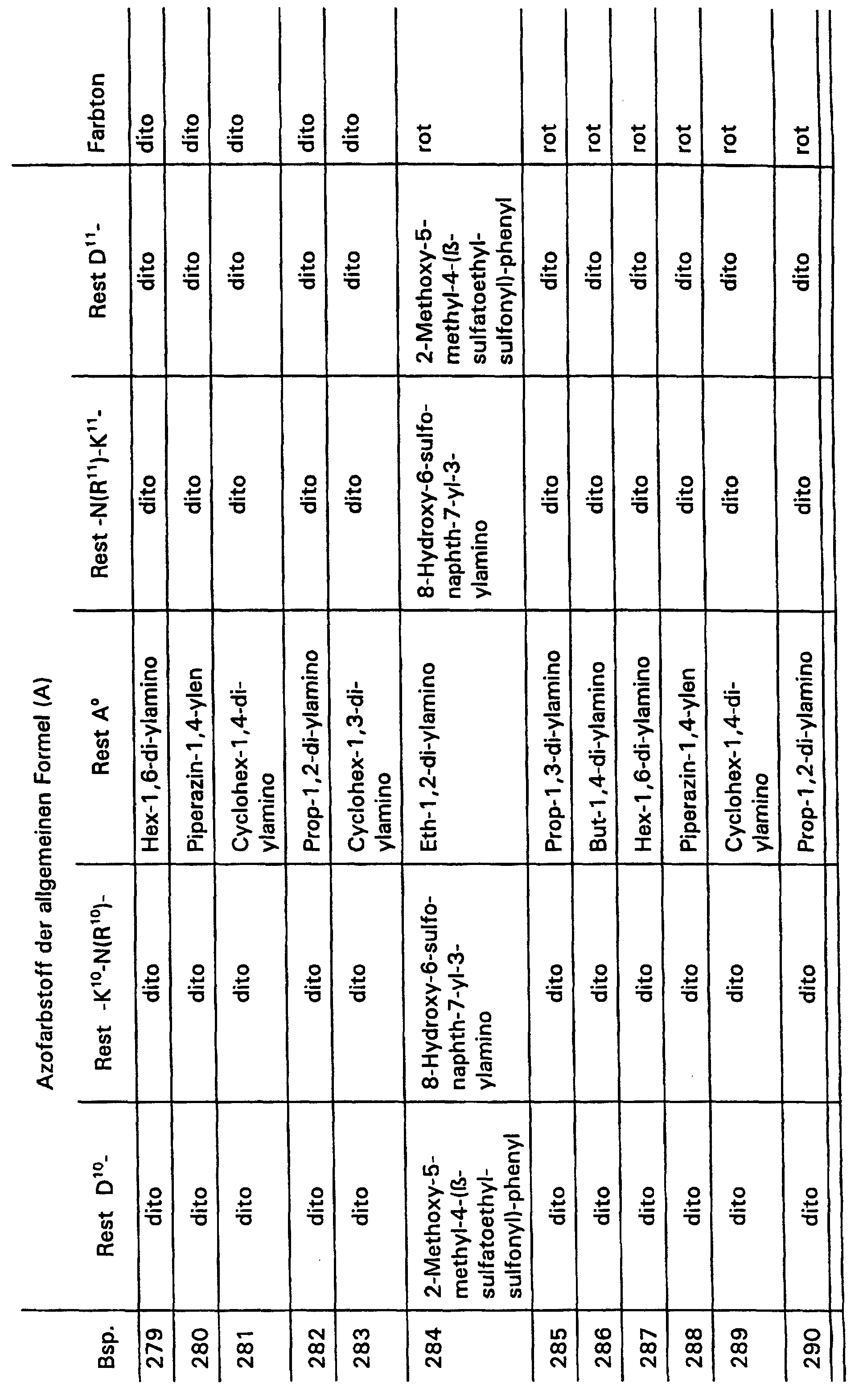

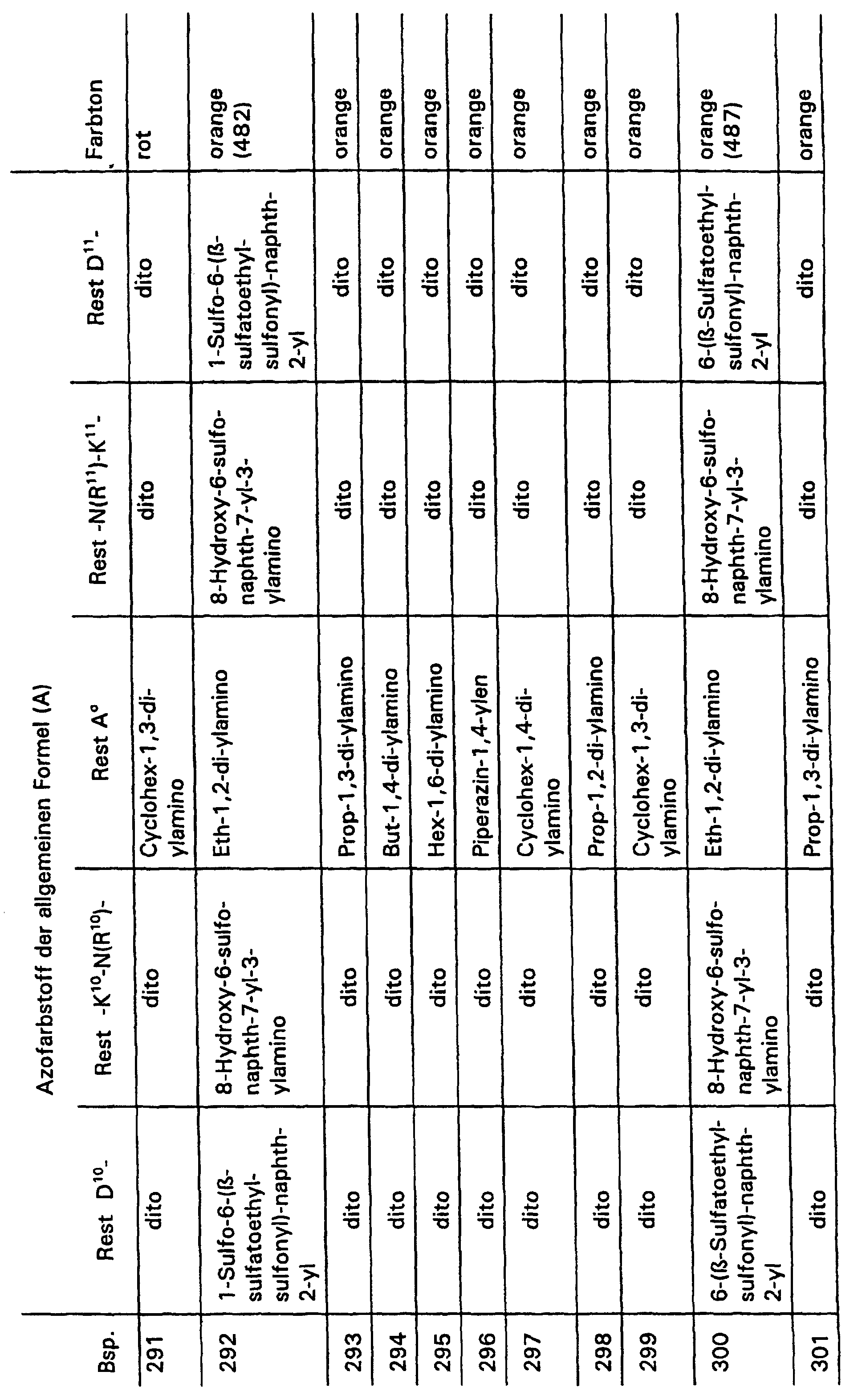

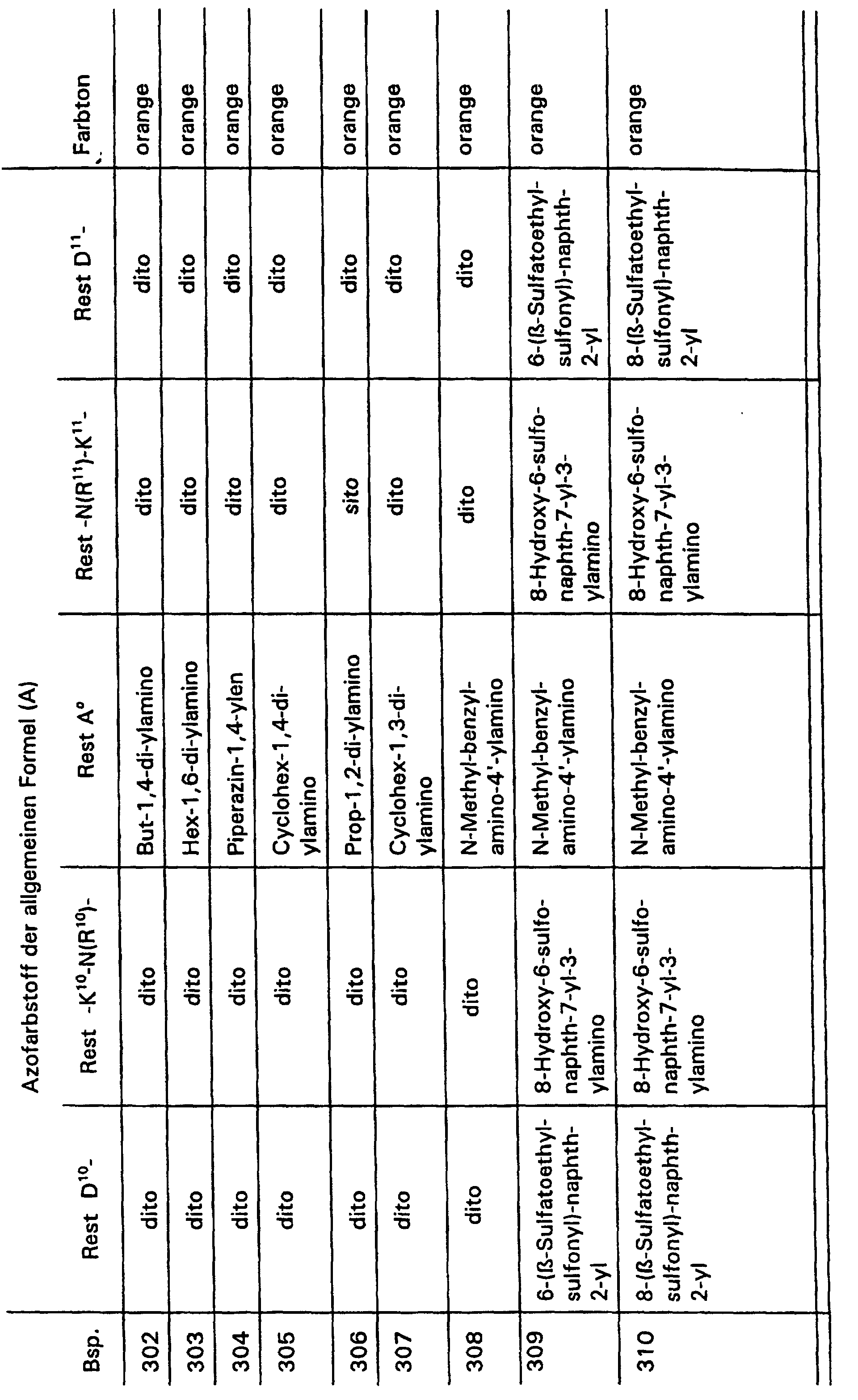

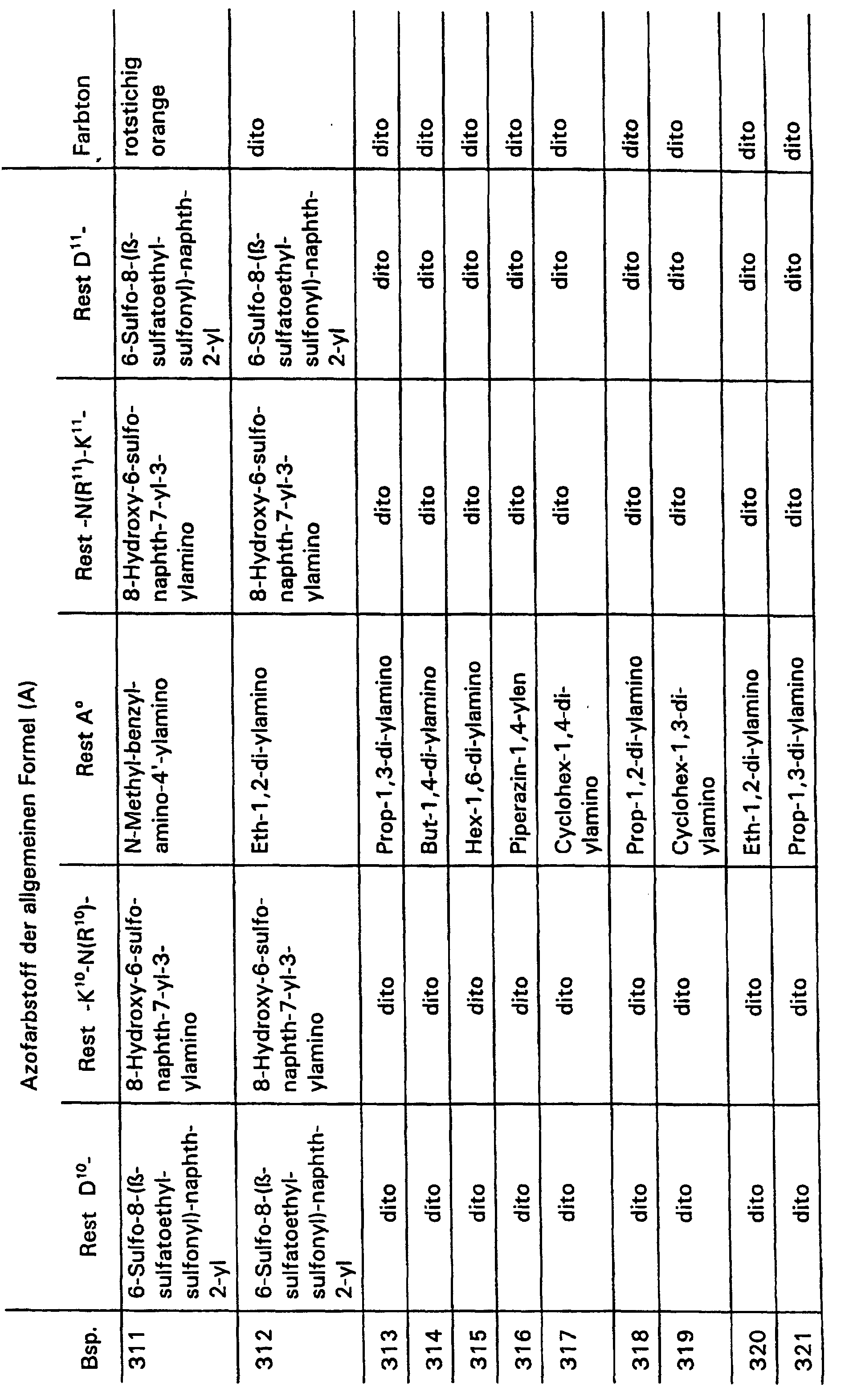

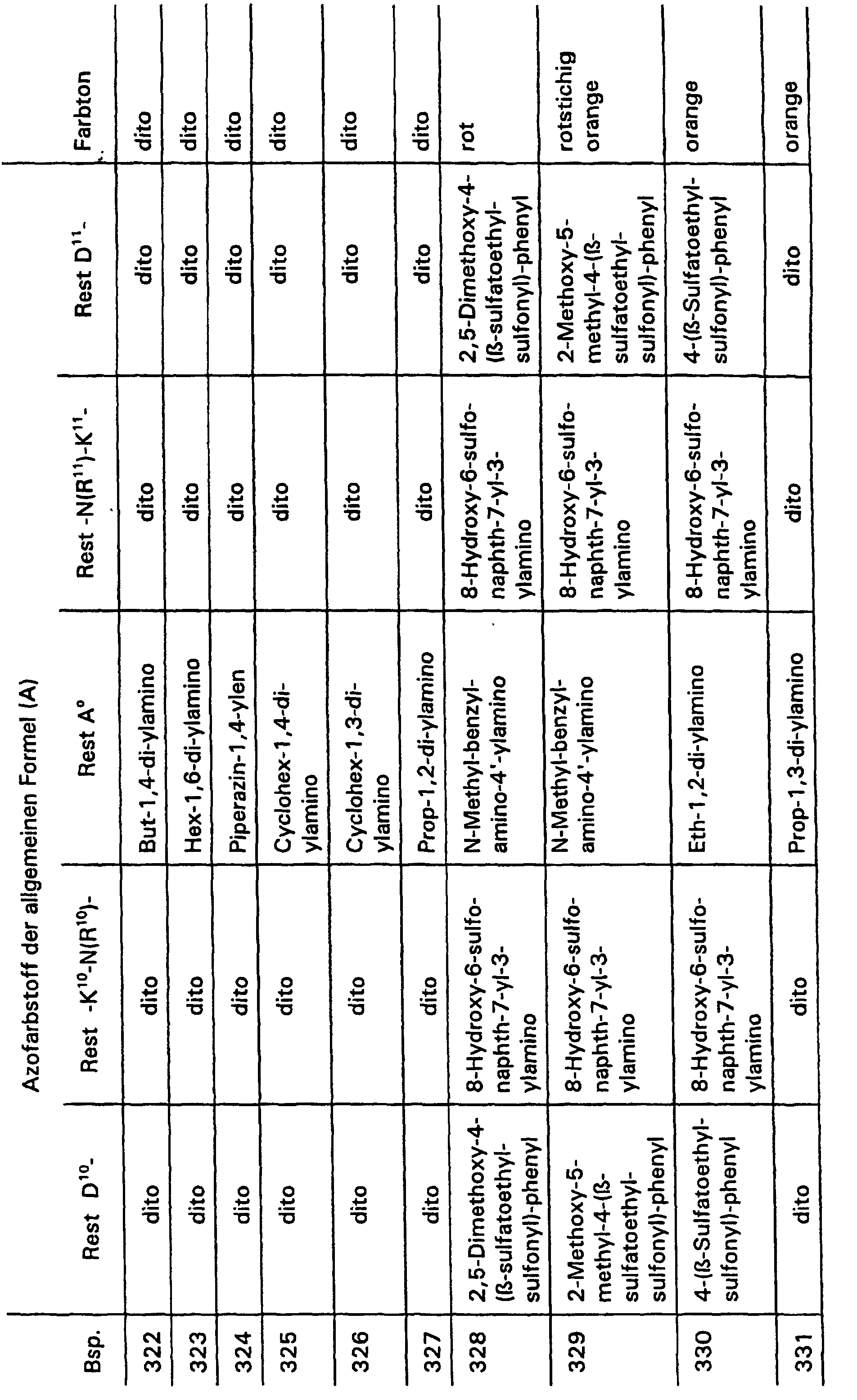

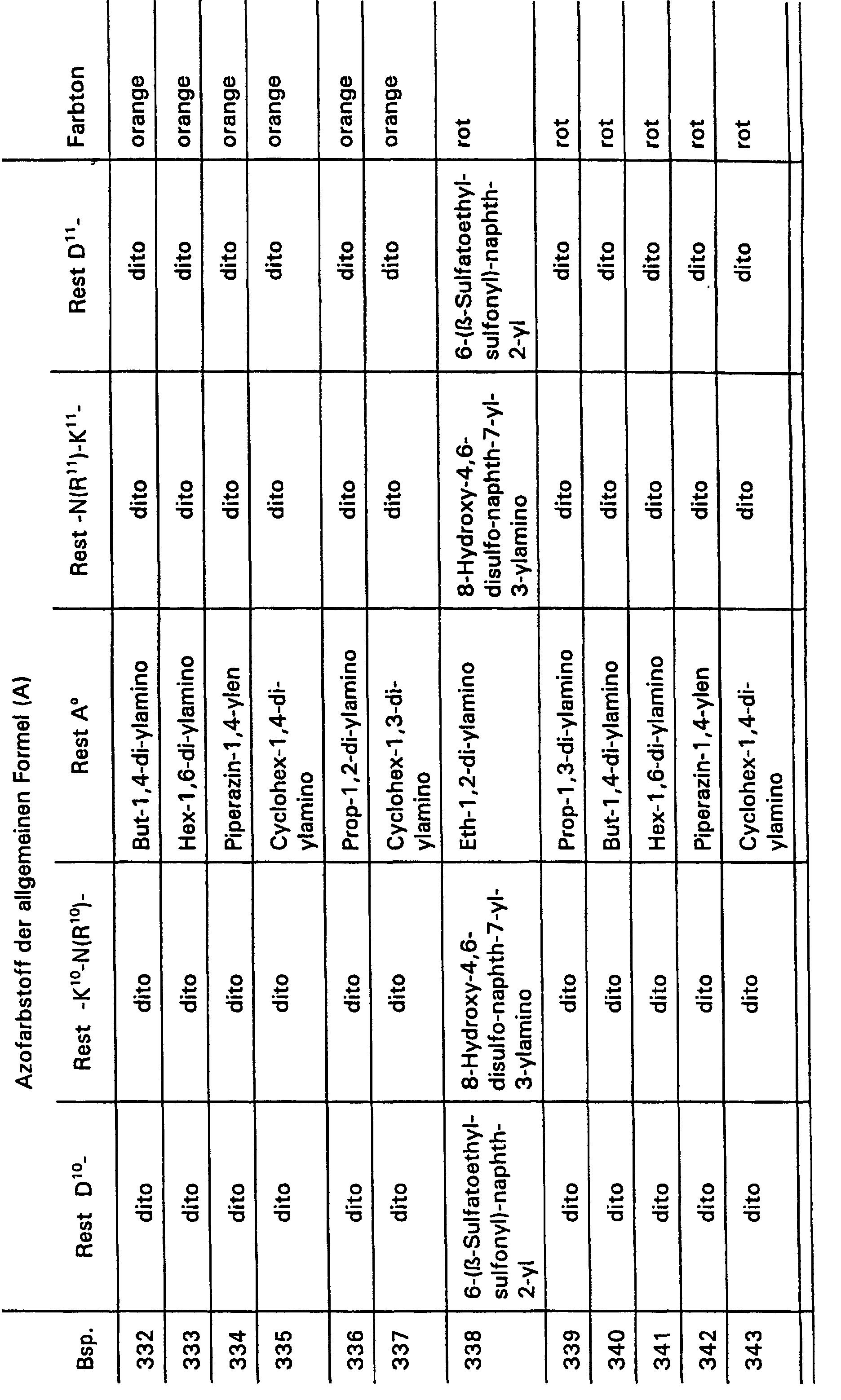

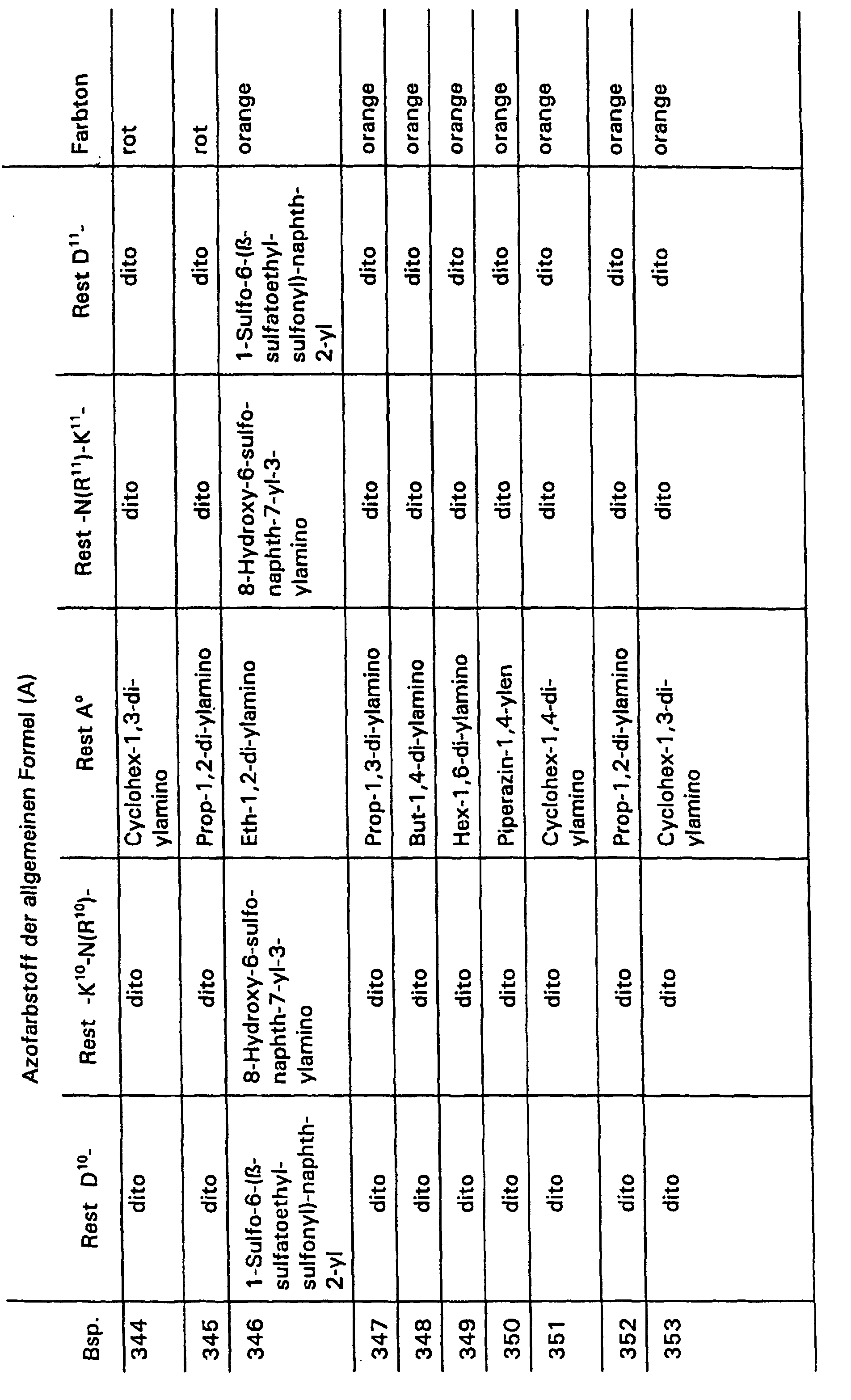

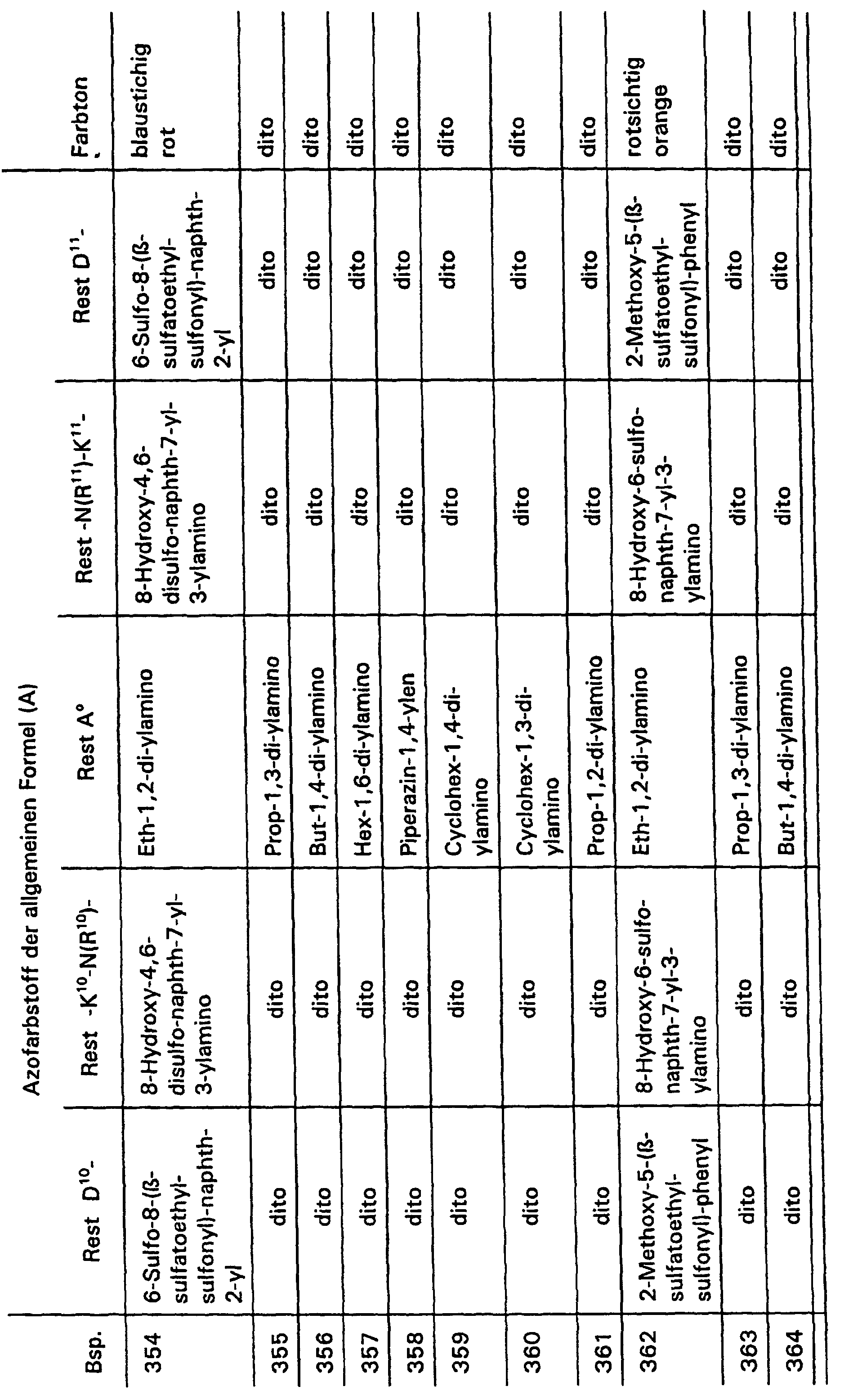

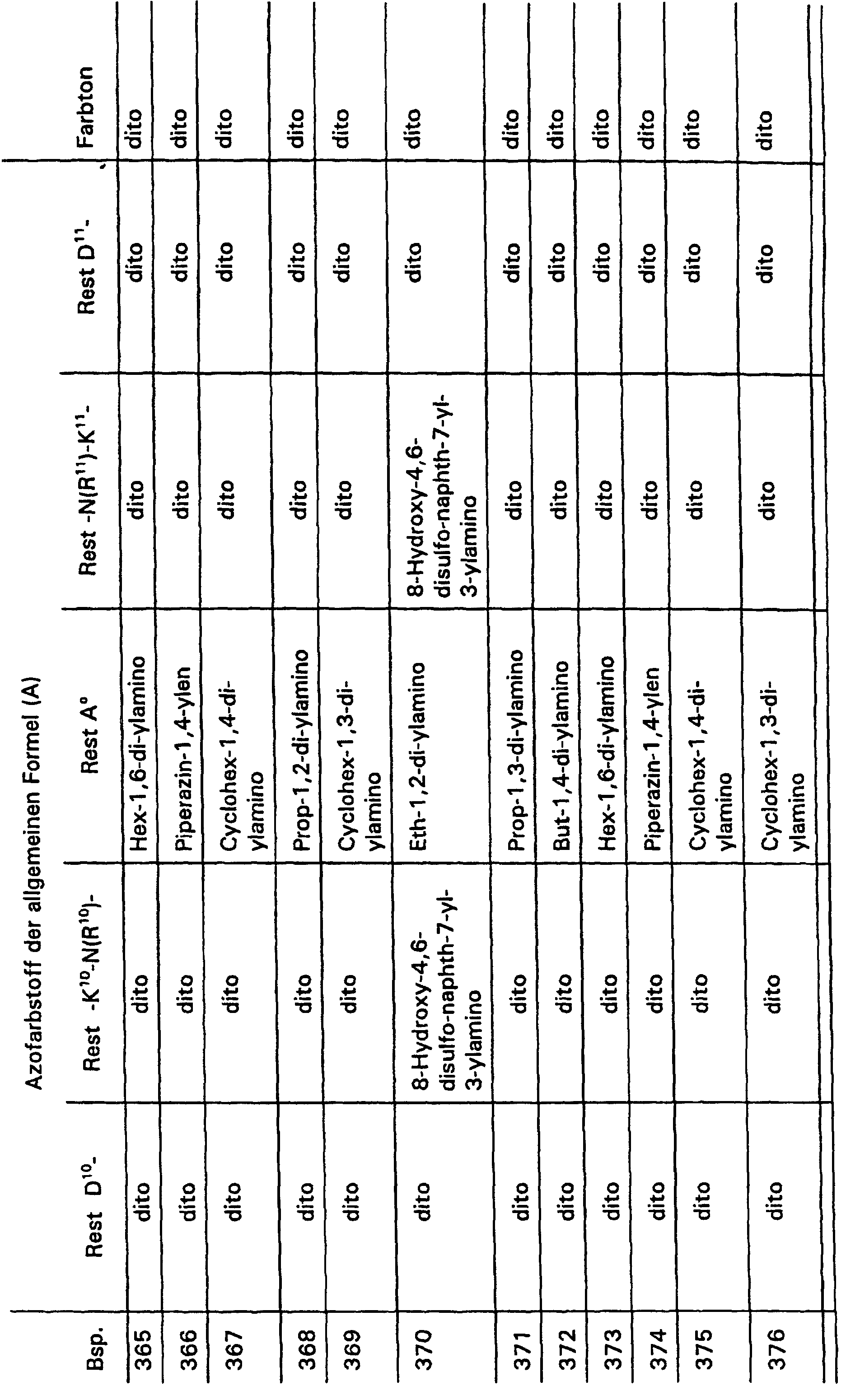

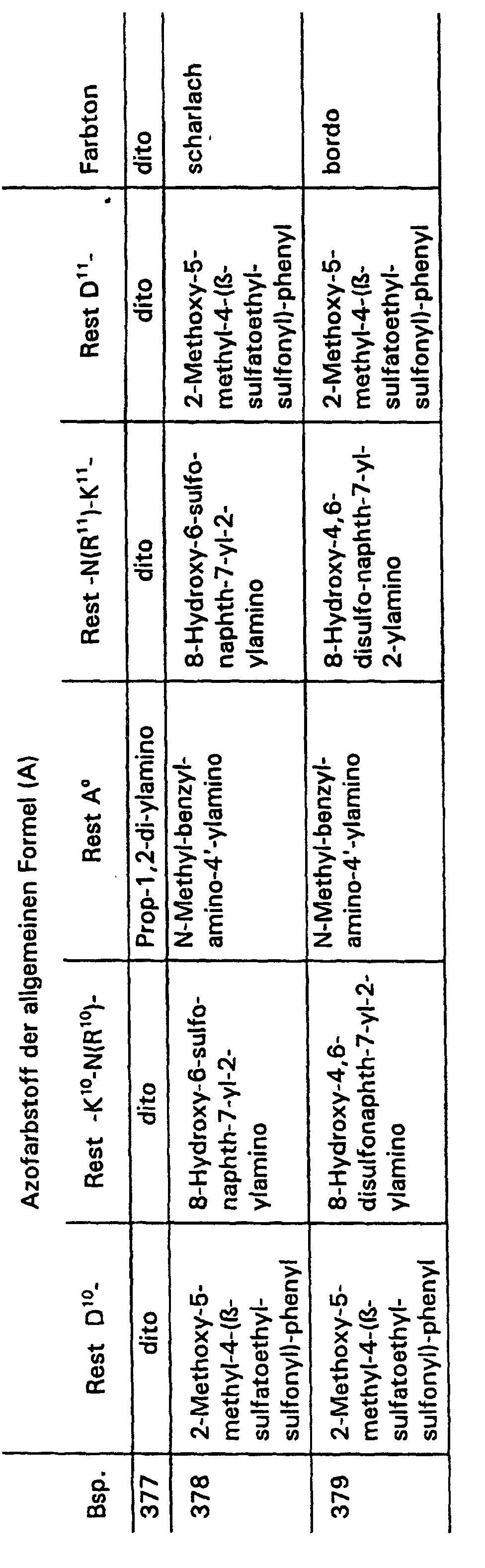

### Beispiele 380 bis 415

In den nachfolgenden Tabellenbeispielen werden weitere erfindungsgemäße Azofarbstoffe entsprechend der allgemeinen Formel (B) 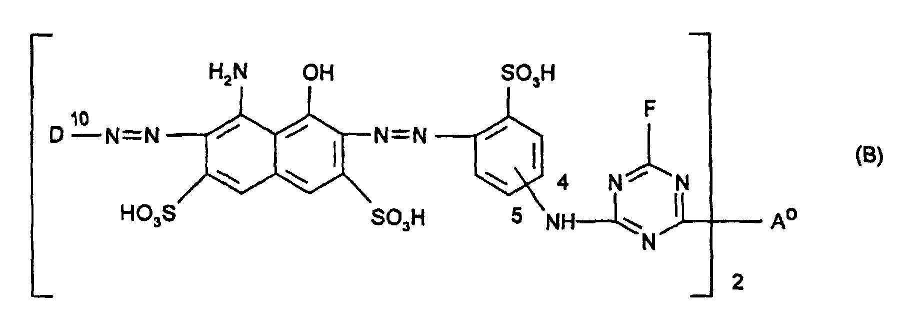 mit Hilfe der in dem jeweiligen Tabellenbeispiel angegebenen Komponenten beschrieben. Sie lassen sich in erfindungsgemäßer Weise, beispielsweise analog Ausführungsbeispiel 6, mittels der Ausgangsverbindungen, die aus den Komponenten des jeweiligen Tabellenbeispieles in Verbindung mit der allgemeinen Formel (B) ersichtlich sind (Cyanurfluorid, die Verbindungen D¹⁰-NH₂ und 2-Sulfo-4- oder -5-amino-anilin als Diazokomponenten, 1-Amino-8-hydroxy-naphthalin-3,6-disulfonsäure als Kupplungskomponente und einer Diaminoverbindung H-A°-H), herstellen. Diese erfindungsgemäßen Azofarbstoffe zeigen sehr gute faserreaktive Farbstoffeigenschaften und liefern auf den in der Beschreibung genannten Materialien, wie beispielsweise Wolle und insbesondere Cellulosefasermaterialien, farbstarke Färbungen und Drucke mit guten Echtheitseigenschaften in dem für den Farbstoff des jeweiligen Tabellenbeispiels angegebenen Farbton (hier auf Baumwolle).

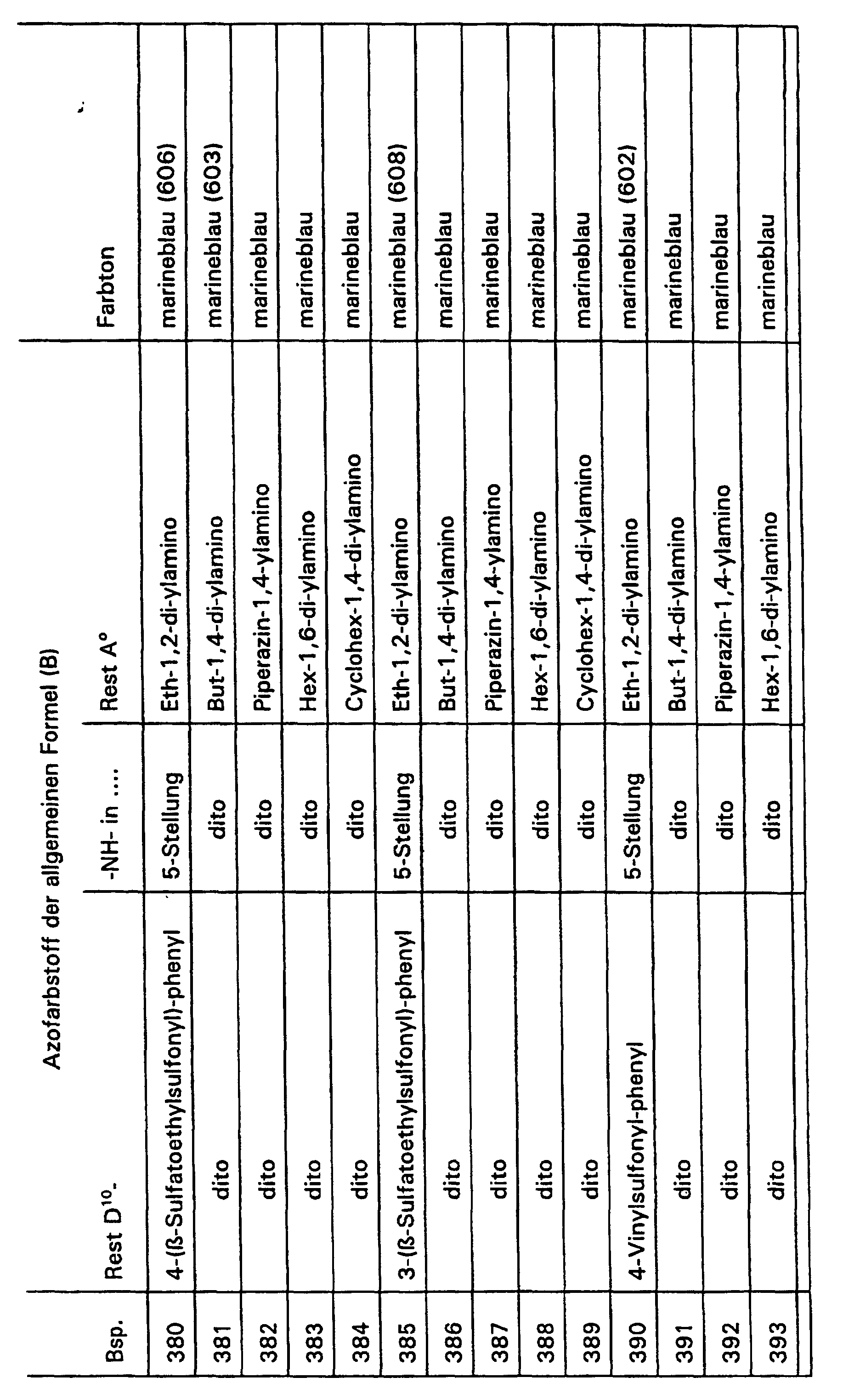

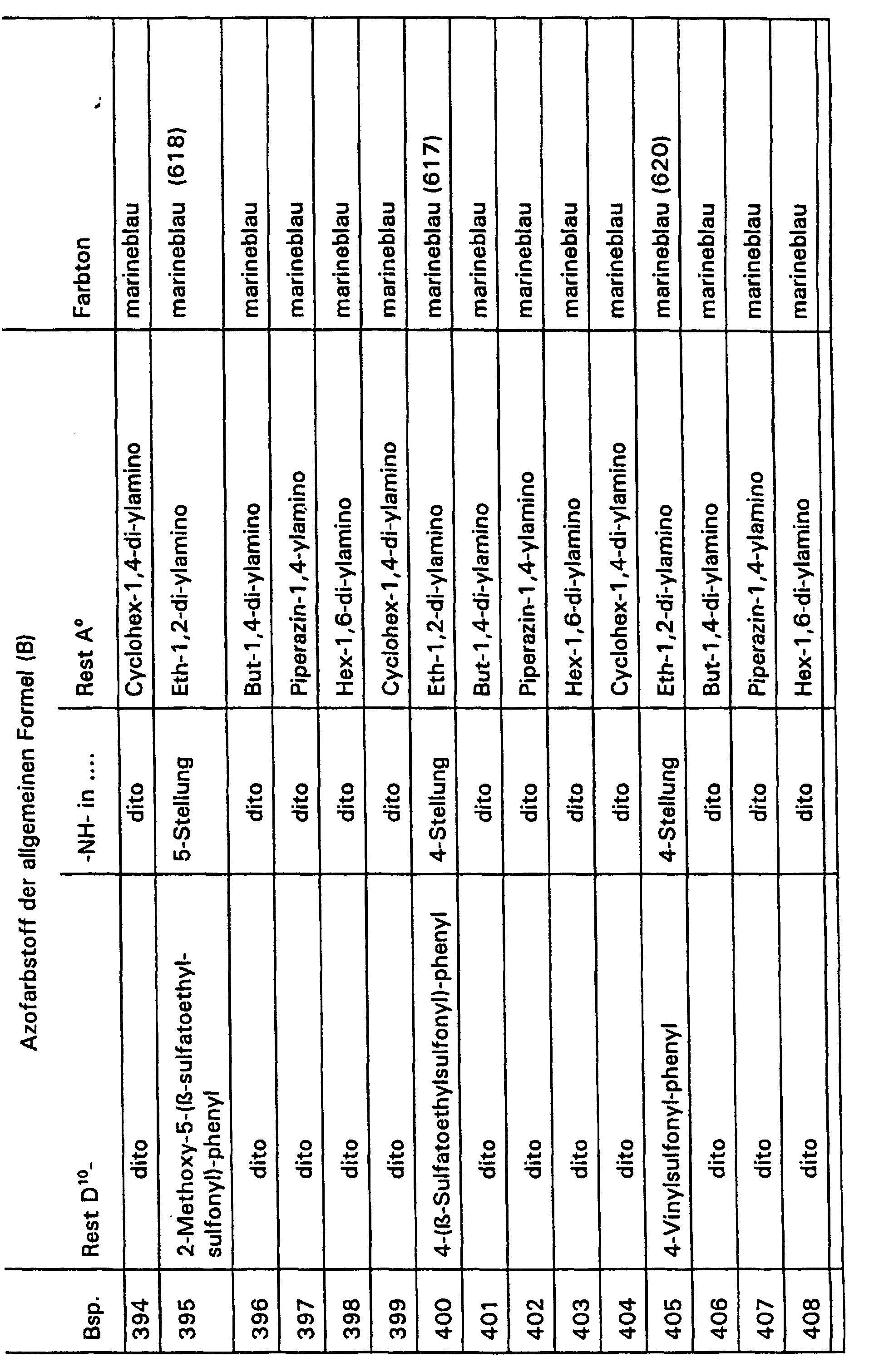

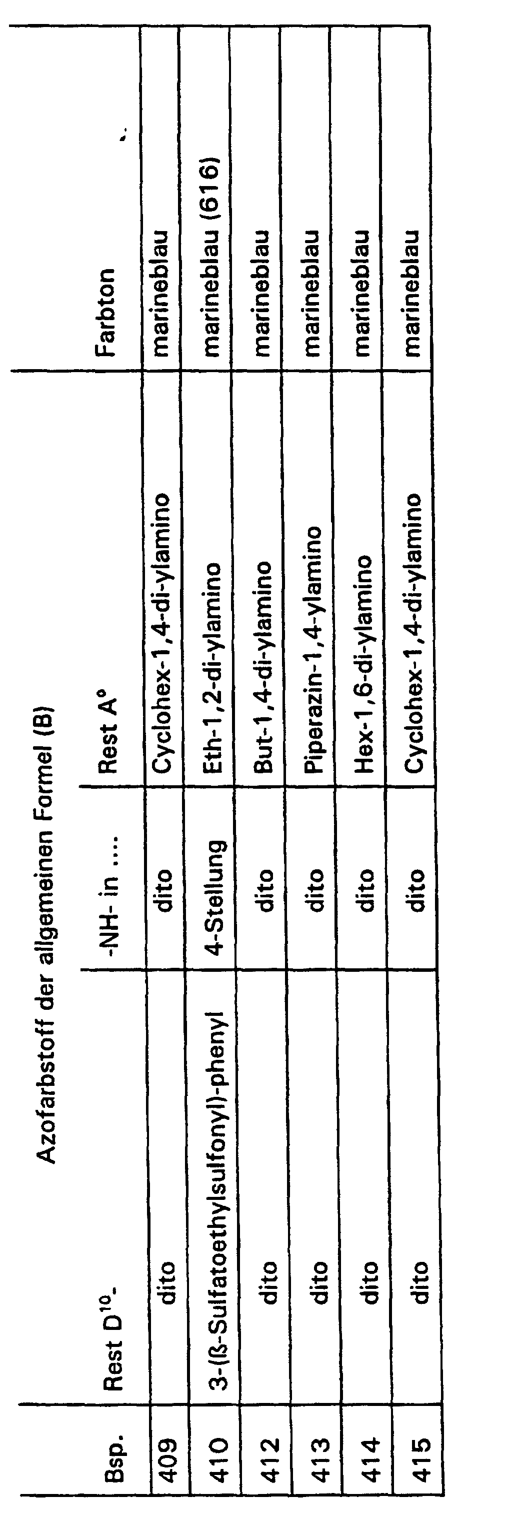

## Patentansprüche

1. Azofarbstoff entsprechend der allgemeinen Formel (1) 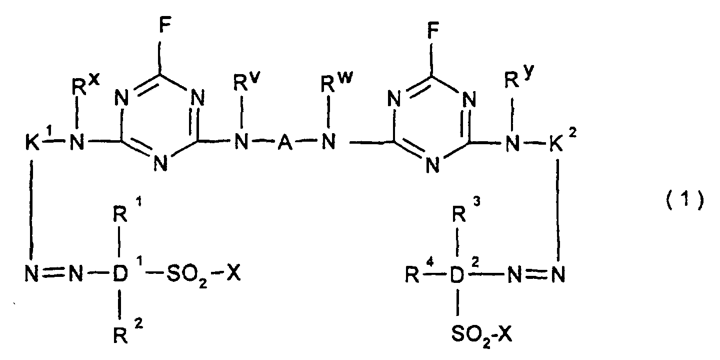 in welcher bedeuten:
D¹ ist ein Benzol- oder ein Naphthalinrest;
D² ist ein Benzol- oder ein Naphthalinrest;
R¹ ist Wasserstoff, Halogen, Alkyl von 1 bis 4 C-Atomen, Alkoxy von 1 bis 4 C-Atomen, Hydroxy, Carboxy oder Sulfo;
R² ist Wasserstoff, Halogen, Alkyl von1 bis 4 C-Atomen, Alkoxy von 1 bis 4 C-Atomen, Nitro oder Sulfo;
R³ ist Wasserstoff, Halogen, Alkyl von 1 bis 4 C-Atomen, Alkoxy von 1 bis 4 C-Atomen, Hydroxy, Carboxy oder Sulfo;
R⁴ ist Wasserstoff, Halogen, Alkyl von1 bis 4 C-Atomen, Alkoxy von 1 bis 4 C-Atomen, Nitro oder Sulfo;
X ist Vinyl, β-Sulfatoethyl, β-Thiosulfatoethyl oder β-Chlorethyl;
R^{x} ist Wasserstoff oder Alkyl von 1 bis 4 C-Atomen;
R^{y} ist Wasserstoff oder Alkyl von 1 bis 4 C-Atomen;
R^{v} ist Wasserstoff oder Alkyl von 1 bis 4 C-Atomen;
R^{w} ist Wasserstoff oder Alkyl von 1 bis 4 C-Atomen;
K¹ ist ein Rest der allgemeinen Formel (2a), (2b) oder (2c) 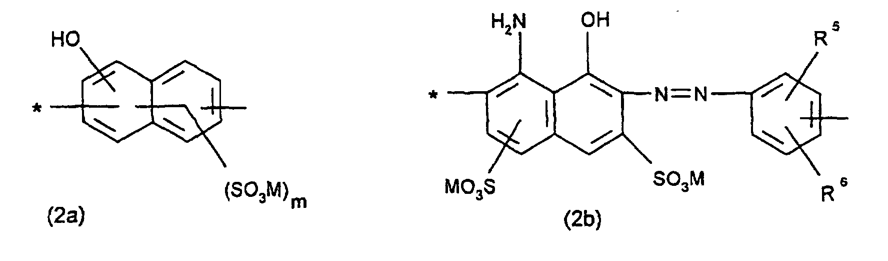 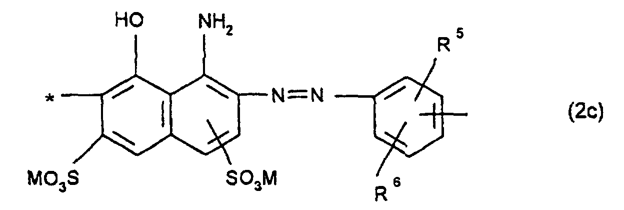 in welchen
M Wasserstoff oder ein Alkalimetall ist,
m für die Zahl Null, 1 oder 2 steht (wobei im Falle von m gleich Null diese Gruppe Wasserstoff bedeutet),
die mit * markierte Bindung an die Azogruppe gebunden ist,
R⁵ Wasserstoff oder Sulfo ist und
R⁶ Wasserstoff, Sulfo, Carboxy, Alkyl von 1 bis 4 C-Atomen, Alkoxy von 1 bis 4 C-Atomen, Chlor oder Brom ist;
K² ist ein Rest der allgemeinen Formel (3a), (3b) oder (3c) 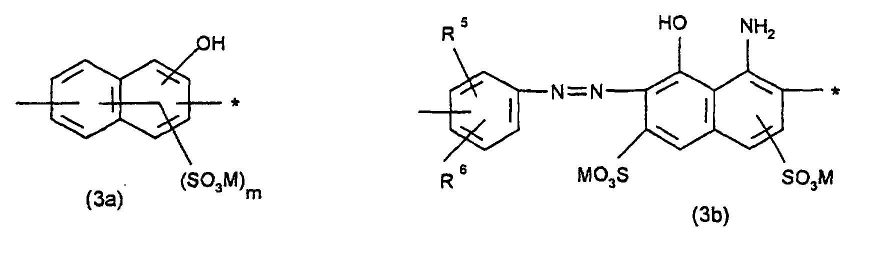 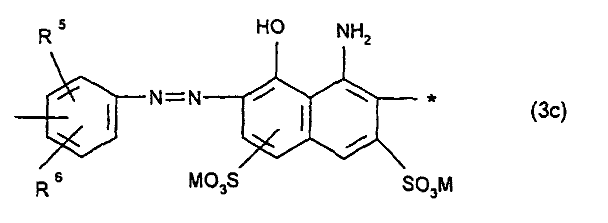 in welchen M, m, R⁵ und R⁶ die obengenannten Bedeutungen haben und die mit * markierte Bindung mit der Azogruppe verbunden ist, wobei die Hydroxygruppe und die mit * markierte Bindung zueinander in ortho-Stellung gebunden stehen und die Hydroxygruppe bevorzugt in α-Stellung des Naphthalinrestes gebunden ist;
A ist geradkettiges oder verzweigtes Alkylen von 2 bis 10 C-Atomen oder Alkylen von 4 bis 10 C-Atomen, das durch 1 oder 2 Heterogruppen unterbrochen ist, oder ist Cycloalkylen mit 5 bis 8 C-Atomen oder eine Gruppe der allgemeinen Formel alk-B, B-alk oder alk-B-alk, in welchen alk Alkylen von 2 bis 4 C-Atomen bedeutet oder Alkylen von 2 bis 10 C-Atomen ist, das durch 1 oder 2 Heterogruppen aus der Gruppe -O- und -NH- unterbrochen ist, B Phenylen ist, das durch 1 oder 2 Substituenten aus der Gruppe Sulfo, Carboxy, Methyl, Ethyl, Methoxy, Ethoxy, Chlor und Brom substituiert sein kann, oder Cycloalkylen mit 5 bis 8 C-Atomen oder der bivalente Rest eines gesättigten, zwei N-Atome enthaltenden 5- bis 8-gliedrigen Heterocyclus ist, dessen eines bzw. beide N-Atome mit den Resten alk bzw. mit alk und einem C-Atom des Triazinrestes verbunden sind, wobei im Falle von A gleich Alkylen von 2 bis 10 C-Atomen die Reste -N(R^{x})-K¹-N = N-D¹(R¹,R²)-SO₂-X und -N(R^{y})-K²-N = N-D²(R³,R⁴)-SO₂-X die gleiche Bedeutung haben, oder die Gruppe -N(R^{v})-A-N(R^{w})- stellt den bivalenten Rest eines die beiden N-Atome enthaltenden gesättigten 5- bis 8-gliedrigen Heterocyclus dar, dessen N-Atome mit einem C-Atom des Triazinrestes verbunden sind.

2. Azofarbstoff nach Anspruch 1, **dadurch gekennzeichnet, daß** die Reste K¹ und K² Reste der allgemeinen Formel (4a), (4b), (4c) oder (4d) 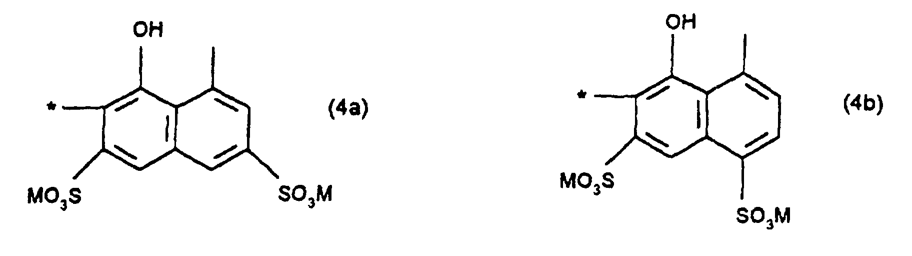 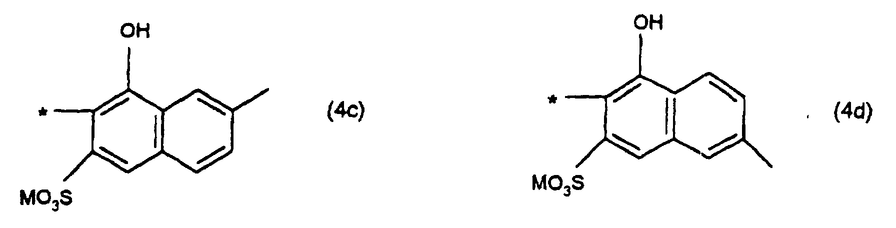 sind, in welchen M die in Anspruch 1 genannte Bedeutung hat und die mit * markierte Bindung mit der Azogruppe verbunden ist.

3. Azofarbstoff nach Anspruch 1 oder 2, **dadurch gekennzeichnet, daß** R¹ und R³, jedes unabhängig voneinander, Wasserstoff, Methyl, Methoxy, Ethoxy oder Sulfo ist, R² und R⁴ jedes, unabhängig voneinander, Wasserstoff, Methyl, Methoxy, Ethoxy oder Sulfo ist und D¹ und D² jedes einen Benzolrest bedeutet.

4. Azofarbstoff nach mindestens einem der Ansprüche 1 bis 3, **dadurch gekennzeichnet, daß** X Vinyl oder β-Sulfatoethyl ist.

5. Azofarbstoff nach mindestens einem der Ansprüche 1 bis 4, **dadurch gekennzeichnet, daß** R^{x}, R^{y}, R^{v} und R^{w} jedes Wasserstoff bedeuten.

6. Azofarbstoff nach mindestens einem der Ansprüche 1 bis 3 und 5, **dadurch gekennzeichnet, daß** die Reste X-SO₂-D¹(R¹, R²)- und X-SO₂-D²(R³,R⁴)-, jedes unabhängig voneinander, 3-(β-Sulfatoethylsulfonyl)-phenyl, 4-(β-Sulfatoethylsulfonyl)-phenyl, 2-Methoxy-5-(β-sulfatoethylsulfonyl)-phenyl, 2-Methoxy-4-(β-sulfatoethylsulfonyl)-phenyl, 2,5-Dimethoxy-4-(β-sulfatoethylsulfonyl)-phenyl, 2,4-Dimethoxy-5-(β-sulfatoethylsulfonyl)-phenyl, 2-Methoxy-5-methyl-4-(β-sulfatoethylsulfonyl)-phenyl oder 1-Sulfo-6-(β-sulfatoethylsulfonyl)-naphth-2-yl bedeuten.

7. Azofarbstoff nach mindestens einem der Ansprüche 1 bis 6, **dadurch gekennzeichnet, daß** der Rest -N(R^{v})-A-N(R^{w})- Piperazin-1,4-ylen ist.

8. Azofarbstoff nach mindestens einem der Ansprüche 1 bis 6, **dadurch gekennzeichnet, daß** A 1,2-Ethylen, 1,3-Propylen oder 1,6-Hexylen bedeutet.

9. Verfahren zur Herstellung eines in Anspruch 1 genannten und definierten Azofarbstoffes der allgemeinen Formel (1), **dadurch gekennzeichnet, daß** man in äquivalenter Menge die Diazoniumverbindungen der Amine der allgemeinen Formeln (5a) und (5b) 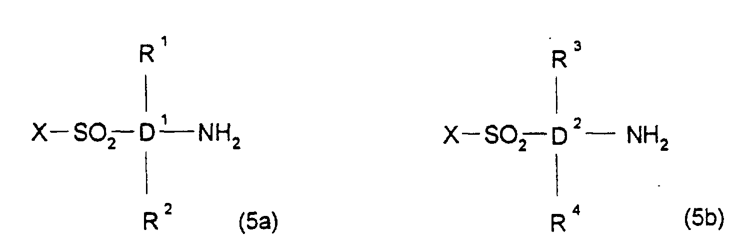 in welchen D¹, D², R¹, R², R³, R⁴ und X die in Anspruch 1 genannten Bedeutungen haben, mit einer Verbindung der allgemeinen Formel (6) 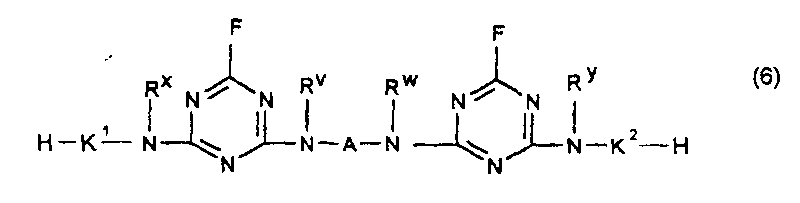 in welcher R^{x}, R^{v}, R^{w}, R^{y} und A die in Anspruch 1 genannten Bedeutungen haben, K¹ einen Rest der Formel (2a) oder (2b) bedeutet und K² einen Rest der allgemeinen Formel (3a) oder (3b) darstellt, miteinander umsetzt,
oder daß man in äquivalenter Menge die Azoverbindungen der allgemeinen Formeln (7a) und (7b) 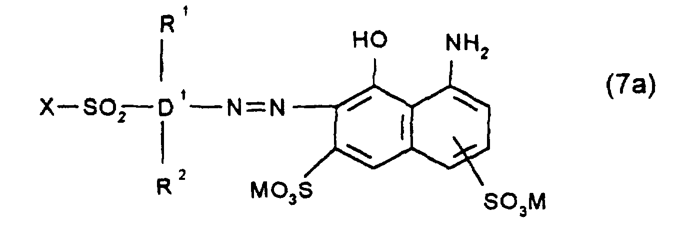 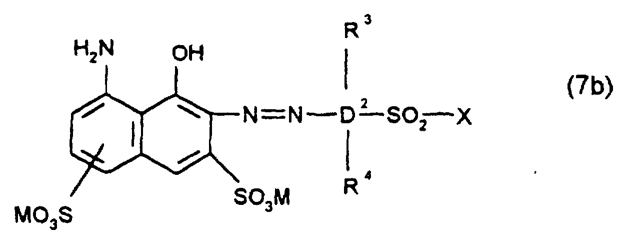 in welchen D¹, D², R¹, R², R³, R⁴, X und M die in Anspruch 1 genannten Bedeutungen haben, mit einem tetrazotiertem Diamin der allgemeinen Formel (8) 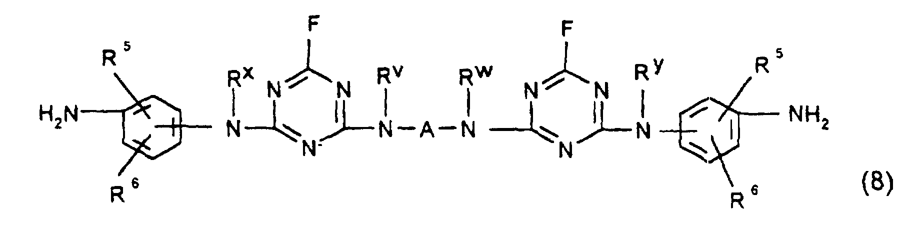 in welchen R⁵, R⁶, R^{x}, R^{y}, R^{v}, R^{w} und A die in Anspruch 1 genannten Bedeutungen haben, kuppelt,
oder daß man in äquivalenter Menge Azoverbindungen der allgemeinen Formeln (9a) und (9b) 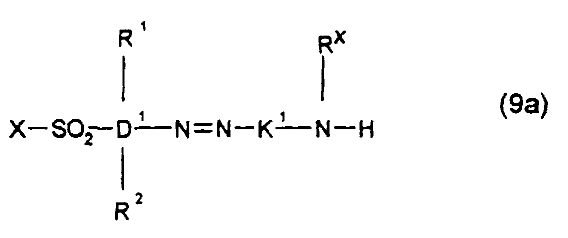 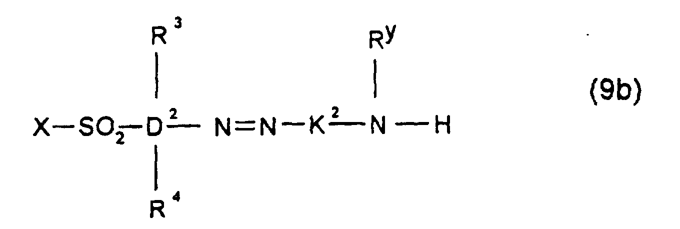 in welchen D¹, D², R¹, R², R³, R⁴, X, K¹, K², R^{x} und R^{y} die in Anspruch 1 genannten Bedeutungen haben, mit einer Verbindung der allgemeinen Formel (10) 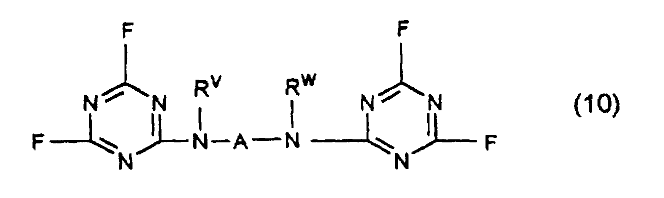 in welcher R^{v}, R^{w} und A die in Anspruch 1 genannten Bedeutungen haben, miteinander umsetzt,
oder daß man in äquivalenter Menge Azoverbindungen der allgemeinen Formeln (11a) und (11b) 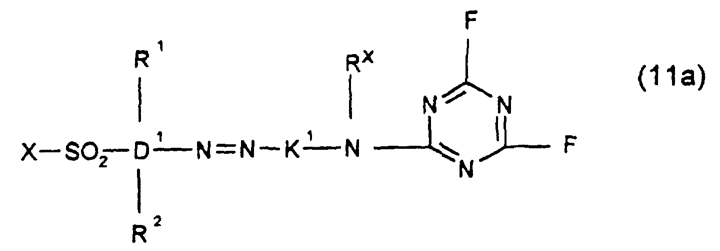 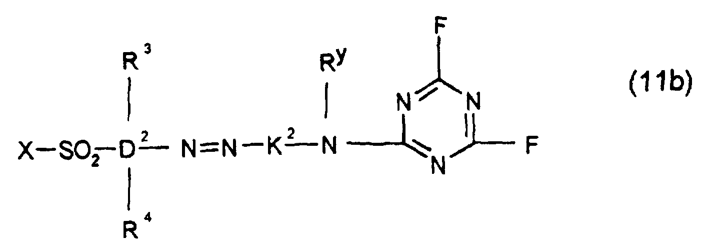 in welchen D¹, D², R¹, R², R³, R⁴, X, K¹, K², R^{x} und R^{y} die in Anspruch 1 genannten Bedeutungen haben, mit einer Diaminoverbindung der allgemeinen Formel (12) 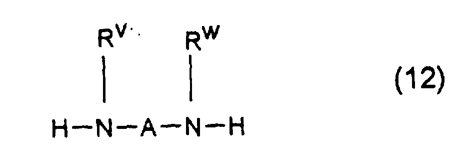 in welcher R^{v}, R^{w} und A die in Anspruch 1 genannten Bedeutungen haben, umsetzt.

10. Verwendung eines Farbstoffes von Anspruch 1 oder eines nach Anspruch 9 hergestellten Farbstoffes zum Färben von hydroxy- und/oder carbonamidgruppenhaltigem Material, insbesondere Fasermaterial.

11. Verfahren zum Färben von hydroxy- und/oder carbonamidgruppenhaltigem Material, insbesondere Fasermaterial, bei welchem man einen Farbstoff auf das Material aufbringt und den Farbstoff auf dem Material mittels Wärme oder mit Hilfe eines alkalisch wirkenden Mittels oder mittels beider Maßnahmen fixiert, **dadurch gekennzeichnet, daß** man als Farbstoff einen Farbstoff von Anspruch 1 oder einen nach Anspruch 9 hergestellten Farbstoff einsetzt.

## Claims

1. An azo dyestuff corresponding to the formula (1) 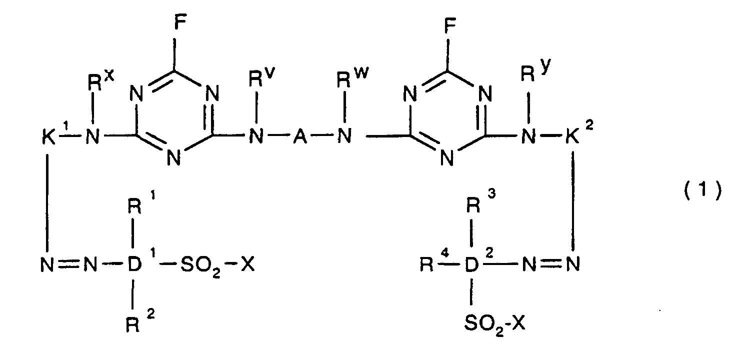 in which:
D¹ is a benzene or a naphthalene radical;
D² is a benzene or a naphthalene radical;
R¹ is hydrogen, halogen, alkyl having 1 to 4 carbon atoms, alkoxy having 1 to 4 carbon atoms, hydroxyl, carboxyl or sulfo;
R² is hydrogen, halogen, alkyl having 1 to 4 carbon atoms, alkoxy having 1 to 4 carbon atoms, nitro or sulfo;
R³ is hydrogen, halogen, alkyl having 1 to 4 carbon atoms, alkoxy having 1 to 4 carbon atoms, hydroxyl, carboxyl or sulfo;
R⁴ is hydrogen, halogen, alkyl having 1 to 4 carbon atoms, alkoxy having 1 to 4 carbon atoms, nitro or sulfo;
X is vinyl, β-sulfatoethyl, β-thiosulfatoethyl or β-chloroethyl;
R^{x} is hydrogen or alkyl having 1 to 4 carbon atoms;
R^{y} is hydrogen or alkyl having 1 to 4 carbon atoms;
R^{v} is hydrogen or alkyl having 1 to 4 carbon atoms;
R^{w} is hydrogen or alkyl having 1 to 4 carbon atoms;
K¹ is a radical of the formula (2a), (2b) or (2c) 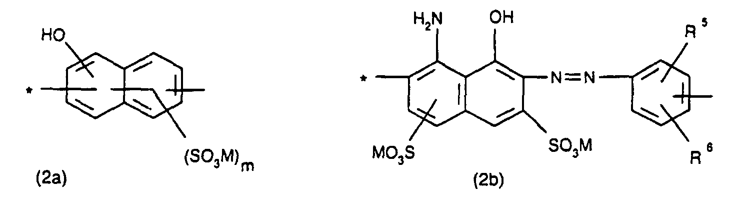 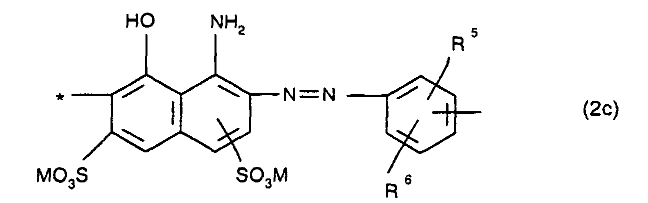 in which
M is hydrogen or an alkali metal,
m is the number zero, 1 or 2 (where, if m is zero, this group is hydrogen),
the bond marked with * is bonded to the azo group,
R⁵ is hydrogen or sulfo and
R⁶ is hydrogen, sulfo, carboxyl, alkyl having 1 to 4 carbon atoms, alkoxy having 1 to 4 carbon atoms, chlorine or bromine;
K² is a radical of the formula (3a), (3b) or (3c) 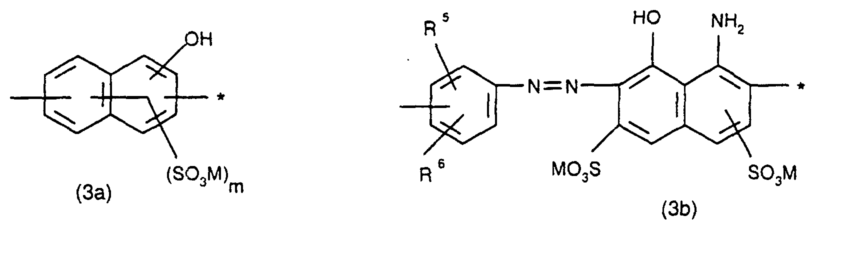 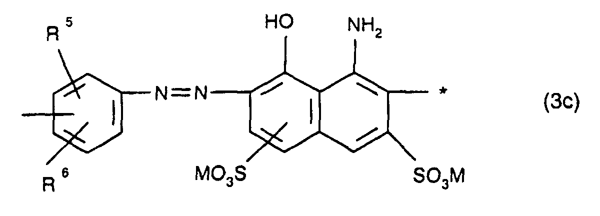 in which M, m, R⁵ and R⁶ have the abovementioned meanings and the bond marked with * is bonded to the azo group, where the hydroxyl group and the bond marked with * are bonded in the ortho-position relative to one another and the hydroxyl group is preferably bonded in the α-position of the naphthalene radical;
A is straight-chain or branched alkylene having 2 to 10 carbon atoms or alkylene having 4 to 10 carbon atoms, which is interrupted by 1 or 2 hetero groups, or is cycloalkylene having 5 to 8 carbon atoms or a group of the formula alk-B, B-alk or alk-B-alk, in which alk is alkylene having 2 to 4 carbon atoms or alkylene having 2 to 10 carbon atoms, which is interrupted by 1 or 2 hetero groups from the group consisting of -O- and -NH-, B is phenylene, which can be substituted by 1 or 2 substituents from the group consisting of sulfo, carboxyl, methyl, ethyl, methoxy, ethoxy, chlorine and bromine, or cycloalkylene having 5 to 8 carbon atoms or the bivalent radical of a saturated 5- to 8-membered heterocyclic radical containing two N atoms, one or both N atoms of which are bonded to the alk radicals or to alk and a carbon atom of the triazine radical, where if A is alkylene having 2 to 10 carbon atoms, the radicals -N(R^{x})-K¹-N=N-D¹(R¹,R²)-SO₂-X and -N (R^{y})-K²-N=N-D²(R³,R⁴)-SO₂-X have the same meaning, or the group -N(R^{v})-A-N(R^{w})- is the bivalent radical of a saturated 5- to 8-membered heterocyclic radical containing the two N atoms, the N atoms of which are bonded to a carbon atom of the triazine radical.

2. An azo dyestuff as claimed in claim 1, in which the radicals K¹ and K² are radicals of the formula (4a), (4b), (4c) or (4d) 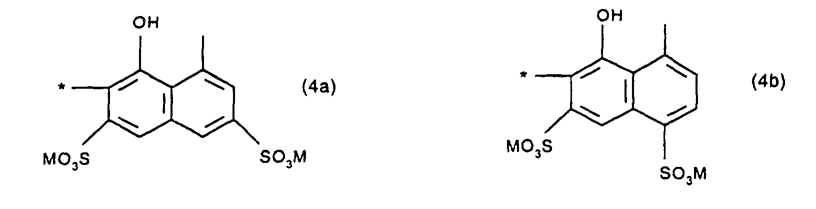 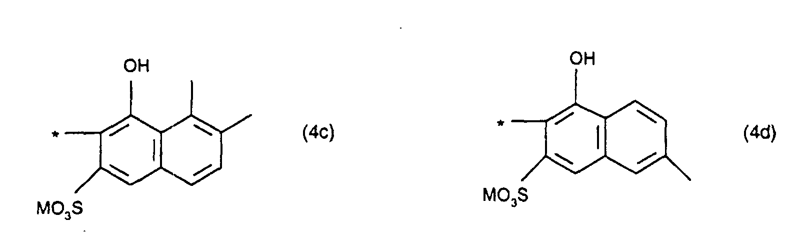 in which M has the meaning given in claim 1 and the bond marked with * is bonded to the azo group.

3. An azo dyestuff as claimed in claim 1 or 2, in which R¹ and R³, each independently of one another, are hydrogen, methyl, methoxy, ethoxy or sulfo, R² and R⁴ are each, independently of one another, hydrogen, methyl, methoxy, ethoxy or sulfo and D¹ and D² are each a benzene radical.

4. An azo dyestuff as claimed in at least one of claims 1 to 3, in which X is vinyl or β-sulfatoethyl.

5. An azo dyestuff as claimed in at least one of claims 1 to 4, in which R^{x}, R^{y}, R^{v} and R^{w} are each hydrogen.

6. An azo dyestuff as claimed in at least one of claims 1 to 3 and 5, in which the radicals X-SO₂-D¹(R¹, R²) - and X-SO₂-D² (R³, R⁴) -, each independently of one another, are 3 - (β-sulfatoethylsulfonyl)phenyl, 4-(β-sulfatoethylsulfonyl)phenyl, 2-methoxy-5-(β-sulfatoethyl- sulfonyl)phenyl, 2-methoxy-4-(β-sulfatoethylsulfonyl)-phenyl, 2,5-dimethoxy-4-(β-sulfatoethylsulfonyl)phenyl, 2,4-dimethoxy-5-(β-sulfatoethylsulfonyl)phenyl, 2-methoxy-5-methyl-4-(β-sulfato- ethylsulfonyl)phenyl or 1-sulfo-6-(β-sulfatoethylsulfonyl)-naphth-2-yl.

7. An azo dyestuff as claimed in at least one of claims 1 to 6, in which the radical -N(R^{v})-A-N(R^{w})- is piperazin-1,4-ylene.

8. An azo dyestuff as claimed in at least one of claims 1 to 6, in which A is 1,2-ethylene, 1,3-propylene or 1,6-hexylene.

9. A process for the preparation of an azo dyestuffstuff of the formula (1) mentioned and defined in claim 1, which comprises reacting, in an equivalent amount, the diazonium compounds of the amines of the formulae (5a) and (5b) 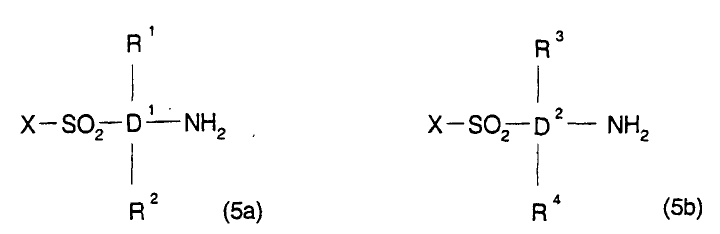 in which D¹, D², R¹, R², R³, R⁴ and X have the meanings given in claim 1, and a compound of the formula (6) 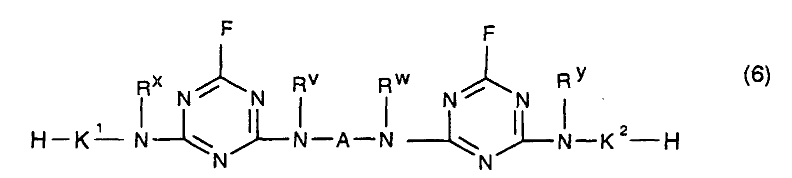 in which R^{x}, R^{v}, R^{w}, R^{y} and A have the meanings given in claim 1, K¹ is a radical of the formula (2a) or (2b) and K² is a radical of the formula (3a) or (3b), with one another, or coupling, in an equivalent amount, the azo compounds of the formulae (7a) and (7b) 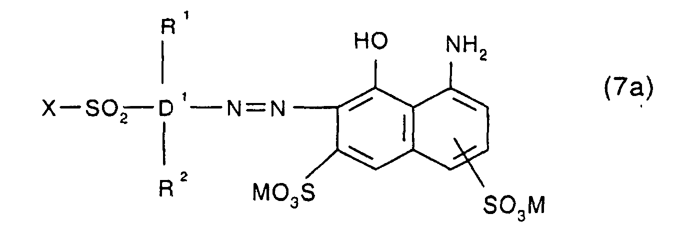 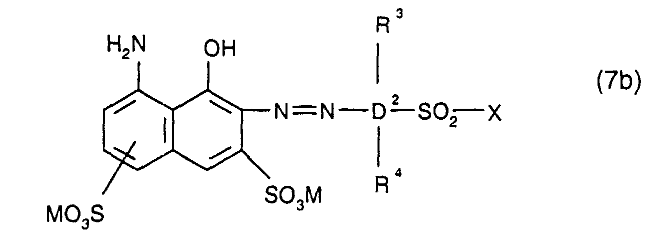 in which D¹, D², R¹, R², R³, R⁴, X and M have the meanings given in claim 1, with a tetrazotized diamine of the formula (8) 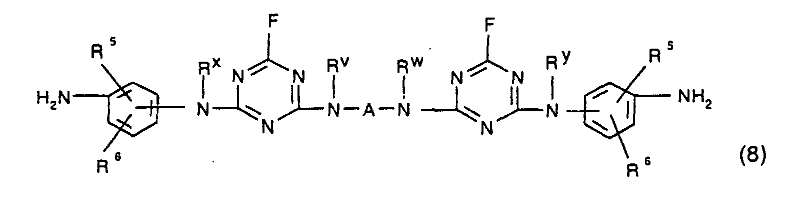 in which R⁵, R⁶, R^{x}, R^{y}, R^{v}, R^{w} and A have the meanings given in claim 1,
or reacting, in an equivalent amount,. azo compounds of the formulae (9a) and (9b) 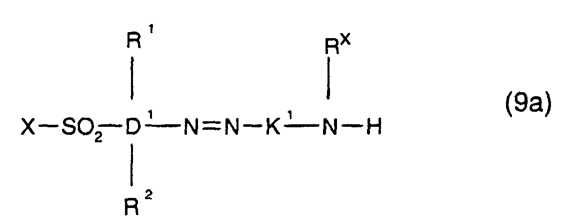 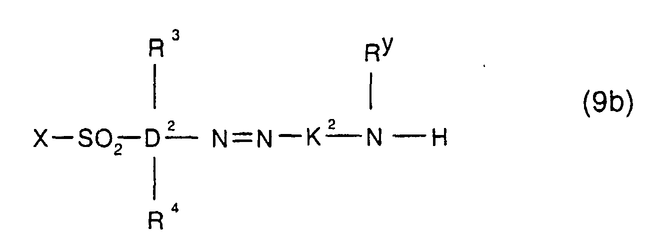 in which D¹, D², R¹, R², R³, R⁴, X, K¹, K², R^{x} and R^{y} have the meanings given in claim 1, and a compound of the formula (10) 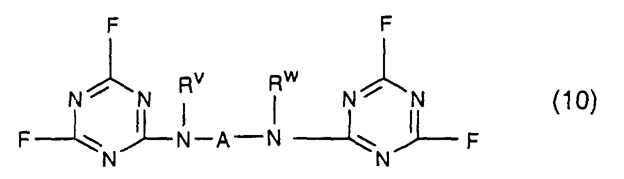 in which R^{v}, R^{w} and A have the meanings given in claim 1, with one another,
or reacting, in an equivalent amount, azo compounds of the formulae (11a) and (11b) 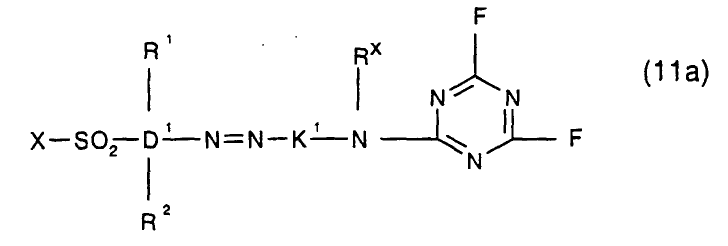 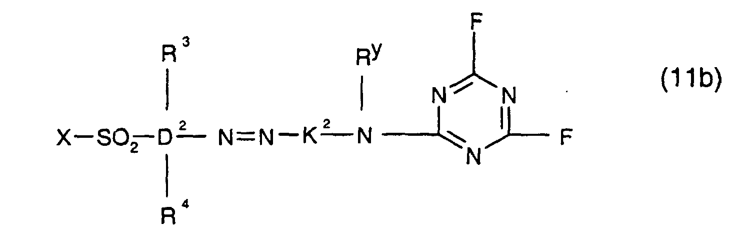 in which D¹, D², R¹, R², R³, R⁴, X, K¹, K², R^{x} and R^{y} have the meanings given in claim 1, with a diamino compound of the formula (12) 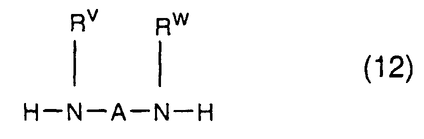 in which R^{v}, R^{w} and A have the meanings given in claim 1.

10. The use of a dyestuff of claim 1 or of a dyestuff prepared as claimed in claim 9 for dyeing material containing hydroxyl and/or carboxamide groups, in particular fiber material.

11. A process for dyeing material containing hydroxyl and/or carboxamide groups, in particular fiber material, in which a dyestuff is applied to the material and the dyestuff is fixed on the material by means of heat or with the aid of an agent having an alkaline action or by means of both measures, which comprises employing a dyestuff of claim 1 or a dyestuff prepared as claimed in claim 9 as the dyestuff.

## Revendications

1. Colorant azoïque correspondant à la formule générale (1) 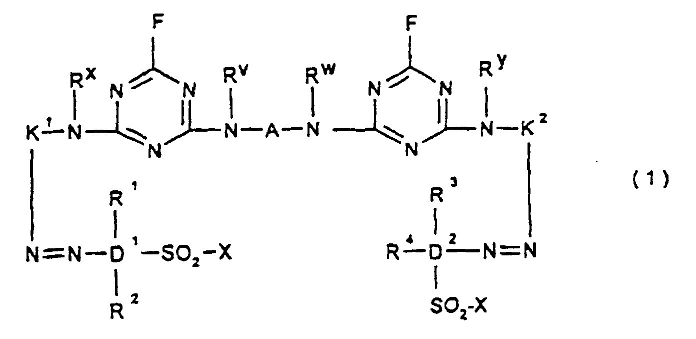 dans laquelle :
D¹ est un radical benzénique ou naphtalénique ;
D² est un radical benzénique ou naphtalénique ;
R¹ est un atome d'hydrogène ou d'halogène ou un groupe alkyle ayant de 1 à 4 atomes de carbone, alcoxy ayant de 1 à 4 atomes de carbone, hydroxy, carboxy ou sulfo ;
R² est un atome d'hydrogène ou d'halogène ou un groupe alkyle ayant de 1 à 4 atomes de carbone, alcoxy ayant de 1 à 4 atomes de carbone, nitro ou sulfo ;
R³ est un atome d'hydrogène ou d'halogène ou un groupe alkyle ayant de 1 à 4 atomes de carbone, alcoxy ayant de 1 à 4 atomes de carbone, hydroxy, carboxy ou sulfo ;
R⁴ est un atome d'hydrogène ou d'halogène ou un groupe alkyle ayant de 1 à 4 atomes de carbone, alcoxy ayant de 1 à 4 atomes de carbone, nitro ou sulfo ;
X est le groupe vinyle, β-sulfatoéthyle, β-thiosulfatoéthyle ou β-chloréthyle ;
R^{x} est un atome d'hydrogène ou un groupe alkyle ayant de 1 à 4 atomes de carbone ;
R^{y} est un atome d'hydrogène ou un groupe alkyle ayant de 1 à 4 atomes de carbone ;
R^{v} est un atome d'hydrogène ou un groupe alkyle ayant de 1 à 4 atomes de carbone ;
R^{w} est un atome d'hydrogène ou un groupe alkyle ayant de 1 à 4 atomes de carbone ;
K¹ est un radical de formule générale (2a), (2b) ou (2c) 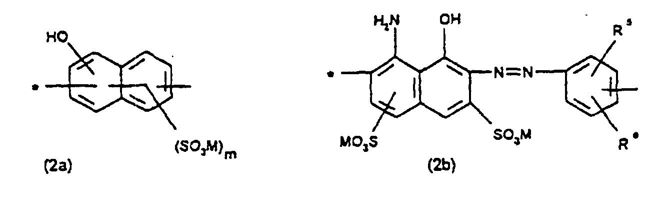 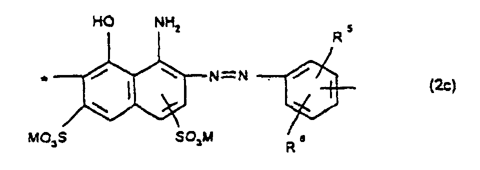 dans lesquelles
M représente un atome d'hydrogène ou un métal alcalin,
m représente le nombre zéro, 1 ou 2 (dans le cas de m égal à zéro ce groupe représentant un atome d'hydrogène),
la liaison indiquée par * est fixée au groupe azo,
R⁵ est un atome d'hydrogène ou le groupe sulfo, et
R⁶ est un atome d'hydrogène, de chlore ou de brome, ou un groupe sulfo, carboxy, alkyle ayant de 1 à 4 atomes de carbone ou alcoxy ayant de 1 à 4 atomes de carbone ; K² est un radical de formule générale (3a), (3b) ou (3c) 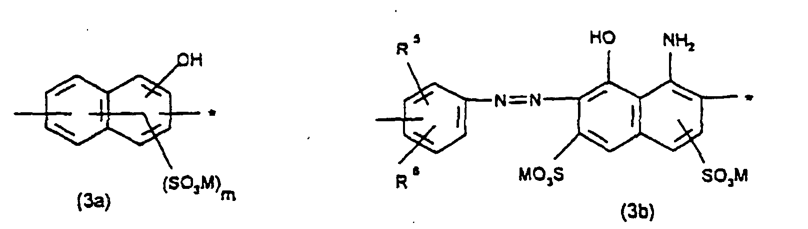 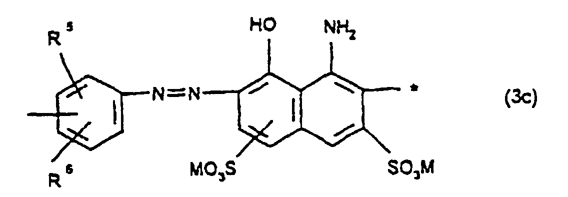 formules dans lesquelles M, m, R⁵ et R⁶ ont les significations données plus haut et la liaison indiquée par * étant fixée au groupe azo, le groupe hydroxy et la liaison indiquée par * étant en position ortho l'un par rapport à l'autre, et le groupe hydroxy étant lié de préférence en position α du radical naphtalénique ;
A est un groupe alkylène à chaîne droite ou ramifié ayant de 2 à 10 atomes de carbone, ou un groupe alkylène ayant de 4 à 10 atomes de carbone, qui est interrompu par 1 ou 2 groupes hétérocarbonés, ou est un groupe cycloalkylène ayant de 5 à 8 atomes de carbone ou un groupe de formule générale alk-B, B-alk ou alk-B-alk, dans laquelle alk représente un groupe alkylène ayant de 2 à 4 atomes de carbone ou un groupe alkylène ayant de 2 à 10 atomes de carbone, qui est interrompu par 1 ou 2 hétéroatomes choisis parmi -O- et -NH- ; B est un groupe phénylène qui peut porter 1 ou 2 substituants choisis parmi les atomes de chlore et de brome et les groupes sulfo, carboxy, méthyle, éthyle, méthoxy et éthoxy, ou un groupe cycloalkylène ayant de 5 à 8 atomes de carbone, ou le reste bivalent d'un hétérocycle saturé à 5-8 chaînons, contenant 2 atomes d'azote, dont un atome d'azote ou les deux sont reliés aux radicaux alk ou à alk et à un atome de carbone du reste triazine, dans le cas de A représentant un groupe alkylène ayant de 2 à 10 atomes de carbone, les radicaux -N(R^{X})-K¹-N=N-D¹(R¹,R²)-SO₂-X et -N(R^{Y})-K²-N=N-D²(R³,R⁴)-SO₂-X ayant les mêmes significations, ou le groupe -N(R^{V})-A-N(R^{W})- représente le reste bivalent d'un hétérocycle saturé à 5-8 chaînons, contenant les deux atomes de N, dont les atomes de N sont liés à un atome de carbone du reste triazine.

2. Colorant azoïque selon la revendication 1, **caractérisé en ce que** les radicaux K¹ et K² sont des radicaux de formule générale (4a), (4b), (4c) ou (4d) 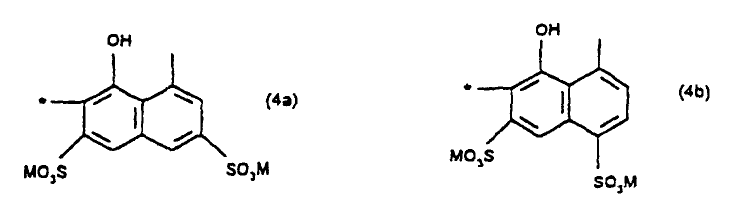 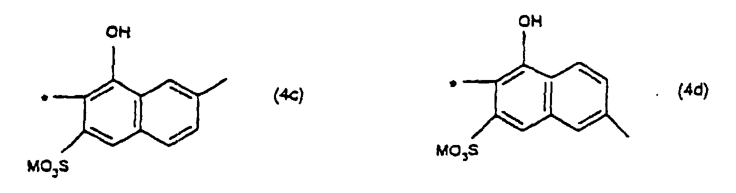 formules dans lesquelles M a la signification donnée dans la revendication 1 et la liaison indiquée par * est fixée au groupe azo.

3. Colorant azoïque selon la revendication 1 ou 2, **caractérisé en ce que** R¹ et R³ représentent chacun, indépendamment l'un de l'autre, un atome d'hydrogène ou le groupe méthyle, méthoxy, éthoxy ou sulfo, R² et R⁴ représentent chacun, indépendamment l'un de l'autre, un atome d'hydrogène ou le groupe méthyle, méthoxy, éthoxy ou sulfo, et D¹ et D² représentent chacun le radical benzénique.

4. Colorant azoïque selon au moins l'une des revendications 1 à 3, **caractérisé en ce que** X est le groupe vinyle ou β-sulfatoéthyle.

5. Colorant azoïque selon au moins l'une des revendications 1 à 4, **caractérisé en ce que** R^{x}, RY, R^{v} et R^{w} représentent chacun un atome d'hydrogène.

6. Colorant azoïque selon au moins l'une des revendications 1 à 3 et 5, **caractérisé en ce que** les radicaux X-SO₂-D¹(R¹,R²)- et X-SO₂-D²(R³,R⁴)- représentent chacun, indépendamment l'un de l'autre, le groupe 3-(β-sulfatoéthylsulfonyl)phényle, 4-(β-sulfatoéthylsulfonyl)phényle, 2-méthoxy-5-(β-sulfatoéthylsulfonyl)phényle, 2-méthoxy-4-(β-sulfatoéthylsulfonyl)phényle, 2,5-diméthoxy-4-(β-sulfatoéthylsulfonyl)phényle, 2,4-diméthoxy-5-(β-sulfatoéthylsulfonyl)phényle, 2-méthoxy-5-méthyl-4-(β-sulfatoéthylsulfonyl)phényle ou 1-sulfo-6-(β-sulfatoéthylsulfonyl)napht-2-yle.

7. Colorant azoïque selon au moins l'une des revendications 1 à 6, **caractérisé en ce que** le reste -N(R^{v})-A-N(R^{w})- est le radical pipérazin-1,4-ylène.

8. Colorant azoïque selon au moins l'une des revendications 1 à 6, **caractérisé en ce que** A représente le groupe 1,2-éthylène, 1,3-propylène ou 1,6-hexylène.

9. Procédé pour la préparation d'un colorant azoïque de formule générale (1) mentionné et défini dans la revendication 1, **caractérisé en ce qu'**on fait réagir l'un avec l'autre, en quantités équivalentes, les composés diazonium des amines de formule générale (5a) et (5b) 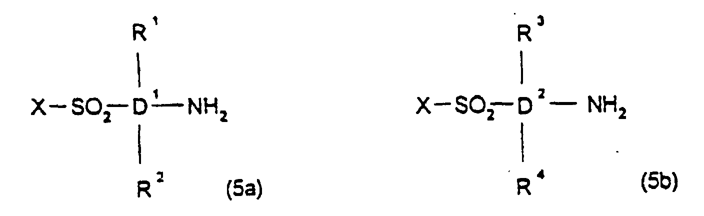 dans lesquelles D¹, D², R¹, R², R³, R⁴ et X ont les significations données dans la revendication 1, avec un composé de formule générale (6) 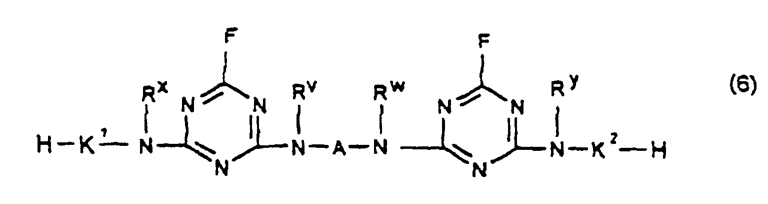 dans laquelle R^{x}, R^{v}, R^{w}, R^{y} et A ont les significations données dans la revendication 1, K¹ représente un radical de formule (2a) ou (2b), et K² représente un radical de formule générale (3a) ou (3b),
ou **en ce qu'**on fait copuler en quantités équivalentes les composés azoïques de formules générales (7a) et (7b) 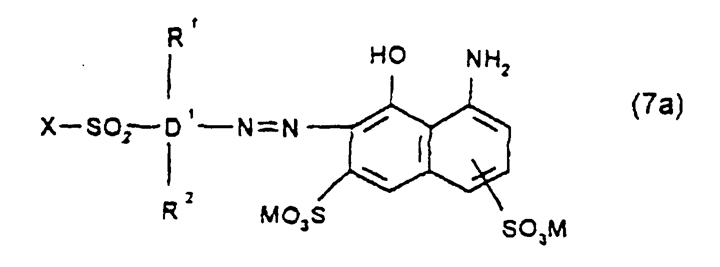 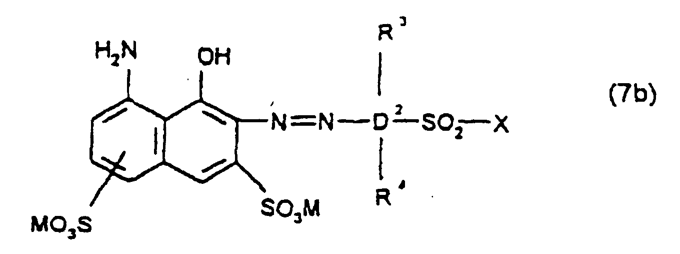 dans lesquelles D¹, D², R¹, R², R³, R⁴, X et M ont les significations données dans la revendication 1, avec une diamine tétrazotée de formule générale (8) 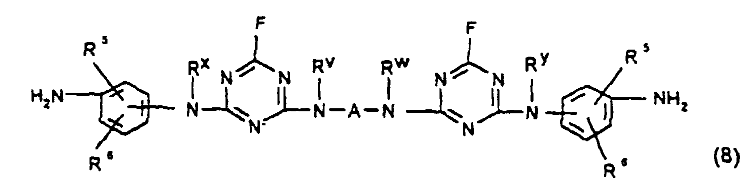 dans laquelle R⁵, R⁶, R^{x}, R^{y}, R^{v}, R^{w} et A ont les significations données dans la revendication 1, ou **en ce qu'**on fait réagir en quantités équivalentes les composés azoïques de formules générales (9a) et (9b) 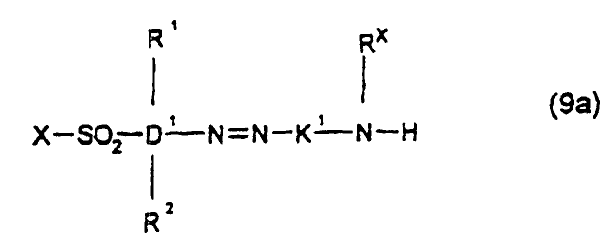 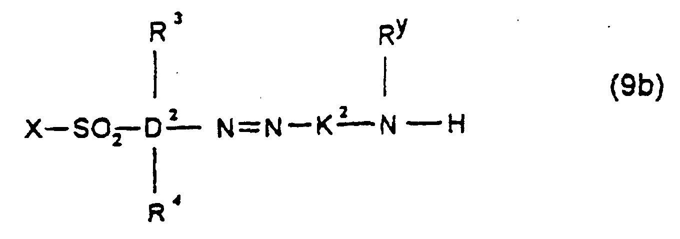 dans lesquelles D¹, D², R¹, R², R³, R⁴, X, K¹, K², R^{x} et R^{y} ont les significations données dans la revendication 1, avec un composé de formule générale (10) 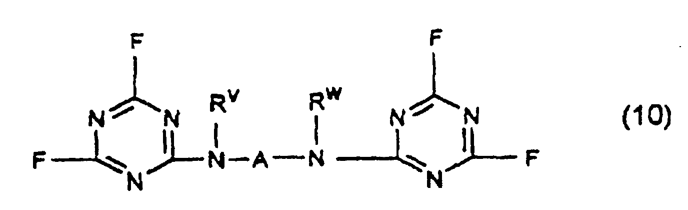 dans laquelle R^{v}, R^{w} et A ont les significations données dans la revendication 1,
ou **en ce qu'**on fait réagir en quantités équivalentes des composés azoïques de formules générales (11a) et (11b) 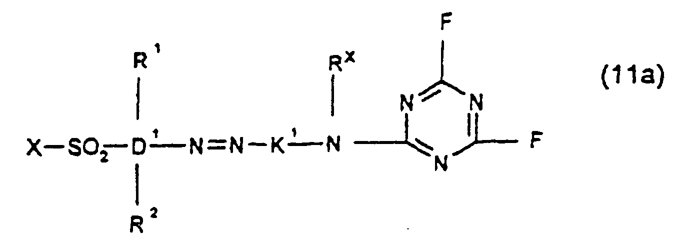 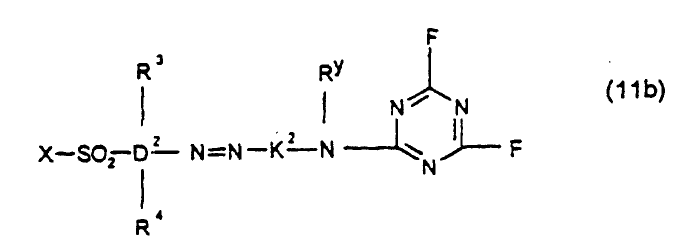 dans lesquelles D¹, D², R¹, R², R³, R⁴, X, K¹, K², R^{x} et R^{y} ont les significations données dans la revendication 1, avec un composé diamino de formule générale (12) 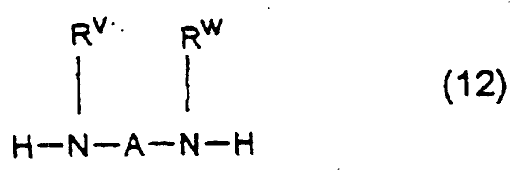 dans laquelle R^{v}, R^{w} et A ont les significations données dans la revendication 1.

10. Utilisation d'un colorant de la revendication 1 ou d'un colorant préparé selon la revendication 9, pour la teinture d'un matériau, en particulier d'un matériau fibreux, contenant des groupes hydroxy et/ou carbamoyle.

11. Procédé pour la teinture d'un matériau, en particulier d'un matériau fibreux, contenant des groupes hydroxy et/ou carbamoyle, dans lequel on applique un colorant sur le matériau et on fixe le colorant sur le matériau au moyen de chaleur ou à l'aide d'un agent à effet alcalin, ou par ces deux moyens, **caractérisé en ce qu'**on utilise comme colorant un colorant de la revendication 1 ou un colorant préparé selon la revendication 9.
